# EUROPEAN PATENT APPLICATION

(11) **EP 4 835 584 A1**
(43) Date of publication of application: **04.11.2026**
(21) Application number: 24913149.1
(22) Date of filing: 27.12.2024
(51) Int. Cl.: G03H 1/04, G11B 7/0065, G11B 7/1384

(54) **IMAGING DEVICE, REFERENCE LIGHT DATA ACQUISITION METHOD, LIGHT WAVE REPRODUCTION METHOD, WAVEFRONT ABERRATION DATA ACQUISITION METHOD, NOISE REDUCTION METHOD, AND DEVICE MANUFACTURED USING SAID DEVICE OR METHODS**

(30) Priority: 29.12.2023 JP 2023223825
(71) Applicant: Holoway Inc., Kobe-shi, Hyogo, 650-0034 (JP)
(72) Inventor: SATO Kunihiro, Kobe, Hyogo 650-0044 (JP); FUTSUKI Yuta, Kobe, Hyogo 650-0044 (JP)
(74) Representative: Grünecker Patent- und Rechtsanwälte PartG mbB
(86) International application number: PCT/JP2024/046496
(87) International publication number: WO 2025/143263

(57) **Abstract**

The present invention enables the effective use of reference light in an imaging device, a reference light data acquisition method, a light wave reconstruction method, a wavefront aberration data acquisition method, a noise reduction method, and devices manufactured using these device or methods in digital holography. The imaging device 1 comprises: an illumination light source So that emits an illumination light Q that illuminates an object 4 to be imaged; a reference light source S_{R} that emits a reference light R that generates interference fringes with an object light O emitted from the object 4 illuminated by the illumination light Q; an image sensor 5 that acquires data of the interference fringes between the object light O and the reference light R as an object light hologram I_{OR}; and reference light data RD being data of the reference light R used for reconstructing an image of the object 4 from the object light hologram I_{OR}. The reference light data RD is accurately acquired and provided without approximation or ambiguity by the reference light data acquisition method. The imaging device 1 can accurately reconstruct the object light wave using the reference light data RD.

## Description

### TECHNICAL FIELD

The present invention relates to an imaging device, a reference light data acquisition method, a light wave reconstruction method, a wavefront aberration data acquisition method, a noise reduction method, and a device manufactured using these device or methods.

### BACKGROUND ART

Conventionally, as a technology for analyzing light waves such as reflected light and transmitted light, there is holography by which data of light intensity and phase are recorded together, on a recording medium such as a photographic plate called a hologram, and then analyzed. In recent years, the holography is utilized to acquire the intensity and phase of a light wave as digital data using an image sensor and a semiconductor memory, or to generate a hologram on a computer, and to analyse it. Such holography is called digital holography (hereinafter also referred to as DH).

Various methods and devices have been proposed and put into practical use to measure shape of a subject with greater precision using the above-mentioned DH, and the following prior arts are known as typical examples.

For example, a method for recording an inline hologram and a method for reconstructing a light wave from the inline hologram are known. This kind of method of inline uses the same light for the illumination light and the reference light, and the conjugate images are not separated and remain superimposed, resulting in a problem that an accurate object light cannot be obtained.

A phase shift method is also known in which an interference fringe hologram is recorded for each of a plurality of phase shifted reference lights, and one object light hologram is extracted from the plurality of recorded holograms. The phase shift method requires a mechanism for shifting the phase of the reference light, and the accuracy of the recorded object light depends on the phase shift mechanism. In addition, in order to obtain one object light hologram, sequential recording of multiple holograms is required instead of one shot recording, and therefore, this makes it difficult to capture a three-dimensional image of a moving or deforming object to be imaged.

A practical DH that realizes both reflection type and transmission type is also known. This method is usually configured to use an imaging optical system, and therefore is affected by aberrations that occur in the imaging optical system, resulting in a problem that the object light cannot be recorded accurately.

In addition to the above prior arts, various technologies have been proposed as DH technologies that enable one shot recording, to achieve high speed and high accuracy in acquiring and processing hologram data, and are applied to imaging. For example, a DH technology is known that applies spatial frequency filtering and spatial frequency modulation to off-axis hologram data recorded in one shot to generate a complex amplitude inline hologram for object image reconstruction at high speed and high accuracy.

To solve the problems of conventional optical microscopes, by using DH technology, a method is known that accurately records object light of a large numerical aperture (NA) without using an imaging lens, a method is known that accurately reconstructs on computer a high resolution three-dimensional image by expanding the recorded object light into plane waves, and a lensless three-dimensional microscope technology is known that records and reconstructs distortion-free high resolution three-dimensional moving images. According to these methods, a lensless three-dimensional microscope that can record and reconstruct distortion-free high resolution three-dimensional moving images is realized. Since such a microscope does not use any imaging lens, it can solve the problem of conventional optical microscopes being affected by the light medium and imaging lens.

In order to observe and measure the internal structure of cells in culture or biological tissues at a high resolution at the cellular level, a high resolution tomographic imaging method using a lensless holographic reflective microscope and wavelength-swept laser light is known, which is an extension of the technology of lensless three-dimensional microscopes.

In addition, a method is known in which object light of a large numerical aperture emitted from an object illuminated with illumination lights from different incident directions is recorded as hologram data for each incident direction of the illumination lights, and these multiple large numerical aperture holograms are synthesized into a single hologram to reconstruct the object light under a synthetic numerical aperture exceeding 1. This method makes it possible to realize an ultra-high resolution three-dimensional microscope with a resolution that exceeds the normal diffraction limit.

A holographic imaging device with long working distances and wide fields of view, and a holographic imaging device that realize ultra-high resolution transmission and reflection microscopes with large numerical apertures or synthetic numerical apertures exceeding 1 is known. This imaging device is equipped with an optical system having a beam coupler composed of a cube-type beam splitter in front of the image sensor, and realizes highly accurate light wave reconstruction by performing calculation of light wave reconstruction taking into account the refractive index of the cube-type beam coupler.

A holographic ellipsometry device is known as an application to optical measurement, which uses accurate recording of light waves by DH and plane wave expansion of the recorded light waves. With this ellipsometry device, data on a large number of reflected lights can be recorded in a hologram at once using a large number of incident lights with different angles of incidence contained in non-parallel illumination light, so that ellipsometry angles Ψ and Δ can be obtained for each of a large number of wave vectors corresponding to the incident angles, dramatically improving measurement efficiency.

A technique is known in which DH is used to obtain accurate data on the phase distribution of reconstructed object light on the surface of a subject, and surface shape measurements are made from the data obtained.

The above-mentioned DH for one shot recording, particularly, uses the same off-axis reference light (R) to record both an object light (O) and an inline spherical wave light (L) being inline with the object light (O), as two off-axis holograms (I_{OR} and I_{LR}), and uses a method by which the information of the off-axis reference light (R) is removed from the two recorded holograms (I_{OR} and I_{LR}) to obtain a complex amplitude inline hologram (J_{OL}) representing the relationship between the object light and the inline spherical wave light. Information on the object light (O) is extracted from the complex amplitude inline hologram (J_{OL}).

DH related to such one shot recording is different from DH based on a general phase shift method in that only one off-axis hologram (I_{OR}) is required as the hologram of the object light (O) required for light wave reconstruction of the object light (O), and thus one shot DH is realized. Therefore, one off-axis hologram (I_{LR}) of the inline spherical wave light (L) and multiple one shot off-axis holograms (I_{OR}) of the object lights (O) make it easy to capture video of an object.

Patent document 1 discloses a method for calculating information on a light wave distribution of a reference light using a calibration unit including an optical system that generates a known light wave distribution.

### PRIOR ART DOCUMENTS

### PATENT DOCUMENTS

Patent document 1: JP2023-70071A

DH described above, which uses a method of removing information of the off-axis reference light (R) from two recorded holograms (I_{OR} and I_{LR}) to obtain a complex amplitude inline hologram (J_{OL}), has an advantage that one shot hologram recording is sufficient to obtain one hologram of the object light (O). Since the above-mentioned complex amplitude inline hologram (J_{OL}) records the phase difference distribution between the object light and the inline spherical wave light at the position of the image sensor, an accurate phase distribution of the inline spherical wave light at the position of the image sensor is required to extract the object light (O) from the complex amplitude inline hologram (J_{OL}). To do this, it is necessary to obtain accurate position coordinate data of the condensing point of the inline spherical wave light relative to the position of the image sensor. Once the position coordinates of the condensing point are obtained, the required phase distribution of the inline spherical wave light can be obtained by analytical calculation of the spherical wave light.

In such a DH in which the hologram of the object light (O) can be recorded in one shot, the position coordinates of the condensing point of the spherical wave light can be obtained, for example, by repeating light wave reconstruction so that a reconstructed image of a test pattern of known dimensions becomes distortion-free and the size of the reconstructed image becomes equal to the size of the subject.

However, the method, which set the position coordinates of the condensing point described above, searches for and determines the position of the condensing point based on the presence or absence of distortion in the reconstructed image and on the agreement with the known image dimensions, so it is not easy to determine the position coordinates with high accuracy, and since it is necessary to repeat light wave reconstruction again and again, there is a problem of being time-consuming. In addition, the method shown in the above-mentioned Patent Document 1 requires mechanical operation to move a light source keeping a known light wave distribution in three-dimensional space, and the accuracy of the calculated light wave distribution of the reference light is highly dependent on the mechanical operation accuracy of the calibration unit.

In digital holography (DH), when the interference fringes created by the object light and the reference light are recorded by an image sensor, the spatial frequency bandwidth of the recordable interference fringes (or the viewing angle of the object) is set by the pixel pitch of the image sensor. To accurately record the object light, it is necessary to adjust the distance between the image sensor and the object according to the size of the object so that the spatial frequency bandwidth of the interference fringes is equal to or less than the bandwidth set by the pixel pitch.

In addition, when recording an image of a large object, the object is placed far away from the image sensor, which increases the size of the optical system for recording. In addition, when recording object light in one shot by off-axis holography, it is necessary to adjust the spatial distribution and irradiation angle of the reference light according to the position and size of the object.

The size of the measurement surface that can be recorded without using a condensing lens or mirror is limited by the pixel pitch and the size of the light receiving surface of the image sensor, and the size of the recording optical system, etc.
A method using a condensing lens and an imaging lens, or a condensing mirror and an imaging lens, has been proposed to measure a large-area flat plate, but there is a limit to achieve high measurement accuracy because measurement errors occur due to the aberration of the lens or mirror. Therefore, it is necessary to develop a device that can remove measurement errors by providing wavefront aberration data that can be used to accurately reconstruct the object light wave, dealing with undesired phase changes and deviations from the desired phase changes, which are aberrations caused by the wavefront converting element, assuming the use of a wavefront converting element such as a lens or mirror.

In addition, it is necessary to develop a method for efficiently and accurately acquiring the above-mentioned wavefront aberration data as data representing the characteristics of each wavefront converting element.

In object light recording using an image sensor, there is a limit to the number of electrons or holes that can be stored in each pixel, so random noise such as shot noise occurs. This random noise is the cause of errors in precision measurements using DH. In order to promote micro-shape measurement and achieve more precise measurements, it is necessary to develop technology that can accurately and efficiently remove the effects of such noise.

### DISCLOSURE OF THE INVENTION

The present invention aims to solve the above problems by providing an imaging device, a reference light data acquisition method, a light wave reconstruction method, and a device manufactured using these device or methods.

In order to attain good issues of the above-mentioned aim, the imaging device of the present invention is an imaging device using holography, which comprises:
an illumination light source (S_{Q}) emitting an illumination light (Q) to illuminate an object (4) to be imaged;
a reference light source (S_{R}) emitting a reference light (R) that generates interference fringes with an object light (O) emitted from the object (4) illuminated by the illumination light (Q);
an image sensor (5) acquiring data of the interference fringes between the object light (O) and the reference light (R) as an object light hologram (I_{OR}); and
reference light data (RD) being data of the reference light (R) used to reconstruct a light wave of the object light (O) from the object light hologram (I_{OR}).

The reference light data acquisition method of the present invention is a method for acquiring, using an image sensor (5), reference light data (RD) representing information of a reference light (R) used in holography, which comprises the steps of:
preparing an auxiliary light (L) and an mediating light (R₃) that are coherent with the reference light (R),
making the auxiliary light (L) incident perpendicularly on the image sensor (5) as a parallel light, and acquiring data of interference fringes between the auxiliary light (L) and the mediating light (R₃) as a mediating light hologram (I_{LR3}) by using the image sensor (5),
acquiring data of interference fringes between the reference light (R) and the mediating light (R₃) as a reference light hologram (I_{RR3}) by using the image sensor (5), and
deriving the reference light data (RD) representing the information of the reference light (R), from the reference light hologram (I_{RR3}) using the mediating light hologram (I_{LR3}), based on the fact that the auxiliary light (L) is a parallel light perpendicularly incident on the image sensor (5).

Another reference light data acquisition method of the present invention is a method for acquiring reference light data (RD) representing information of a reference light (R) used in holography, which comprises the steps of:
acquiring data of interference fringes between the reference light (R) and an auxiliary light (L), which is coherent with the reference light (R) and can be analytically represented using known parameters (PA), as a reference light hologram (I_{RL}) using an image sensor (5),
calculating auxiliary light data (LD) obtained, as an analytical representation of the auxiliary light (L) using the parameters (PA), on a hologram plane set on the light receiving surface (50) of the image sensor (5),
deriving data of a reference light wave (g_{R}), representing the reference light (R), as reference light wave information (RI), which is light wave information of the reference light (R) on the hologram plane, and is obtained by removing the component of the auxiliary light (L) from the reference light hologram (I_{RL}) using the auxiliary light data (LD), and
obtaining the reference light data (RD) by regarding the reference light wave information (RI) as that.

The light wave reconstruction method of the present invention is a light wave reconstruction method for reconstructing a light wave of an object light (O) from an object light hologram (I_{OR}), wherein
the object light hologram (I_{OR}) is a hologram recorded using an off-axis method and acquired by an imaging device comprising reference light data (RD), which is data of a reference light (R) used for recording the object light (O) emitted from an object (4), and
the light wave reconstruction method comprising the steps of:
   deriving a complex amplitude object light hologram (J_{OR}) by Fourier transforming the object light hologram (I_{OR}), and by performing a spatial frequency filtering and an inverse Fourier transform on data obtained;
   calculating an object light wave (g) representing the object light (O), by multiplying the complex amplitude object light hologram (J_{OR}) by a reference light phase component (exp[iφ_{R}(x, y)]) based on the reference light data (RD) so as to remove a phase component of the reference light (R); and
   reconstructing an object light wave (h) at a position of the object (4), by performing a light wave propagation calculation using a plane wave expansion on the object light wave (g).

In the imaging device according to the present invention, the imaging device may comprise:
a wavefront converting element (E_{X}), disposed on an optical path from the object (4) to the image sensor (5), causing a predetermined deformation in a wavefront of the object light (O); and
wavefront aberration data (WD), representing characteristics of the wavefront converting element (E_{X}), being used to remove effect of wavefront aberrations caused by the wavefront converting element (E_{X}) and added to the predetermined deformation due to imperfections in the wavefront converting element (E_{X}), so as to reconstruct an accurate object light wave when reconstructing a light wave of the object light (O) from the object light hologram (I_{OR}).

In the wavefront aberration data acquisition method of the present invention of acquiring the wavefront aberration data (WD),
the wavefront converting element (E_{X}) is a collimating element (E_{coll}), having a focal point (F_{P}), converting spherical wave light into parallel light and parallel light into spherical wave light,
the wavefront aberration data (WD) is of information on the collimating element (E_{coll}), and comprises information of:
   a focal position (z = z_{P}) being a position of the focal point (F_{P});
   a principal plane position (z = z_{E}) defined as a boundary plane between a spherical wave and a plane wave;
   a data application position (z = z_{M}) being a data acquisition position (z = z_{M}) of wavefront aberration data and being a post-processing position; and
   a phase aberration distribution function (A(x, y, z_{M})) being of measured values of the wavefront aberration rising in a phase distribution of light wave passing through the collimating element (E_{coll}),
   the wavefront aberration data acquisition method comprises the steps of:
      generating a parallel light by making an illumination light (Q) incident on the collimating element (E_{coll}), wherein the illumination light (Q) is emitted from the illumination light source (S_{Q}) positioned off-axis near the focal point (F_{P}) of the collimating element (E_{coll}) or positioned at a position considered to be the focal point (F_{P});
      reflecting the parallel light backward by a flat mirror (FM) arranged at a data acquisition position (z = z_{M}) close to the collimating element (E_{coll}), making the parallel light incident on the image sensor (5) as a measurement light (Lc) having an outer diameter smaller than the outer diameter of the parallel light, and recording data of interference fringes between the measurement light (Lc) and the reference light (R) as a measurement light hologram ( I_{CR});
      reconstructing a measurement light wave (c_{S}(z=0)) being a light wave of the measurement light (L_{C}) from the measurement light hologram (I_{CR}) using the reference light data (RD);
      replacing the flat mirror (FM) with an object (4) having a planar pattern of known dimensions, and illuminating the object (4) with a parallel light generated by making the illumination light (Q) incident on the collimating element (E_{coll});
      making an object light (O), being a reflected light backward from the object (4), to pass through the collimating element (E_{coll}) and incident on the image sensor (5), and recording data of interference fringes between the object light (O) and the reference light (R) as an object light hologram ( I_{OR});
      reconstructing an object light wave (g) being a light wave of the object light (O) from the object light hologram (I_{OR}) by using the reference light data (RD), performing multiple light propagation calculations on the object light wave (g), and among the multiple propagation positions determining one position, where readout values of the plane pattern's dimensions obtained are the known dimension, as a principal plane position (z = z_{E}) of the collimating element (E_{coll});
      calculating an ideal spherical light wave (b_{S}) at the principal plane position (z = z_{E}) based on data on a known focal position (z = z_{P}) of the collimating element (E_{coll}), and multiplying the ideal spherical light wave (b_{S}) by a phase conversion function (T(z_{E})) analytically calculated phase component related to a spherical wave so as to generate an ideal parallel light wave (b_{P} = b_{S}·T);
      multiplying the ideal parallel light wave (b_{P}) by a phase aberration distribution function (A(x, y, z_{M})), occurring due to imperfections of the collimating element (E_{coll}), acquired at the data acquisition position (z = z_{M}), as an unknown function to obtain a mathematical expression of a plane wave incident on and reflected by the flat mirror (FM) as a reflected light wave (b_{PA} = b_{S}·T·A);
      multiplying the reflected light wave (b_{PA} = b_{S}·T·A) by an inverse phase conversion function (T⁻¹) of the phase conversion function (T), and then further multiplying by the phase aberration distribution function (A) to obtain a mathematical expression (b_{S}·T·A·T⁻¹·A) corresponding to a light wave at the principal plane position (z = z_{E}) of the measurement light wave (c_{S}) recorded as the measurement light hologram (I_{CR}) after reversely propagating the collimating element (E_{coll}); and
      equating the measurement light wave (c_{S}(x, y, z_{E})) obtained by propagating the measurement light wave (c_{S}) to the principal plane position (z = z_{E}) using a light propagation calculation with the mathematical expression (b_{S}·T·A·T⁻¹·A) to obtain the phase aberration distribution function (A = (c_{S}/b_{S})^{1/2}) as the unknown function.

The noise reduction method of the present invention is a method for reducing image noise by performing statistical processing on data of the object light hologram (I_{OR}) acquired using the image sensor (5) in the imaging device according to the present invention, comprising the steps of:
acquiring the object light hologram (I_{OR}) repeatedly, using the image sensor (5) under predetermined imaging conditions for acquiring multiple object light holograms (I^{j}_{OR}, j = 1,..., m);
reconstructing light waves of the object light (O) by removing component of the reference light (R) from the object light holograms (I^{j}_{OR}, j = 1,..., m) using the reference light data (RD), and calculating a phase value distribution (φ^{j}, j = 1,..., m) at the position of the object (4);
performing an unwrapping process on phase values for each of phase value distributions (φ^{j}, j = 1,..., m);
setting multiple reference points (aᵢ, i = 1, ..., k) at coordinate points common to each of the phase value distributions (φ^{j}, j = 1, ..., m);
performing global alignment between a reference phase value distribution (φ^{α}) selected from the phase value distributions (φ^{j}, j = 1, ..., m) and other phase value distributions (φ^{j}, j ≠ α) by rotating the light wave and adjusting phase thereof in three-dimensional real space so that calculated value of cross-correlation for the phase values at the multiple reference points (aᵢ, i = 1, ..., k) becomes minimum; and
obtaining a noise-reduced phase value distribution (<φ> = Σφ^{j}/m) by averaging data of the aligned phase value distributions (φ^{j}, j = 1, ..., m).

The imaging device of the present invention is an imaging device (1) using holography for imaging an object (4) in a light wave reconstructable manner, comprising:
an illumination light source (S_{Q}) emitting an illumination light (Q);
a reference light source (S_{R}) emitting a reference light (R) for generating interference fringes with an object light (O) emitted from the object (4) illuminated by the illumination light (Q);
an image sensor (5) acquiring data of the interference fringes as an object light hologram (I_{OR}); and
an aperture (Ap) limiting an azimuthal distribution of the object light (O) incident on the image sensor (5).

The device of the present invention is characterized by being manufactured using at least one of the imaging device, the reference light data acquisition method, and the light wave reconstruction method of the present invention.

According to the imaging device of the present invention, since it comprises the reference light data (RD) which is used when reconstructing the light waves of the object (4) from the object light hologram (I_{OR}), a process reconstructing the light waves from the data of the object light hologram (I_{OR}) and the reference light data (RD) can be executed.

According to the reference light data acquisition method of the present invention, since it uses a two-stage acquisition method: firstly, acquiring data of the mediating light (R3) using the auxiliary light (L) being a parallel light perpendicularly incident on the image sensor (5), and secondly, acquiring data of the reference light (R) using the mediating light (R3), it is possible to accurately obtain the reference light data (RD), which is light wave information of the reference light (R) of an arbitrary light shape, using the mediating light (R3) of an arbitrary light shape. In addition, since there is no need to use optical elements such as a cube-type beam splitter on the optical path, the reference light data (RD) can be obtained accurately.

According to the reference light data acquisition method of the present invention, since the reference light (R) is recorded as a reference light hologram (I_{RL}) using an auxiliary light (L) that can be analytically expressed using known parameters (PA), it is possible to obtain accurately the reference light data (RD) being the light wave information of the reference light (R) using an auxiliary light data (LD) derived from the auxiliary light (L) as an analytical expression.

According to the light wave reconstruction method of the present invention, only the real image component can be easily extracted as a complex amplitude object light hologram (J_{OR}), due to the effect of the off-axis method, from the object light hologram (I_{OR}) obtained by off-axis method. In addition, the object light wave (g) on the hologram plane can be easily calculated from the complex amplitude object light hologram (J_{OR}) by using the reference light data (RD). The object light wave (g) can be propagated by performing light wave propagation calculations, and the object light wave (h) at the position of the object (4) can be reconstructed.

According to the imaging device of the present invention, for example, by using a collimating element as a wavefront converting element (E_{X}), it is possible to record a large-diameter object light (O) in a small-diameter hologram, to remove the wavefront aberration caused by the collimating element using the wavefront aberration data (WD), and to reconstruct an accurate object light wave. Therefore, it is possible to image a large-area flat plate without being limited to the size of the light receiving surface of the image sensor, and to reconstruct an object light wave with little aberration.

According to the wavefront aberration data acquisition method of the present invention, it is possible to accurately acquire wavefront aberration data (WD) being information on the collimating element (E_{coll}), based on the fact that the incident and exiting light of the collimating element (E_{coll}) can be composed of a spherical wave light and a plane wave light, and the fact that the object light is propagated by light wave propagation calculations.

According to the noise reduction method of the present invention, since, on multiple phase value distributions obtained from multiple samples (multiple holograms imaged under the same conditions of the same imaging target), global alignment by rotating and phase adjusting and statistical processing by averaging between the distributions are performed, it is possible to effectively reduce random noise.

According to the imaging device of the present invention having an aperture (Ap), since azimuth angle distribution of the object light (O) incident on the image sensor (5) is limited, it is possible to record only the object light from the object seen through the aperture (Ap), and to perform imaging under the same resolution conditions regardless of the distance of the object.

The new device of the present invention, which is a device manufactured using at least one of the imaging device, the reference light data acquisition method, the light wave reconstruction method, the wavefront aberration data acquisition method, and the noise reduction method of the present invention, is a device that exhibits effects derived from the performance and functions of the above-mentioned device and method of the present invention used to manufacture it.

### BRIEF DESCRIPTION OF THE DRAWINGS

FIG. 1A is a schematic diagram of an imaging device according to the first embodiment, and FIG. 1B is a diagram showing the configuration of reference light data provided in the imaging device.
FIG. 2 is a schematic diagram showing the relationship between an aperture provided in the imaging device and the reference light condensing point.
FIG. 3A is a side view explaining the setting of a perpendicularly incident parallel light in a reference light data acquisition method according to the second embodiment, and
FIG. 3B is a side view explaining how a hologram of a reference light is recorded using the perpendicularly incident parallel light set by FIG. 3A.
FIG. 4 is a flow chart showing the steps of the reference light data acquisition method.
FIG. 5 is a flow chart showing the steps of acquiring information on the condensing point of the reference light in the reference light data acquisition method.
FIG. 6 is a flow chart showing the steps of spatial frequency modulation and filtering according to the third embodiment used in the reference light data acquisition method.
FIG. 7 is a side view showing how imaging is performed by the imaging device according to the fourth embodiment equipped with reference light data acquired by the reference light data acquisition method shown in FIG. 3.
FIG. 8A is a side view illustrating the setting of perpendicularly incident parallel light in the reference light data acquisition method according to the fifth embodiment, and FIG. 8B is a side view illustrating the recording of a reference light hologram using the perpendicularly incident parallel light set by FIG. 8A.
FIG. 9 is a side view illustrating the imaging performed by the imaging device according to the sixth embodiment, which is equipped with reference light data acquired by the reference light data acquisition method shown in FIG. 8.
FIG. 10A is a side view illustrating an example in which an end of an optical fiber is used as the light source of a spherical wave reference light, and FIG. 10B is a side view illustrating an example in which a pinhole is used as the light source of a spherical wave reference light.
FIG. 11 is a block diagram illustrating a schematic diagram of the steps of the reference light data acquisition method according to the seventh embodiment.
FIG. 12 is a flowchart illustrating the steps of the light wave reconstruction method according to the ninth embodiment.
FIG. 13 is an overall view of a hologram to be processed by the light wave reconstruction method, and a partially enlarged view thereof. FIG. 14A is a conceptual diagram of a spectrum in spatial frequency space obtained by Fourier transform, FIG. 14B is a conceptual diagram explaining the enlargement of the calculation target of the spectrum in the same space, and FIG. 14C is a conceptual diagram of a hologram obtained by inverse Fourier transform of the spectrum in FIG. 14B.
FIG. 15 is an overall view of the hologram obtained in FIG. 14C and a partially enlarged view thereof.
FIG. 16A is a diagram showing the calculation of the light wave of the object light from the hologram obtained in FIG. 14C, and FIG. 16B is a conceptual diagram explaining the enlargement of the calculation space of the light wave obtained in FIG. 16A.
FIG. 17 is a flowchart showing a method of removing diffracted light components generated at an aperture and included in the object light, according to the tenth embodiment.
FIG. 18 is a schematic diagram of the configuration of the imaging device according to the eleventh embodiment.
FIG. 19 is a schematic diagram of the configuration of the imaging device according to the twelfth embodiment.
FIG. 20 is a flowchart showing the procedure for surface shape measurement, according to the thirteenth embodiment.
FIG. 21 is a diagram showing the relationship between the optical system and the coordinate systems to explain the method of acquiring lens data according to the fourteenth embodiment.
FIG. 22 is a flowchart showing the procedure acquiring lens data.
FIG. 23 is a schematic diagram of the configuration of the imaging device according to the fifteenth embodiment.
FIG. 24 is a schematic diagram of the configuration of the imaging device according to the sixteenth embodiment.
FIG. 25 is a flowchart showing the procedure for noise reduction processing according to the seventeenth embodiment.
FIG. 26 is a partially enlarged image (first example) of a reference light hologram I_{RL} in which interference fringes between the reference light and the auxiliary light are recorded using the optical system of FIG. 3B.
FIG. 27 is a light intensity image of the object light at the position of the USAF test target (second example) reconstructed from an object light hologram I_{OR} in which transmitted light from the USAF test target is imaged as object light using the imaging device of FIG. 7.
FIG. 28 is an image of a hologram I_{OR} captured using the imaging device of FIG. 18 with transmitted light from a large USAF test target as object light (third embodiment).
FIG. 29 is an image of the spatial frequency spectrum of the hologram I_{OR} of FIG. 28.
FIG. 30 is a light intensity image of the object light at the position of the large USAF test target, reconstructed from the hologram I_{OR} of FIG. 28.
FIG. 31 is a diagram showing the intensity distribution of reflected light from a flat mirror of illumination light captured using the imaging device of FIG. 21, and an explanation of the region near the axis (fourth embodiment).
FIG. 32 is a diagram showing the measurement results of a phase difference distribution that represents the wavefront aberration caused by the collimating lens in the imaging device of FIG. 21.
FIG. 33 is a diagram showing the measurement results of a phase difference distribution that reflects the surface shape, obtained using an object light wave at the wafer surface reconstructed and propagated from a hologram of the wafer surface imaged using the imaging device of FIG. 19, and an illumination light wave at the wafer surface generated taking into account the wavefront aberration caused by the collimating lens (fifth embodiment).
FIG. 34 is a diagram showing a light intensity image and a partially enlarged view of the wafer surface, obtained by calculating the effect of wavefront aberration caused by the collimating lens on a light wave reconstructed from a hologram of the wafer surface after resist exposure captured using the imaging device of FIG. 19 (sixth embodiment).
FIG. 35 is a diagram showing the measurement results of the phase difference distribution on the wafer surface obtained from the light waves that obtained the light intensity image of FIG. 34.
FIG. 36 is a diagram (seventh embodiment) showing three reference points and a noise evaluation axis (white line) for an example of an optical phase difference distribution obtained by taking into account the wavefront aberration caused by the collimating lens from multiple object light holograms of the flat mirror surface imaged using the imaging device of FIG. 19 while maintaining constant imaging conditions.
FIG. 37 is a diagram showing the height error caused by shot noise along the noise evaluation axis (white line) in the height distribution of the flat mirror surface obtained from the optical phase difference distribution of FIG. 36.
FIG. 38 is a diagram showing the height error in a noise-reduced optical phase difference distribution obtained by narrowing the band of the spatial frequency of the object light wave to one third (1/n times, n=3) when calculating the object light wave from the object light hologram used to obtain the optical phase difference distribution of FIG. 36.
FIG. 39 is a diagram showing height errors in a noise-reduced optical phase difference distribution obtained by calculating an optical phase difference distribution from each of nine (m=9) object light holograms and processing the phase value data by a statistical method based on the setting of the three reference points in FIG. 36.
FIG. 40 is a diagram showing height errors in a noise-reduced optical phase difference distribution obtained by combining the statistical processing of FIG. 39 (m=9) with the band narrowing processing of FIG. 38 (n=3).

### MODE FOR CARRYING OUT THE INVENTION

Below, an imaging device, a reference light data acquisition method, a light wave reconstruction method, a wavefront aberration data acquisition method, a noise reduction method, and a device manufactured using these device or methods in digital holography (DH) according to one embodiment of the present invention are described with reference to the drawings. In the following, an embodiment using off-axis holography is mainly described, but the basic configuration of the embodiment can be applied not only to off-axis holography but also to phase shift holography and inline holography, for example. In the following description, imaging in a hologram with a holographic imaging device is also expressed as recording in a hologram, which has the same meaning as imaging.

In this embodiment, an imaging device and a light wave reconstruction method in digital holography under an optical system with a simple configuration can be provided, which can image an object, to be imaged, of a wide range of sizes from extremely small to extremely large compared to the size of the image sensor.

### (First embodiment: imaging device)

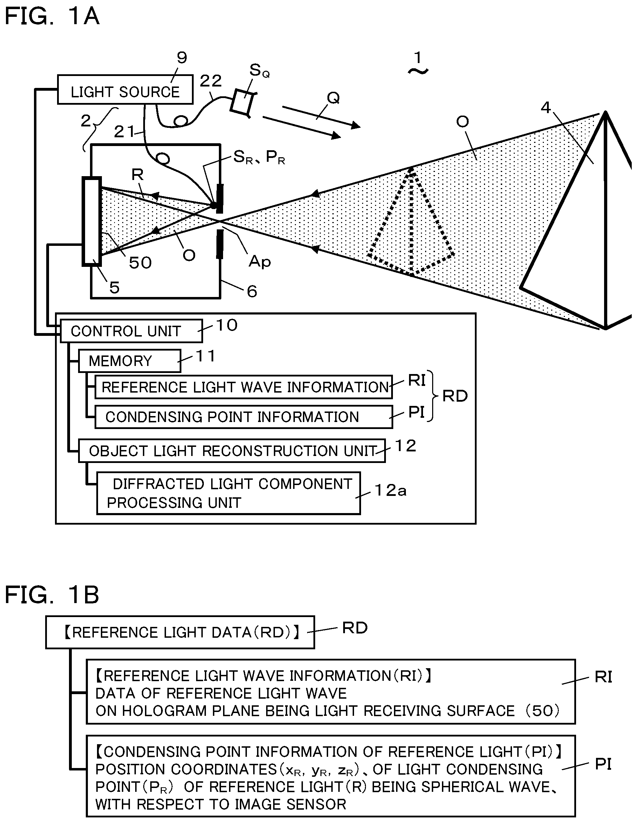

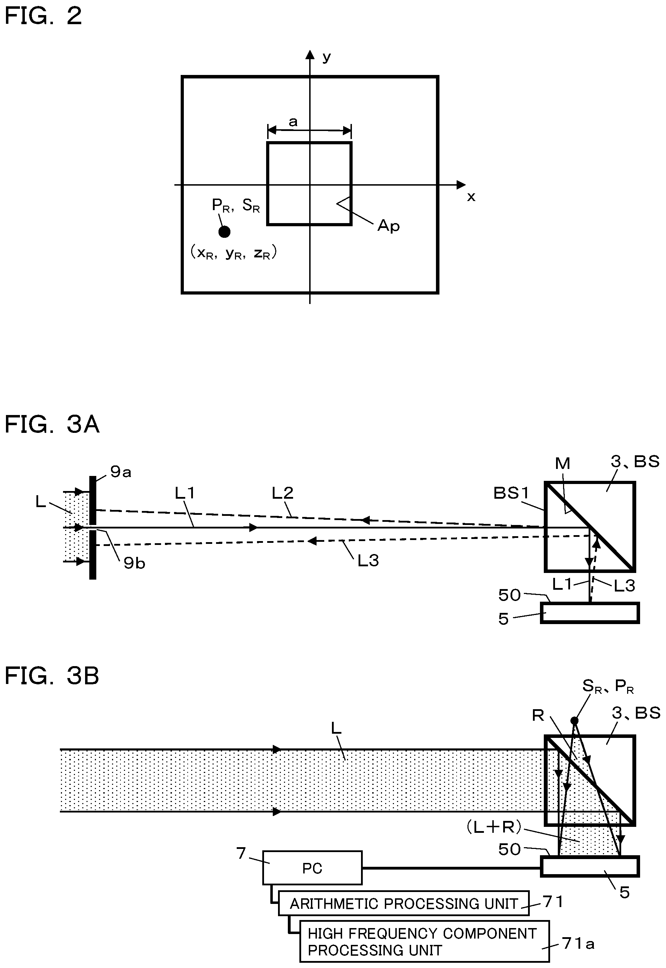

With reference to FIGS. 1A and 1B, and FIG. 2, an imaging device 1 according to a first embodiment is described. The imaging device 1 is an imaging device using off-axis holography, and includes a coherent light source 9, an optical system 2, an illumination light source S_{Q}, a reference light source S_{R}, an image sensor 5, a dark box 6, reference light data RD, and a control unit 10. The reference light source S_{R} and the image sensor 5 are provided in the dark box 6, and the reference light data RD is provided in the control unit 10.

The coherent light source 9 emits coherent light. The optical system 2 guides the coherent light emitted from the coherent light source 9 to the illumination light source S_{Q} and the reference light source S_{R} via optical fibers 22 and 21, respectively.

The illumination light source S_{Q} emits a light fed from the coherent light source 9 as illumination light Q for illuminating the object 4 to be imaged. The illumination light source S_{Q} is usually required to be able to illuminate the object 4, and in one embodiment, emits a parallel light having a light cross section required for illuminating the object 4, or light expanded in a cone shape.

The reference light source S_{R} emits a light from the coherent light source 9 as reference light R toward the light receiving surface 50 of the image sensor 5. The reference light R generates interference fringes on the light receiving surface 50 together with the object light O emitted from the object 4 illuminated by the illumination light Q.

In this embodiment, the reference light R is a spherical wave light having a reference light condensing point P_{R} that is the condensing point of the reference light R. In this embodiment, the reference light source S_{R} is the end of the optical fiber 21. The reference light source S_{R} is positioned at the reference light condensing point P_{R}. In practice, after the reference light source S_{R} is positioned, the position of the reference light condensing point P_{R} is determined by measurement. The determination is performed using a reference light data measurement method (see FIGS. 3A, 3B to 6, and 8A, 8B).

The image sensor 5 acquires and records data on the interference fringes between the object light O and the reference light R as the light intensity distribution of the interference fringes. This recording is the imaging of the object 4. The data on the light intensity distribution of the interference fringes is the data of the object light hologram I_{OR}. The image sensor 5 is, for example, a light receiving element of a CMOS camera. If the coherent light is monochromatic, the object light hologram I_{OR} is monochromatic data. Also, for example, if the coherent light is of three primary colors and the image sensor 5 is color compatible, color compatible hologram data can be obtained.

The dark box 6 is a housing that has an opening Ap, houses the reference light source S_{R} and the image sensor 5, and blocks external light from other than the opening Ap. The dark box 6, as a housing, has a function of fixing the relative positions of the aperture Ap, the reference light source S_{R}, and the image sensor 5. The aperture Ap is open at the center front of the image sensor 5, and limits the azimuth angle distribution of the object light O incident on the image sensor 5. The aperture Ap is not limited to a circular aperture, and may be a rectangular aperture.

The control unit 10 includes a memory unit 11 and an object light reconstruction unit 12. The control unit 10 is configured using, for example, a dedicated, general-purpose, or arbitrary computer. The control unit 10 controls the image sensor 5 and the coherent light source 9 during imaging, and operates the memory unit 11 and the object light reconstruction unit 12 during light wave reconstruction.

The reference light data RD is stored in the memory unit 11 of the control unit 10 in the form of reference light wave information RI and condensing point information PI. The reference light data RD is data used when reconstructing the light wave of the object light from the object light hologram I_{OR} in order to reconstruct the image of the object 4. The reference light data RD is data that reconstructs, on a computer, the reference light R, which was used when generating the interference fringes during recording the object light O.

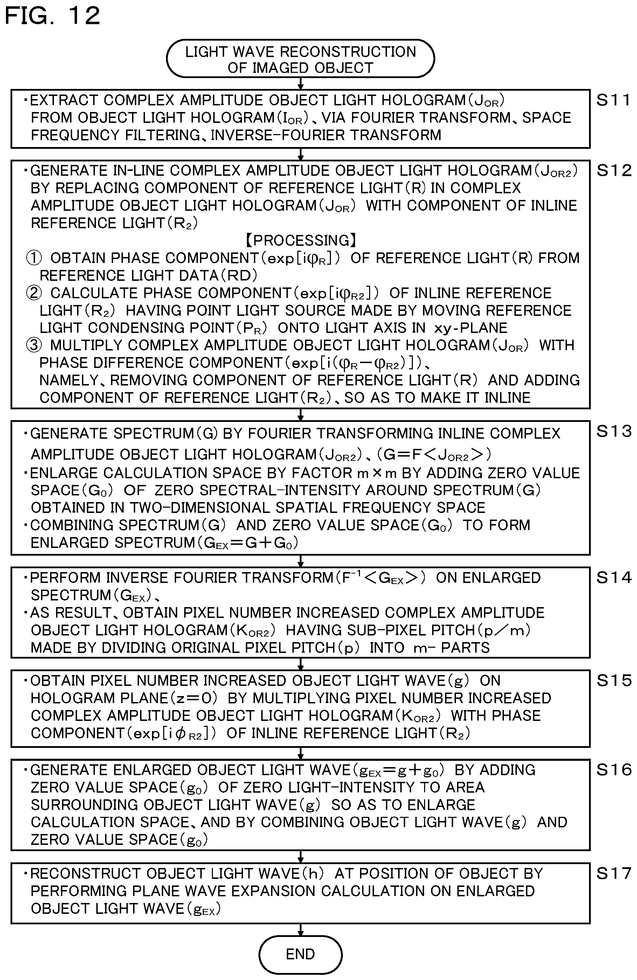

The reference light wave information RI is data representing the light wave of the reference light R on a hologram plane, which is the light receiving surface 50 of the image sensor 5, and is data representing the phase distribution of the reference light R. In general holography, the reference light R is not limited to spherical wave light, but may be reference light R with any phase distribution. If reference light data RD can be used as data for such reference light R, the light wave of the object light can be reconstructed, and the image of the object 4 can be reconstructed. By providing any one of such reference light wave information RI and light condensing point information PI described below, the light wave of the object light, and therefore the image of the object 4, can be reconstructed from the object light hologram I_{OR} (see FIG. 12). The image of the object 4 is the intensity distribution and phase distribution of the light wave of the object light. Reconstructing the image of the object 4 is not limited to reconstructing the image of the object 4 itself, but can also include, for example, reconstructing another images based on the image of the object 4.

The condensing point information PI is information that exists and can be obtained when the reference light R is a spherical wave having a reference light condensing point P_{R}, as in this embodiment. The condensing point information PI is data on the position coordinates (x_{R}, y_{R}, z_{R}) of the reference light condensing point P_{R} relative to the image sensor 5. This is three real value data, and four if included the information on the wavelength λ. With information indicating the position coordinates of the reference light condensing point P_{R}, the phase distribution of the spherical wave on the hologram plane, that is, the reference light wave information RI, can be obtained by calculation.

The reference light data RD is information specific to the imaging device 1. The reference light data RD can include data specific to the imaging device 1 that is necessary for reconstructing the object light, such as the distance between the light receiving surface 50 and the aperture Ap, and the specifications of the image sensor 5. Such data may be provided in the object light reconstruction unit 12. The imaging device 1 can also capture images without the object light reconstruction unit 12. However, the object light reconstruction unit 12, which is a separate device, cannot reconstruct light waves without the reference light data RD, so it is necessary to pass the reference light data RD along with the imaging data.

The object light reconstruction unit 12 is configured using software that reconstructs in a computer the object light wave g representing the object light O from the object light hologram I_{OR}, which is the imaging data, using the reference light data RD, and is provided as a program in the control unit 10. When the object light wave g is reconstructed, an image of the object can be reconstructed from the object light wave g.

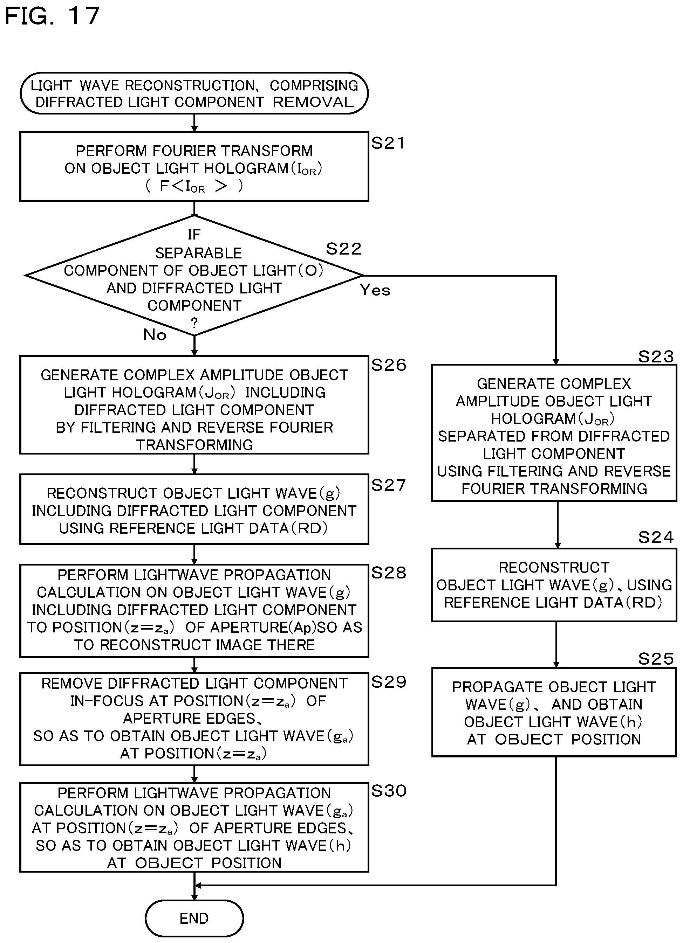

The object light reconstruction unit 12 includes a diffracted light component processing unit 12a. Since the imaging device 1 includes an aperture Ap, the object light O is diffracted at the edge of the aperture Ap, generating diffracted light, which may be mixed into the object light O as a diffracted light component. This becomes noise light. The diffracted light component processing unit 12a is configured using software that removes the diffracted light component from the data of the object light hologram I_{OR} during light wave reconstruction (see FIG. 17).

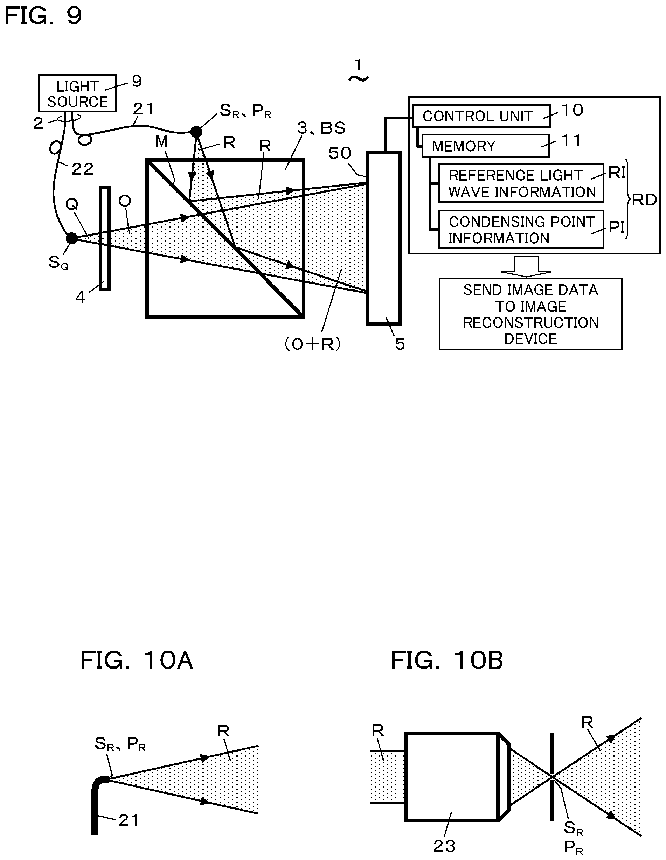

As described above, the imaging device 1 includes a reference light R that is a spherical wave for off-axis holography, and an aperture Ap that limits the azimuth angle distribution of the object light O that is incident on the image sensor, which make up an imaging optical system for recording the object light O formed by the illumination light Q being reflected or scattered from a large imaging target object. The spherical wave reference light R can be emitted light from the end of an optical fiber or light passing through a pinhole (see FIG. 10A, 10B).

The condensing point P_{R} of the reference light R, and therefore the reference light source S_{R}, is located on the same plane as the plane formed by the aperture Ap or on a plane close to the front or rear of the aperture Ap, but at a position outside the aperture Ap (see FIG. 2). The reference light source S_{R} is located inside the dark box 6 so that the reference light R illuminates the light receiving surface of the image sensor 5.

### (Regarding the aperture Ap)

FIG. 2 shows the positional relationship between the aperture and the condensing point P of the off-axis reference light in the xy plane. In addition to the rectangular aperture shown in FIG. 2, a circular aperture can also be used as the aperture. The interference fringes created by the spherical wave reference light R and the object light O passing through the aperture Ap are recorded in one shot as an off-axis hologram I_{OR}, and only the object light O passing through the aperture Ap is recorded.

This situation can be replaced with a situation in which a planar source of the object light O is present over the entire surface of the aperture Ap. In other words, the object light O emitted by an object of the same size as an aperture width a of the aperture Ap is recorded. Even if the object is of a wide range of sizes, it is possible to capture the object within the range that the image sensor 5 can see through the aperture Ap.

### (Design of the imaging optical system)

The design of the imaging optical system of the imaging device 1 is explained. An orthogonal xyz coordinate system is set with the center of the light receiving surface 50 (also called the hologram plane) of the image sensor 5 as the origin. The x-axis, y-axis, and z-axis are set in the light receiving surface 50, and the direction of the object 4. The aperture Ap is formed in a plane, and the aperture surface being the surface of the aperture Ap and the light receiving surface 50 are planes parallel to each other.

The optical system is related to the light wavelength λ, the hologram width D, the numerical aperture NA, and the distance zₐ from the image sensor 5 to the aperture Ap. The light wavelength λ is the light wavelength common to the illumination light Q, the object light O, and the reference light R emitted from the same coherent light source 9. The hologram width D is the width in each of the x and y directions determined by the product of the pixel pitch and the number of pixels, and is the width of the recorded hologram in real space. The hologram width is the effective pixel distribution width of the image sensor 5, the effective width of the light receiving surface 50, or more practically, the spread width of a large number of pixels that receive the adopted data. The numerical aperture NA is the numerical aperture of the hologram on the light receiving surface 50 as viewed from the aperture Ap.

The distance zₐ is the inter-surface distance between the light receiving surface 50 (hologram plane) and the aperture surface formed by the aperture Ap, that is, the orthogonal distance. The distance zₐ, which is the z position of the aperture Ap relative to the light receiving surface 50 of the image sensor 5, is given by following equation (1).${z}_{a} = \frac{D}{2} \sqrt{{\left(\frac{1}{NA}\right)}^{2} - 1}$ (1)

### (Determining the position of the reference light condensing point P_{R})

Next, we will explain how to set the reference light source S_{R} of the reference light R, which is spherical wave light, and therefore the coordinates P_{R} (x_{R}, y_{R}, z_{R}) that represent the position of the reference light condensing point P_{R}. The policy for setting the position of the reference light condensing point P_{R} is, for example, to determine the position of the reference light condensing point P_{R} so as to generate interference fringes that can effectively utilize the light receiving surface 50.

This policy is based on the following: (a) the area, where the spatial frequency spectrum of the object light hologram I_{OR} occupies in the spatial frequency space, is determined by the hologram width D, which is the size of the light receiving surface 50; and (b) the position, at which the object light component OR* and its conjugate component OR* appear in the spatial frequency spectrum, changes depending on the position of the reference light condensing point P_{R}. The spatial frequency spectrum of the object light hologram I_{OR} is distributed so as to effectively utilize the available spatial frequency space when, for example, the distribution area of the zero value of the spectrum is smaller, in which case the light receiving surface 50 can be effectively utilized.

The pixel pitch p of the image sensor 5 and the aperture width a of the rectangular aperture Ap are involved in determining the position of the reference light condensing point P_{R}. Also, the z position coordinate z_{R} of the reference light condensing point P_{R} is set to be the same as the z coordinate zₐ of the aperture Ap, i.e. z_{R}=zₐ.

Based on the above guidelines, the position coordinates (x_{R}, y_{R}) of the reference light condensing point P_{R} are given by following equation (2) using the pixel pitch p, aperture width a, light wavelength λ, and distance zₐ. In the case of a circular aperture with a diameter a, the aperture width a can be replaced with the diameter a. Here, the coefficients 3/8 in a, 1/2 in x_{R}, and 1/4 in y_{R} are appropriate adjustment parameters related to the spread and position of the spectral distribution of each component appearing in the spatial frequency space.$a = \left(\frac{3 {λz}_{a}}{8 p}\right) , {x}_{R} = \left(\frac{{λz}_{a}}{2 p}\right) , {y}_{R} = \left(\frac{{λz}_{a}}{4 p}\right) , {z}_{R} = {z}_{a}$ (2)

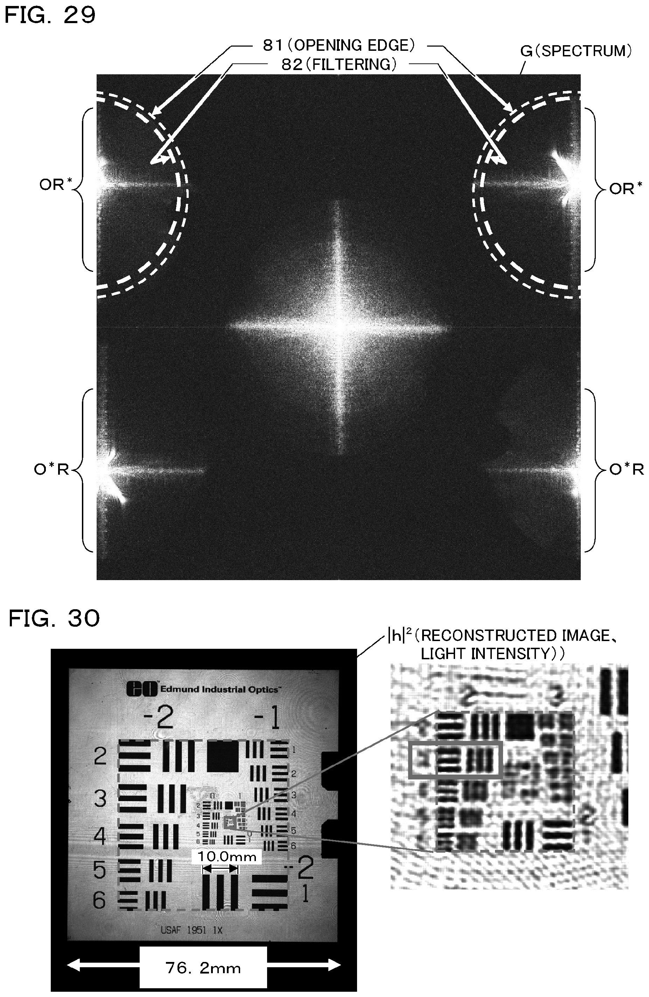

FIG. 29, which is described later, shows the spatial frequency spectrum in the case of a circular aperture with a diameter a. In FIG. 29, the position of the reference light condensing point P_{R} is selected and determined so that the object light component OR* appears on the upper left and right, and the conjugate component O*R of the object light appears on the lower left and right. If such a selection and decision is not made, for example, the object light component OR* appears on the upper right, the conjugate component O*R of the object light appears on the lower left of the diagonal position, and the upper left and lower right are distributed with zero values.

When the hologram width D, numerical aperture NA, and pixel pitch p are given, an imaging optical system can be designed regardless of the size of the object, and the same optical system can be used to capture images of objects of a wide range of sizes, from very small to very large.

In addition, the distance zₐ from the image sensor 5 to the aperture Ap and the coordinates (x_{R}, y_{R}) of the reference light condensing point P_{R} can be fixed, and the imaging optical system can be covered with a dark box 6 as shown in FIG. 1. The dark box 6 can block light, other than the light passing through the aperture Ap, making it possible to capture images accurately and quickly even under normal illuminating conditions.

### (Resolution of reconstructed image)

In the optical system shown in FIG. 1, two different numerical apertures NA and NAa can be defined. They are the numerical aperture NA of the hologram as seen from the reference light condensing point P_{R}, and the numerical aperture NAa of the aperture Ap as seen from the object 4.

When the hologram and the aperture Ap are both rectangular, the theoretical resolution δ of the reconstructed image for the object 4 located close to the aperture Ap in the z direction is δ=λ/2NA. For the object 4 located far away from the aperture Ap in the z direction, δa=λ/2NAa.

When the hologram and the aperture Ap are both circular, δ=0.61λ/NA for the object 4 located close to the aperture Ap in the z direction, and δa=0.61λ/NAa for the object 4 located far away from the aperture Ap in the z direction.

### (Features of the imaging device 1)

The imaging device 1 of this embodiment has the following advantages over conventional imaging devices using digital holography. In conventional devices, it is necessary to adjust the distance between the image sensor and the object to be imaged according to the size of the object to be imaged in order to keep the spatial frequency bandwidth of the recorded interference fringes smaller than the bandwidth determined by the pixel pitch of the image sensor. However, the imaging device 1 does not require such an operation.

This is because the imaging device 1 has an aperture Ap and uses imaging by digital holography, so that the object light can be reconstructed by post-processing in a computer.

When imaging a large object, the imaging device 1 does not need to place the object far away from the image sensor, and does not need to increase the size of the optical system for recording. In addition, when generating and recording interference fringes of the object light using a reference light, it is not necessary to adjust the spatial distribution or irradiation angle of the reference light according to the size and position of the object so that the spatial frequency bandwidth of the interference fringes is equal to or smaller than the bandwidth limited by the pixel pitch of the image sensor.

The imaging device 1, compared to image sensors, can accurately record object light in one shot for a wide range of object sizes, from extremely small to extremely large. The imaging device 1 does not require position adjustment of components and has a simple structure. The imaging device 1 can accurately and quickly capture images of objects under normal lighting conditions. The imaging device 1 can eliminate the effects of diffracted light generated at the edges of the opening, and can reconstruct only the object light that passes through the opening.

The imaging device 1 is provided with a dark box 6 and an aperture Ap, so that the spatial frequency bandwidth of the recorded hologram, which is the imaging data, can be set to be equal to or less than the bandwidth determined by the pixel pitch of the image sensor. In other words, the peripheral portion forming the aperture can block part of or most of the reflected or transmitted light emitted from the subject, which is the object light, and only the object lights that pass through the aperture and enter the image sensor can be recorded. The imaging device 1 is a lensless imaging device, and can perform accurate one shot recording by using an off-axis spherical wave reference light.

Given the light wavelength λ of the reference light R, the numerical aperture NA, the pixel pitch p and number of pixels of the image sensor 5, it is possible to optimally determine the relative positions among three: the aperture Ap; the reference light condensing point P_{R}; and the image sensor 5, and also possible to optimally determine the size of the aperture Ap in the imaging device 1 (see equations (1) and (2)).

The imaging device 1 has a simple structure composed of four components: an image sensor 1, a reference light condensing point P_{R}, an aperture Ap, and a light-shielding dark box 6.

The imaging device 1 has two types of removal methods for removing diffracted light generated at the edge of the aperture Ap, depending on the situation. One method is to apply Fourier transform and spatial frequency filtering to the recorded hologram to remove the diffracted light components. The other method is to reconstruct object light containing diffracted light at the position of the aperture Ap, where the diffracted light is generated, and to separate and remove only the focused diffracted light components from the reconstructed object light (see FIG. 17, described later).

The imaging device 1 of this embodiment has the following effects. When the light wavelength λ and numerical aperture NA of the reference light R, and the pixel pitch p and number of pixels of the image sensor 5 are given, the positional relationship between the aperture Ap, the reference light condensing point P_{R}, and the image sensor 5, as well as the aperture size (aperture width a, diameter a) can be determined.

By using the same optical system designed according to the parameters of the reference light condensing point P_{R}, the aperture Ap, and the image sensor 5, it is possible to deak with objects 4 of a wide range of sizes, from extremely small to extremely large.

Since the dark box 6 can completely block all light, other than the light passing through the aperture Ap, accurate and high-speed imaging is possible even under normal lighting conditions.

By removing the diffracted light generated at the edge of the aperture, the object light O passing through the aperture Ap can be accurately reconstructed.

By having the aperture Ap, the imaging device 1 becomes closer to a camera in form, can capture images at any distance, and is portable (no shutter is required because there is no film). By providing the imaging device 1 with a display device, image data output terminal, etc., it is possible to capture images while checking the reconstructed images on the spot. The imaging device 1 may be configured as a remote control system by being separated from the control unit 10, and may be used, for example, as a surveillance camera, regardless of whether it is indoors or outdoors.

### (Modification of imaging device 1)

The imaging device 1 of the first embodiment uses spherical wave light and off-axis positioned reference light R as the reference light R for recording and reconstructing a hologram of object light O. However, the imaging device of the present invention is not limited to a device for off-axis holography, and can also be configured as an imaging device using, for example, phase shift holography or inline holography.

In phase shift holography, the phase of the reference light R is shifted to sequentially record multiple holograms, and a complex amplitude hologram J_{OR} is obtained from the recorded multiple holograms I_{OR}. Therefore, by shifting the phase of the reference light R in the imaging device 1 of the first embodiment to sequentially record multiple holograms, imaging becomes possible as the imaging device 1 using phase shift holography. When reconstructing an accurate object light wave g from the complex amplitude hologram J_{OR}, the reference light data RD, i.e., the reference light wave RI representing the light wave of the reference light R or the condensing point information PI, can be used.

In inline holography, the interference fringes created by the object light O and the reference light R in an inline state in which the object and the reference light source S_{R} are placed on the optical axis of the image sensor are recorded as the inline hologram I_{OR}. Therefore, by placing the reference light source S_{R} on the optical axis of the image sensor in the imaging device 1 of the first embodiment, imaging becomes possible as the imaging device 1 using inline holography. In this case, the reference light data RD may be acquired as data of the inline reference light R. When reconstructing an object image from the inline hologram I_{OR}, the reference light data RD, i.e., the reference light wave RI or the condensing point information PI representing the light wave of the inline reference light R, may be used.

### (Second embodiment: Reference light data acquisition method)

A reference light data acquisition method according to the second embodiment is described with reference to FIGS. 3A, 3B, 4, and 5. This reference light data acquisition method is a method for acquiring the reference light data RD (reference light wave information RI, condensing point information PI) provided in the imaging device 1 according to the first embodiment. In this data acquisition method, data of the reference light (R), which is a spherical wave having a reference light condensing point (P_{R}), is acquired using an auxiliary light L, which is parallel light perpendicularly incident on the image sensor 5.

As shown in FIGS. 3A and 3B, the reference light data RD is acquired under the condition that the reference light source S_{R} of the reference light R is fixed, therefore the position of the reference light condensing point P_{R} is fixed, relative to the image sensor 5. After the reference light data RD has been acquired, the image sensor 5 and the reference light source S_{R} are assembled into the imaging device 1 so that their positional relationship is maintained even while the device is in use.

### (Angle adjustment of cube-type beam splitter and image sensor)

In order to set the auxiliary light L to be perpendicularly incident on the image sensor 5, a cube-type beam splitter 3 (also called cube-type BS) is arranged in front of the image sensor 5 as a beam coupler and as a reflecting mirror M for the auxiliary light L. The auxiliary light L is incident on the reflecting mirror M from a direction parallel to the light receiving surface 50, and is reflected there and perpendicularly incident on the image sensor 5.

In order to realize the perpendicular incidence state of the auxiliary light L on the image sensor 5, the parallel auxiliary light L is blocked by a mask 9a having a hole 9b, and is made into a thin parallel light light L1 by the hole 9b. The parallel light light L1 passes through the beam splitter 3 and is incident on the light receiving surface 50 of the image sensor 5. A part of the parallel light light L1 is reflected by the surface BS1 of the beam splitter 3 to become reflected light L2 and heads toward the mask 9a. The remainder of the parallel light light L1 reaches the light receiving surface 50, is reflected to become reflected light L3, and is further reflected by the reflecting mirror M toward the mask 9a.

The arrangement (arrangement angle) of the beam splitter 3 and the image sensor 5 is adjusted and set, for example by visual confirmation, so that both reflected lights L2 and L3 are gathered at the hole 9b of the mask 9a. This setting operation adjusts the positions of the auxiliary light L, the beam splitter 3, and the light receiving surface 50 (of the image sensor 5), and the perpendicular incidence state is realized for the auxiliary light L on the light receiving surface 50. The perpendicular incidence state of the auxiliary light L may be realized by using other methods instead of this visual confirmation and position adjustment.

After the perpendicular incidence state of the auxiliary light L on the light receiving surface 50 is realized, the mask 9a is removed to allow the auxiliary light L to be perpendicularly incident on the image sensor 5.

The reference light R is incident on the image sensor 5, from above the light receiving surface 50, passing through the cube-type beam splitter 3. The reference light R is a spherical wave light having a reference light condensing point P_{R}, and a reference light source S_{R} that emits the reference light R as a spherical wave is disposed at the position of the reference light condensing point P_{R}. The reference light condensing point P_{R}, and therefore the reference light source S_{R}, are disposed at a position off the central axis of the light receiving surface 50 in an off-axis arrangement (note that if the reference light condensing point P_{R} were disposed on the central axis of the light receiving surface 50, it would become an inline spherical wave reference light R₂, but this is not used here).

The data of the interference fringes created by the auxiliary light L and the reference light R on the light receiving surface 50 is stored and recorded as a reference light hologram I_{RL} in the computer 7 connected to the image sensor 5.

The recorded reference light hologram I_{RL} is processed to calculate the light wave information of the reference light R using the arithmetic processing unit 71 provided in the computer 7 and the high frequency component processing unit 71a provided in the arithmetic processing unit 71, and the like, to obtain the reference light data RD.

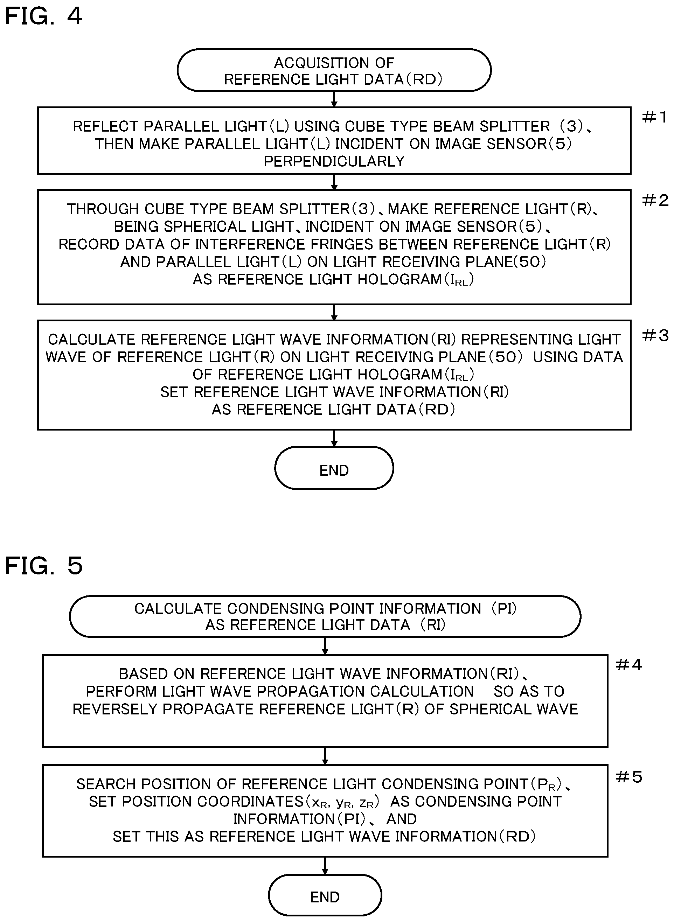

The processing in the reference light data acquisition method is performed in the preparation step #1, the recording step #2, and the calculation step #3, as shown in the flowchart of FIG. 4. The preparation step #1 is a step of realizing a perpendicular incidence state of the auxiliary light L on the light receiving surface 50 using the mask 9a and the beam splitter 3. The recording step #2 is a step of recording the reference light R as interference fringe data in the reference light hologram I_{RL} by creating an interference fringe of the reference light R using the auxiliary light L.

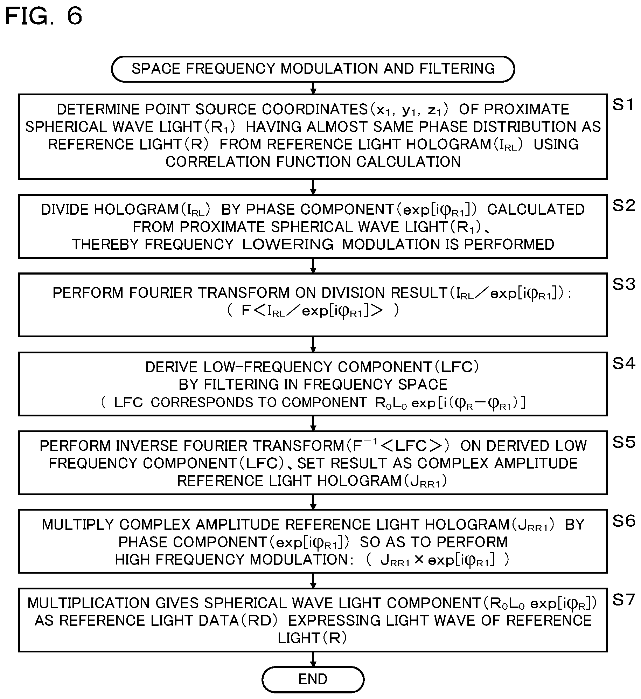

The calculation step #3 is a step in which reference light wave information RI representing the light wave of the reference light R is calculated from the reference light hologram I_{RL}, and the result is taken as reference light data RD. The reference light wave information RI is data on the phase distribution of the light wave of the reference light R on the hologram plane. The process of the calculation step #3 is a process that handles light waves with a much higher frequency than the spatial frequency of interference fringes on the order of the pixel pitch p of the image sensor 5. Therefore, special processing is required (see FIG. 6, described later).

The reference light data acquisition method may further include a light wave propagation step #4 and a position coordinate search step #5, as shown in FIG. 5. The light wave propagation step #4 is a step in which light wave propagation calculation is performed to cause the light wave of the reference light R represented by the reference light wave information RI on the hologram plane to travel backward to the position of the reference light condensing point P_{R}. The coordinate search step #5 is a step for determining the position coordinates (x_{R}, y_{R}, z_{R}) of the reference light condensing point P_{R}, and setting the determined coordinate values as condensing point information PI.

The process of calculating the light wave propagation of the reference light R to find the position coordinates of the reference light condensing point P_{R} can be performed using the same calculation as the light wave propagation calculation in the process of reconstructing the light wave of the object light O obtained from the object light hologram I_{OR}.

This step #5 can be performed because the reference light R is a spherical wave having the reference light condensing point P_{R}. In other embodiments, there are also imaging devices that do not use a spherical wave as the reference light R. The reference light data RD of such imaging devices contains only the reference light wave information RI and does not include condensing point information PI.

According to the reference light data acquisition method of this embodiment, the phase information of the reference light R can be accurately recorded using the interference fringes created by the auxiliary light L, which is a perpendicularly incident parallel light, and by the reference light R, which is a spherical wave light, in a lensless optical system. Since perpendicularly incident parallel light is used as the auxiliary light L, the auxiliary light L can be expressed mathematically without relying on uncertain information, and the reference light data RD (reference light wave information RI and condensing point information PI), which is the light wave information of the reference light R, can be accurately obtained from the recorded reference light hologram I_{RL} and can be used to reconstruct the light wave.

The perpendicularly incident parallel light is a light whose source position is determined at infinity and whose direction is perpendicular to the image sensor, realizing an auxiliary light L that does not include any uncertain elements in a mathematical equation. By calculating the light wave propagation of the reference light R, the coordinates of the reference light condensing point P_{R} can be obtained with a high accuracy of less than the light wavelength, and can be used as the condensing point information PI, which is the reference light data RD.

### (Spherical wave reference light R, perpendicularly incident parallel auxiliary light L, and interference fringes expressed mathematically)

The interference fringes generated by the reference light R and auxiliary light L are explained using mathematical equations. The plane z=0 at the position of the light receiving surface 50 of the image sensor 5 is a plane (also called a hologram plane) where interference fringes are generated and recorded as a hologram. On this hologram plane (z=0), the reference light R(x, y, t), which is a spherical wave with angular frequency ω, and the auxiliary light L(t), which is a perpendicularly incident parallel light with a uniform amplitude, are generally expressed by following equations (3) and (4), respectively.$R \left(x, y, t\right) = {R}_{0} \left(x, y\right) exp \left[i\left({φ}_{R}\left(x, y\right)-ωt\right)\right]$ (3) $L \left(t\right) = {L}_{0} exp \left[i\left({φ}_{L 0}-ωt\right)\right]$ (4)

The constant φ_{L0} in above equation (4) represents the initial phase of the auxiliary light L, which is a perpendicularly incident parallel light on the light receiving surface 50. For simplicity, the notation of this constant initial phase φ_{L0} is omitted below. The amplitude L₀ of the auxiliary light L is also constant and a real number.

The interference fringes I_{RL}(x, y) of the reference light R and the auxiliary light L on the plane z=0 of the light receiving surface 50 are expressed by following equation (5). Notice, I_{RL} is the light intensity (square of the absolute value) of the interference fringes formed by the overlap (addition) of the two lights R and L, and is calculated as I_{RL}=|R+L|².${I}_{RL} \left(x, y\right) = \left({{R}_{0}}^{2}+{{L}_{0}}^{2}\right) + {R}_{0} {L}_{0} exp \left({iφ}_{R}\right) + {R}_{0} {L}_{0} exp \left(-{iφ}_{R}\right)$ (5)

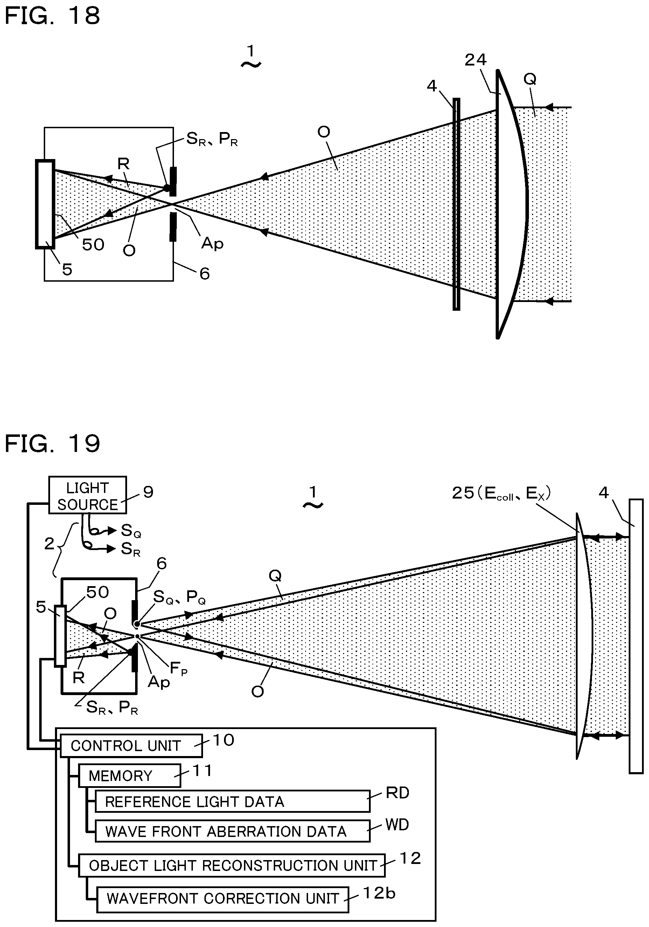

The interference fringes I_{RL}(x, y) are a collection of Newton's rings (cross sections of many concentric spheres nested at regular intervals) as shown in FIG. 19(sic). The center position of the concentric circles in the interference fringes coincides with the position (x_{R}, y_{R}) of the reference light condensing point P_{R} of the reference light R in a spherical wave light state before entering the cube-type beam splitter 3. In equation (5), the first term on the right side is the low frequency component which is the light intensity distribution of the reference light R and the auxiliary light L, the second term is the reference light component, and the third term is the conjugate component of the second term.

### (Calculation of the condensing point coordinates using light wave propagation calculation)

The coordinates of the reference light condensing point P_{R} shown in FIG. 3B can be calculated by performing light wave propagation calculation of the spherical wave light in air and the spherical wave like light inside the cube-type beam splitter 3. This propagation calculation is performed taking into account the refractive index of the cube-type beam splitter 3. The reference light R is synthesized by dividing and superposing the hologram in which the reference light R is recorded, and a light wave propagation calculation is performed on the plane wave expansion of the synthesized reference light to obtain the reference light condensing point P_{R}(x_{R}, y_{R}, z_{R}) as the coordinates of the point where the intensity of the condensed light is maximum. This process is similar to the reconstruction process of the light wave of the object light (described later, see FIG. 12).

### (Phase of spherical wave reference light on hologram plane)

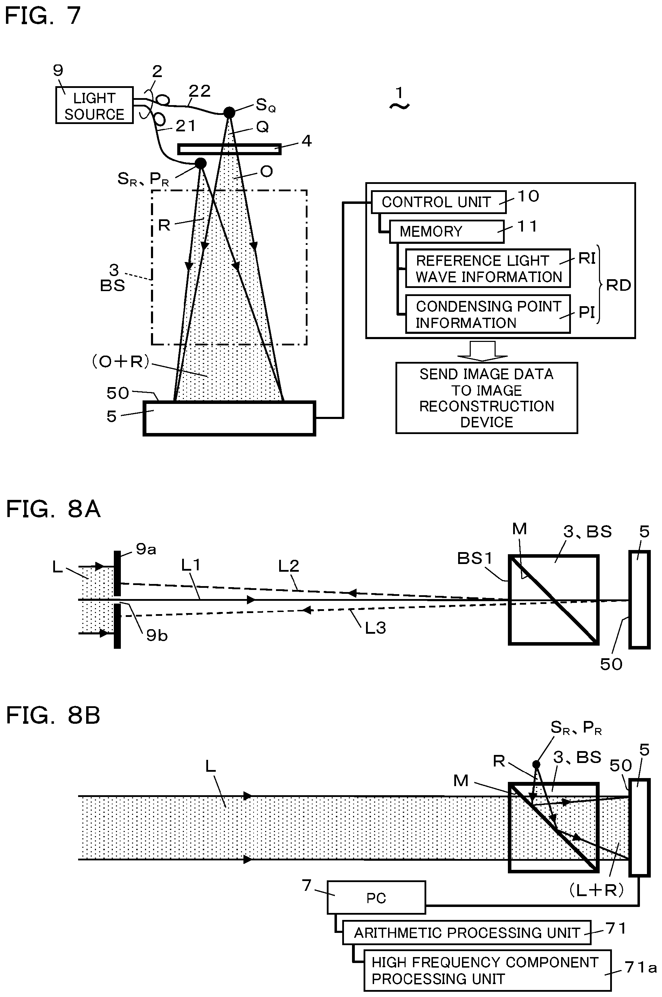

Since the cube-type beam splitter 3 in FIG. 3A and 3B is used to reflect the auxiliary light L, in the case of an imaging device using an optical system consisting of an image sensor 5 and a reference light source S_{R}, the beam splitter 3 is not necessary because the auxiliary light L is not used. In other words, after the condensing point information PI, which is the reference light data RD of the reference light R, is obtained, it is not necessarily required to image the object 4 to be imaged, and can be removed (for example, see the imaging device 1 in FIG. 1 and FIG. 7).

In an imaging device 1 that does not have a cube-type beam splitter 3, the phase φ_{R}(x, y) of the reference light R on the hologram plane z=0 is expressed by following equation (6) using an analytical solution that mathematically expresses a spherical wave and the condensing point coordinates (x_{R}, y_{R}, z_{R}). Following equation (6) involves the light wavelength λ and the initial phase φ_{R0} of the reference light at the condensing point (z=z_{R}).${φ}_{R} \left(x,y{, z ; x}_{R},{y}_{R},{z}_{R}\right) = 2 π {\left[{\left(x-{x}_{R}\right)}^{2}+{\left(y-{y}_{R}\right)}^{2}\right]}^{\frac{1}{2}} / λ + {φ}_{{R}_{0}}$ (6)

The phase φ_{R}(x, y, z) of this reference light R is reconstructed by above equation (6), which is a pure analytical solution, since there are no optical elements such as lenses or cube-type beam splitter 3 on the optical path from the reference light condensing point P_{R} to the hologram plane z=0 (light receiving surface 50). Using such phase φ_{R}(x, y, z) data, the light wave of the object light O is reconstructed with high accuracy.

### (Third embodiment: Processing for large numerical aperture)

A method for calculating the reference light data RD in the reference light data acquisition method, when the numerical aperture NA of the reference light hologram I_{RL} is large, is described. When the size of the light receiving surface (actual dimensions of the hologram) is the same, the numerical aperture NA is small when imaging a distant object, but is large when imaging a close object. For the same distance, the larger the light receiving surface (actual dimensions of the hologram), the larger the numerical aperture NA. Given the numerical aperture NA of the hologram and the light wavelength λ, the maximum spatial frequency fM that can be recorded on the hologram (in other words, that can be supplied to the light receiving surface) is determined, and is given by fM=NA/λ. As the numerical aperture NA increases, the maximum recordable spatial frequency fM increases. However, recording is possible under the restriction that fM must be equal to or less than fmax described below.

When recording interference fringes as a hologram using an image sensor 5 with a pixel pitch p, the maximum spatial frequency fmax of the recordable interference fringes is fmax=1/2p according to the sampling theorem. In other words, this means that changes of finer than the pixel pitch p cannot be recorded, and the maximum spatial frequency fmax is limited by the pixel pitch p.

Consider the case where the numerical aperture NA of the hologram becomes large and NA > (2p/λ). From this equation, we obtain fM=NA/λ<1/2p=fmax, or in other words, fM<fmax. This means that even though the pixel pitch p is dense enough to record up to fmax, the recordable spatial frequency is limited to fM, that is, the lower maximum frequency, due to the relationship between the size of the hologram and the imaging distance, in other words, the numerical aperture NA.

When the maximum spatial frequency of a recorded image, such as an interference pattern, exceeds the recordable spatial frequency fM determined by the numerical aperture NA, the spatial frequency spectrum of the image component of interest (reference light component) and its conjugate component are distributed over the entire range of spatial frequency space between -fM and +fM in a state of overlapping. For this reason, even if the hologram is directly Fourier transformed to generate a spatial frequency spectrum in spatial frequency space and spatial frequency filtering is applied, it becomes difficult to separate and extract the spectral component of interest (reference light component).

To solve this problem, a process is introduced that converts some spatial frequencies of the recorded reference light hologram I_{RL} to lower. This process is performed after the hologram is recorded, and shows the advantages of digital holography.

Specifically, based on the fact that the reference light R is a spherical wave, another spherical wave light (called a proximate spherical wave light) close to the reference light R is introduced, and new interference fringes (called converted interference fringes) between the interference fringes of the reference light R and the proximate spherical wave light are generated on a computer. By placing the condensing points of the reference light R and the proximate spherical wave light close to each other, converted interference fringes with a lower spatial frequency are generated.

The coordinates (x₁, y₁) of the center of the concentric circle are obtained from the interference fringes of the hologram. Considering a proximate spherical wave light R₁ whose phase distribution almost coincides with that of the reference light R, the coordinate z₁ on the z axis of the proximate point light source P₁, which is the light source of the proximate spherical wave light R₁, is set. From these, the coordinates (x₁, y₁, z₁) of the proximate point light source P₁ of the proximate spherical wave light R₁ are determined.

In practice, for example, the proximate point light source coordinates (x₁, y₁, z₁) of the proximate spherical wave light R₁ are obtained by calculating the correlation function between the interference fringes of the reference light R on the hologram plane and the Newton's ring pattern formed by the proximate spherical wave light R₁. The proximate spherical wave light R₁ is expressed by following equation (7) at the hologram plane z=0 and time t=0.${R}_{1} \left(x, y, 0, {x}_{1}, {y}_{1}, {z}_{1}\right) = {R}_{10} \left(x, y, 0, {x}_{1}, {y}_{1}, {z}_{1}\right) exp \left[{iφ}_{R 1}\left(x, y, 0, {x}_{1}, {y}_{1}, {z}_{1}\right)\right]$ (7)

Here, dividing both sides of equation (5) by the phase component exp[iφ_{R1}] in equation (7) gives equation (8) below (arguments such as x and y are omitted, same below). Here, since the phase distributions of R and R₁ are almost the same, φ_{R1}≒φ_{R}, φ_{R}-φ_{R1}≒0, and φ_{R}+φ_{R1}≒2φ_{R}. The first term in equation (8) below is converted to a spherical wave light component, the second term to a low-frequency light component, and the third term to a spherical wave like light component.$\begin{matrix}{I}_{RL} \left(x, y\right) exp \left(-{iφ}_{R 1}\right) = \left({{R}_{0}}^{2}+{{L}_{0}}^{2}\right) exp \left(-{iφ}_{R 1}\right) \\ + {R}_{0} {L}_{0} exp \left[i\left({φ}_{R}-{φ}_{R 1}\right)\right] \\ + {R}_{0} {L}_{0} exp \left[-i\left({φ}_{R}+{φ}_{R 1}\right)\right]\end{matrix}$ (8)

When equation (8) is Fourier transformed, the second term becomes a low-frequency component with a spatial frequency spectrum that is narrowly distributed in a point-like manner near the origin in the spatial frequency space. This is because the proximate spherical wave light R₁ is set so that its phase distribution almost matches that of the reference light R. In other words, the proximate spherical wave light R₁ is set so as to obtain a spatial frequency spectrum that is narrowly distributed like a point near the origin in spatial frequency space.

In contrast, the first and third terms of equation (8) are converted into components that have a spatial frequency spectrum that is widely distributed in a state where they overlap over the entire spatial frequency space.

Next, after the Fourier transform of equation (8), spatial frequency filtering is performed to separate and extract the low frequency component of the second term. The extracted low frequency component of the second term is then subjected to an inverse Fourier transform, and further multiplied by the phase component exp[iφ_{R1}] of equation (7). This multiplication removes the phase component that was initially introduced by division. This series of processes obtains the second term of equation (5), that is, the reference light component R₀L₀exp[iφ_{R}] representing the spherical wave light wave.

The above process is explained with reference to the flowchart in FIG. 6. In step S1, the point source coordinates (x₁, y₁, z₁) of the proximate spherical wave light R₁, which has almost the same phase distribution as the reference light R, are uniquely determined from the reference light hologram (I_{RL}) by correlation function calculation, for example, the maximum correlation value.

In step S2, the hologram I_{RL} is divided by the phase component exp[iφ_{R1}] calculated from the proximate spherical wave light R₁, thereby performing low-frequency modulation. This allows the spherical wave light component to be moved to a low-frequency region.

In step S3, the division result I_{RL}/exp[iφ_{R1}] is Fourier transformed F<I_{RL}/exp[iφ_{R1}]> to obtain a spatial frequency spectrum.

In step S4, the low-frequency component LFC is extracted by spatial frequency filtering. This LFC corresponds to the component R₀L₀exp[i(φ_{R}-φ_{R1})].

In step S5, the low-frequency component LFC is inverse Fourier transformed F⁻¹<LFC>. The result is a complex amplitude reference light hologram J_{RR1}=F⁻¹<LFC>.

In step S6, the complex amplitude reference light hologram J_{RR1} is multiplied by the phase component exp[iφ_{R1}], namely, (J_{RR1}×exp[iφ_{R1}]) to perform high frequency modulation. This removes the phase component introduced during low frequency modulation.

In step S7, as a result of the above multiplication, the spherical wave light component R₀L₀exp[iφ_{R}], that is, the phase distribution at the light receiving surface 50, is obtained as the reference light data RD, which is data representing the light wave of the reference light R.

When the numerical aperture NA of the hologram is large, this reference light data acquisition method, which uses a technique of moving the spherical wave light component to a low frequency range and filtering it, and then returning it to a high frequency range, can be applied in the same way whether or not a cube-type beam splitter 3 is used on the optical path of the reference light R.

According to the processing method of this embodiment, even if the numerical aperture NA of the hologram is large, the phase distribution of the reference light R, which is a spherical wave for object light recording, on the light receiving surface 50 of the image sensor 5 can be accurately obtained.

(Fourth embodiment: imaging device) With reference to FIG. 7, an imaging device 1 equipped with reference light data acquired by the reference light data acquisition method shown in FIG. 3 is described.

This imaging device 1 is configured without the beam splitter 3 used in FIGS. 3A and 3B.

The imaging device 1 is configured in a state in which the mutual positional relationship between the image sensor 5 and the reference light source S_{R} in FIG. 3B is maintained as it is. The imaging device 1 also has in the memory unit 11 the reference light data RD acquired using the configuration of FIGS. 3A and 3B. Therefore, the wavelength of the coherent light emitted by the coherent light source 9 is the wavelength when the reference light data RD is acquired.

Such an imaging device 1 can record object light O emitted from an object 4 illuminated with illumination light Q into a hologram in one shot using reference light R. In the embodiment of FIG. 7, illumination light Q emitted from an illumination light source S_{Q}, which is a point light source, is irradiated onto a flat object 4, and object light O, which is transmitted light emitted from inside the object 4, is recorded. The illumination light Q is not limited to light from a point light source, and light of any shape, such as parallel light, diverging light, or converging light, can be used. Furthermore, the object light O is not limited to transmitted light, and reflected light can also be recorded.

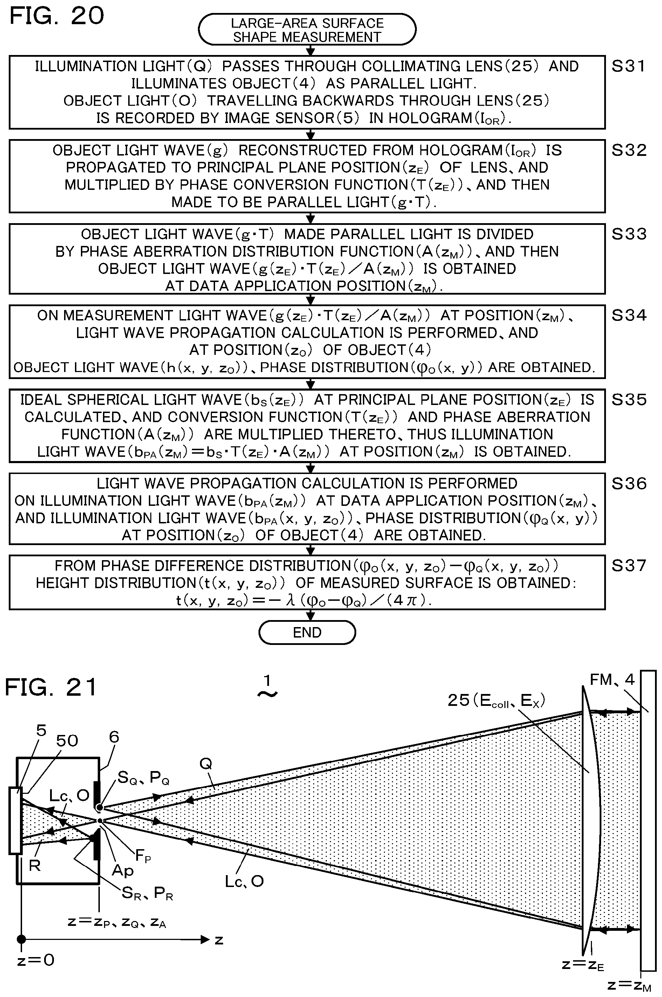

An example of imaging and image reconstruction using the imaging device 1 of FIG. 7 is described in Example 2 below (see FIG. 20).

### (Fifth embodiment: another reference light data acquisition method)

A reference light data acquisition method according to the fifth embodiment is described with reference to FIGS. 8A and 8B. In this embodiment, the auxiliary light L passes straight through the beam splitter 3 from the front of the image sensor 5 and enters the image sensor 5, and the reference light R comes from a direction parallel to the light receiving surface 50 of the image sensor 5, is reflected by the reflecting mirror M of the beam splitter 3, and enters the image sensor 5.

The reference light data acquisition method of this second embodiment corresponds to a configuration in which the auxiliary light L and the reference light R that enter the cube-type beam splitter 3 in the second embodiment are interchanged, and the rest is the same as in the second embodiment.

### (Sixth embodiment: imaging device for large numerical aperture)

The imaging device 1 according to the sixth embodiment is described with reference to FIGS. 9, 10A and 10B. This imaging device 1 uses the optical system with the beam splitter 3 used in FIGS. 8A and 8B as it is. The beam splitter 3 is an essential optical element for reflecting the reference light R. Moreover, the imaging device 1 of the sixth embodiment has the same configuration as the imaging device 1 of the fourth embodiment, except for the use of the beam splitter 3.

This imaging device 1 also has the advantage of using the beam splitter 3. For example, the reference light R can be incident on the beam splitter 3 from the side space of the image sensor 5. Since various optical systems can be arranged in this side space, the reference light source S_{R} is not limited to the end of the optical fiber 21 shown in FIG. 10A as the reference light source S_{R}. A reference light source S_{R} consisting of a condenser lens 23 and a pinhole in a mask as shown in FIG. 10B can be used as well.

The advantage of using pinhole transmitted light as the reference light R is that the numerical aperture NA can be increased to a value close to 1.0. In this case, a condenser lens such as an objective lens is also required in addition to the pinhole, so when using pinhole transmitted light, an optical system using a cube-type beam splitter 3 as shown in FIG. 9 is effective as a recording optical system.

The problem with recording object light O using a cube-type beam splitter 3 is that the object light O is affected by the surface of the beam splitter 3 and the surface of the internal reflecting mirror M, and the accuracy of the optical phase measurement is limited by the surface accuracy of the cube. In order to avoid this problem and perform high-precision optical phase measurement, it is necessary to use an optical system without the cube-type beam splitter 3.

When using spherical wave light emitted from the end of an optical fiber as shown in FIG. 10A, the optical fiber can be bent and does not require accessories such as lenses. Since no accessories such as lenses are required, an optical system without the cube-type BS as shown in FIG. 7 can be used as an optical system for hologram recording. In other words, the great advantage of using the end of an optical fiber as the reference light source S_{R} is that the reference light source S_{R} can be easily placed in a narrow space. Therefore, as an optical system for hologram recording, an optical system in which the reference light source S_{R} is placed very close to the object 4 as shown in FIG. 7 of the fourth embodiment can be used.

### (Seventh embodiment: Yet another method for obtaining reference light data)

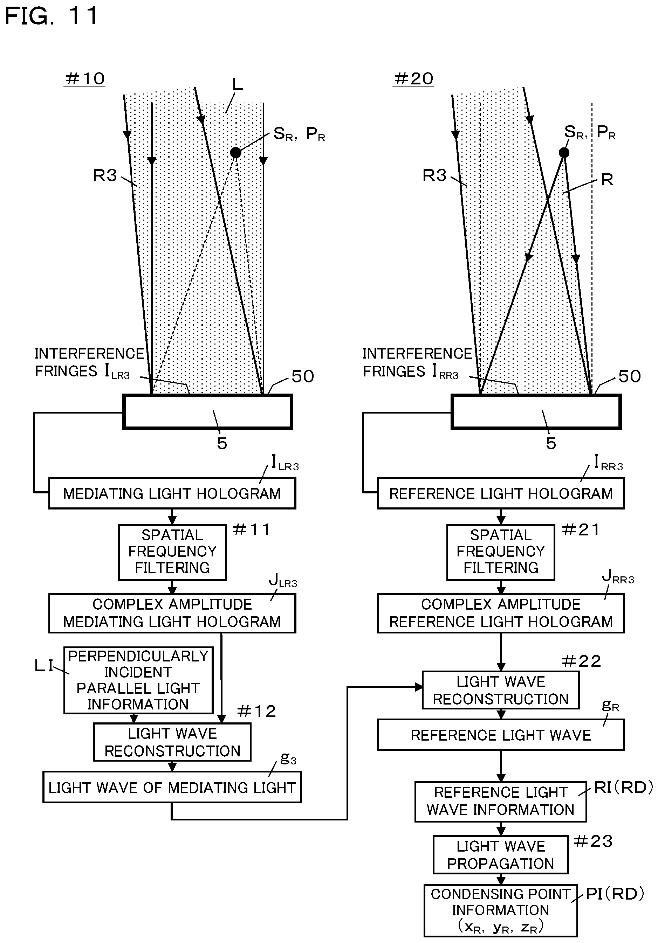

With reference to FIG. 11, yet another method for obtaining reference light is described. The reference light obtaining method of this seventh embodiment is similar to the methods of the second and fifth embodiments in that it uses the perpendicularly incident parallel light on the image sensor 5 as auxiliary light L. The differences are that it uses mediating light R3 as additional auxiliary light, and that it records two holograms and obtains reference light data RD by performing two processes.

The advantage of the reference light data acquisition method of this embodiment is that it is not necessary to use a cube-type beam splitter 3. Since there are no optical elements on the optical path of the reference light R, the reference light data RD can be obtained accurately.

Another advantage is that the mediating light R₃ and the reference light R are not limited to parallel light or spherical wave light, but may be light of any light shape. Furthermore, the reference light R is not limited to off-axis reference light R, but the reference light data RD can be obtained as inline reference light R.

The differences from the second and fifth embodiments is mainly described. The processing method for recording a hologram and obtaining the reference light data RD from the hologram is the same as in the second and fifth embodiments. The order of the steps (#10 to #12, #20 to #21) in the following description can be changed as appropriate.

First, in step (#10), the auxiliary light L is made to enter the image sensor 5 perpendicularly as parallel light, and data on the interference fringes between the auxiliary light L and the mediating light R₃ is recorded as the mediating light hologram I_{LR3} using the image sensor 5.

In step (#11), a series of processes including Fourier transform, spatial frequency filtering, and inverse Fourier transform are performed on the mediating light hologram I_{LR3}, and the first-order term and conjugate term are removed to calculate the complex amplitude mediating light hologram J_{LR3}.

In step (#12), a light wave reconstruction process is performed on the complex amplitude mediating light hologram J_{LR3} using the auxiliary light data LD, which is known information about the auxiliary light L obtained based on the auxiliary light L being perpendicularly incident parallel light, to obtain the light wave g₃ representing the mediating light R₃. More specifically, since the phase distribution of the perpendicularly incident parallel light becomes a constant value distribution on the hologram plane, no calculation processing is required for the light wave reconstruction processing, and the name is simply changed from complex amplitude mediating light hologram J_{LR3} to light wave g₃.

Next, in step (#20), data on the interference fringes between the reference light R and the mediating light R₃ is recorded as a reference light hologram I_{RR3} using the image sensor 5.

In step (#21), a series of processes including Fourier transform, spatial frequency filtering, and inverse Fourier transform are performed on the reference light hologram I_{RR3} to remove the linear term and conjugate term and calculate a complex amplitude reference light hologram J_{RR3}.

Next, in step (#31(sic)), the light wave g₃ representing the mediating light L₃(sic) is used to perform light wave reconstruction processing on the complex amplitude reference light hologram J_{RR3}, and the component of the mediating light R₃ is removed from the complex amplitude reference light hologram J_{RR3} to obtain a light wave g_{R} representing the reference light R.

The obtained light wave g_{R}, representing the reference light R, is reference light data RD, and is reference light wave information RI comprising the phase component of the reference light R on the hologram plane.

Next, if the reference light R is a spherical wave having a reference light condensing point P_{R}, proceed to step (#32(sic)), perform light wave propagation calculations on the reference light wave information RI, and obtain the coordinates (x_{R}, y_{R}, z_{R}) of the reference light condensing point P_{R}, which is the condensing point information PI of the reference light R.

### (Eighth embodiment: Further another reference light data acquisition method)

A further reference light data acquisition method is described. The reference light data acquisition methods described in the second embodiment (FIGS. 3A and 3B) and the fifth embodiment (FIGS. 8A and 8B) can be generalized as follows to be described as the eighth embodiment. In this case, the reference light R can be considered to be not limited to a spherical wave reference light.

A reference light data acquisition method for acquiring reference light data RD representing reference light R used in holography can be implemented by (a) using the image sensor 5 to record data on the interference fringes between the reference light R and auxiliary light L, which is coherent with the reference light R and can be analytically expressed using known parameters PA, as a reference light hologram I_{RL}, (b) using the parameters PA to calculate auxiliary light data LD obtained as an analytical expression of the auxiliary light L on a hologram plane set on the light receiving surface 50 of the image sensor 5, (c) using the auxiliary light data LD to delete the components of the auxiliary light L from the reference light hologram I_{RL}, and determining data on the reference light wave g_{R} representing the reference light R as reference light wave information RI, which is light wave information of the reference light R on the hologram plane, and (d) using the reference light wave information RI as reference light data RD.

Furthermore, if the reference light R is a spherical wave having a reference light condensing point P_{R}, (e) a light wave propagation calculation is performed to reverse the reference light wave g_{R} acquired as the reference light wave information RI, and data on the condensing point information PI indicating the position of the reference light condensing point P_{R} is acquired as data on the reference light R, and (f) the condensing point information PI can be used as the reference light data RD.

In this generalized reference light data acquisition method, the auxiliary light L can be analytically expressed using the known parameters PA, and the light wave of the auxiliary light L can be reconstructed on a computer using the parameters PA.

Light waves that can be analytically expressed using a known parameters PA include, for example, parallel light and spherical wave light. Parallel light can be analytically expressed if the azimuth angle in three-dimensional space of the incident parallel light with respect to the light receiving surface 50 of the image sensor 5 in which the coordinate system is set is given. The position of the light source of the parallel light can be set to a point at infinity, and in terms of calculation, the point at infinity can be treated as a known point without any problems.

When parallel light is used as the auxiliary light L, if the parallel light is perpendicularly incident light, the phase is constant within the light receiving surface 50. The second and fifth embodiments use this perpendicularly incident parallel light as the auxiliary light.

In the second and fifth embodiments, the reference light R is a spherical wave light having a reference light condensing point P_{R}, but the reference light data acquisition method using perpendicularly incident parallel light L does not necessarily limit the reference light R to spherical wave light, and can target reference light R of any light beam shape.

The azimuth angle of the obliquely incident parallel light in three-dimensional space can be determined using the perpendicularly incident parallel light on the light receiving surface 50. Therefore, when obliquely incident parallel light is used as auxiliary light L, a process for determining this auxiliary light L is required, and the reference light data RD is acquired in two stages, which is included in the reference light data acquisition method of the seventh embodiment, for example.

The light wave of the spherical wave light can be reconstructed on a computer as the auxiliary light L, if the position of the point light source of the spherical wave is given as a parameter. However, the position of the point light source of the spherical wave light must be obtained separately, and can be obtained, for example, by using perpendicularly incident parallel light on the light receiving surface 50. After all, this is the same as obtaining the reference light condensing point P_{R} of the spherical wave reference light R using the auxiliary light L of perpendicularly incident parallel light.

Even when using spherical wave light as the auxiliary light L, a process for determining this auxiliary light L is required, that is, the reference light data RD is obtained in two stages, this case is included in the reference light data acquisition method of the seventh embodiment, for example.

### (Ninth embodiment: Light wave reconstruction method)

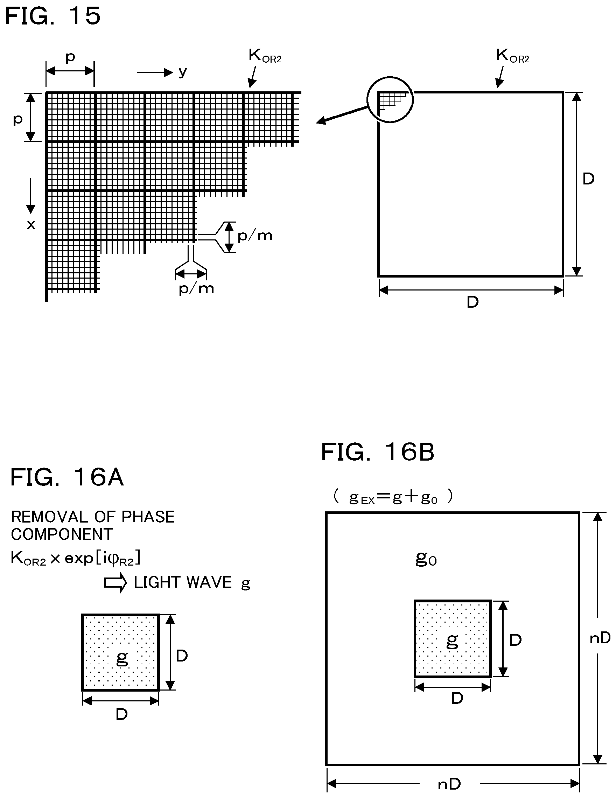

With reference to FIGS. 12 to 16A and 16B, a light wave reconstruction method according to the ninth embodiment of the present invention is described.

First, an overview of the light wave reconstruction method is described.

The light wave reconstruction method in holography is a method for reconstructing the light wave of object light O from object light hologram I_{OR}. In this embodiment, an object light hologram I_{OR} recorded by an off-axis method is described. Furthermore, the object light hologram I_{OR} is assumed to be recorded, for example, by an imaging device 1 according to the first embodiment of the present invention. This imaging device 1 is provided with reference light data RD, that is, data of reference light R, which is an off-axis spherical wave light used to record object light O emitted from an object 4 to be imaged. By using this reference light data RD, light wave reconstruction can be performed on a computer. The reference light data RD is data of reference light R required for light wave reconstruction, for example, reference light phase component exp[iφ_{R}(x, y)], on the hologram plane being the light receiving surface of the image sensor.

The complex amplitude object light hologram J_{OR} is extracted by performing spatial frequency filtering and inverse Fourier transform on the data obtained by the first Fourier transform performed on the object light hologram I_{OR}. Next, the phase component of the reference light R is removed from the complex amplitude object light hologram J_{OR} by multiplying the complex amplitude object light hologram J_{OR} by the reference light phase component exp[iφ_{R}(x,y)] based on the reference light data RD on the hologram plane. This removes the phase component of the reference light R from the complex amplitude object light hologram J_{OR}. This extracts the object light wave g representing the object light O, that is, the light wave of the object light is reconstructed.

The object light wave g at this stage is a light wave on the hologram plane, and even if the light intensity distribution is calculated by the square of the absolute value of this object light wave g, |g|², the shape of the object 4 that is normally observed cannot be visually recognized. To obtain an apparent image of the object 4, it is necessary to propagate the object light wave g on the hologram plane backward to the position of the object 4, that is, the source of the object light O, and to calculate the object light h at the object position.

To calculate the object light h at the object position, a light wave propagation calculation is performed on the object light wave g by plane wave expansion, and the object light wave h at the object position is obtained. The image of the object 4 becomes visible by the square of the absolute value of the object light wave h, |h|².

The above-mentioned light wave reconstruction process has a limited range of application, and in order to obtain images with a large numerical aperture or high resolution images, new technology must be added to the light wave reconstruction process.
This is because the reconstruction of a hologram requires a finer pitch than the pixel pitch p of the image sensor, that is, a greater number of sampling points.

The interference fringes recorded by the image sensor are fringe patterns that change at intervals much larger than the wavelength of the light wave by using the interference phenomenon. The spatial frequency band of the fringe patterns can be recorded (i.e. sampled) at the pixel pitch p of the image sensor. Conversely, only such things can be recorded. In digital holography (DH), the object light wave g that is processed in a computer and extracted from the interference fringes becomes high-frequency data in the wavelength region of the light wave itself, and must be processed at a sampling interval finer than the pixel pitch p.

Below, we will explain a method for resolving how data obtained based on the size of the image sensor in real space is processed in a high-frequency region that exceeds the frequency limited by the pixel pitch p in the spatial frequency space. By the metod returning the processed data to real space, data properly sampled can be obtained, that is, at a small pitch that is narrower than the pixel pitch p. By increasing the number of pixels in this way and by making it possible to handle high-frequency data, it becomes possible to handle high resolution and large numerical aperture.

As shown in the flowchart in FIG. 12, in step S11, a complex amplitude object light hologram J_{OR} is extracted from the object light hologram I_{OR} through Fourier transform, spatial frequency filtering, and inverse Fourier transform.

In step S12, the complex amplitude object light hologram J_{OR} is converted into an inline complex amplitude object light hologram J_{OR2}. This conversion is realized by replacing the reference light R, which is off-axis light contained in the hologram J_{OR}, with the newly introduced inline reference light R₂ component.

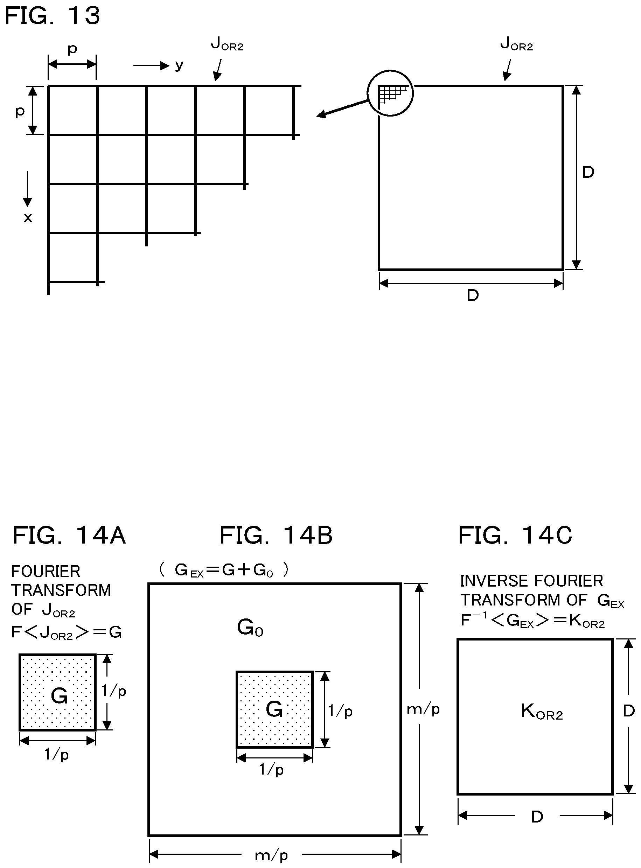

FIG. 13 shows an inline complex amplitude object hologram J_{OR2} that has a pixel pitch p and a square shape of side length D.

The specific process of inlining is described. First, the phase component exp[iφ_{R}] of the reference light R is obtained from the reference light data RD. Next, an inline reference light R₂ having a point light source is set at a point obtained by moving the reference light condensing point P_{R} onto the optical axis in the xy plane. The phase component exp[iφ_{R2}] of the inline reference light R₂ emitted by the point light source is calculated on the hologram plane. Furthermore, the phase difference component exp[i(φ_{R2}-φ_{R})] is multiplied by the complex amplitude object hologram J_{OR}. This multiplication replaces the component of the off-axis reference light R with the component of the inline reference light R₂, and an inline complex amplitude object hologram J_{OR2} is obtained.

In step S13, the inline complex amplitude object light hologram J_{OR2} is Fourier transformed to generate a spectrum F<J_{OR2}>=G. Furthermore, the space to be calculated is enlarged by a factor of m×m, by adding a zero value space G₀ with a spectral intensity of 0 (zero) around the spectrum G obtained in the two-dimensional spatial frequency space. The original spectrum G and the zero value space G₀ are combined to obtain an enlarged spectrum G_{EX}=G+G₀ (see FIGS. 14A, 14B, 14C).

Note that the hologram is considered to be a square hologram, and therefore the spectrum resulting from the Fourier transform of the hologram is assumed to have a square distribution. However, in the present invention, not only square holograms but also rectangular holograms and spectra can be treated in the same way.

In step S14, the enlarged spectrum G_{EX} is subjected to an inverse Fourier transform F⁻¹<G_{EX}> to obtain a pixel number increased complex amplitude object light hologram K_{OR2} having a subdivision pixel pitch p/m obtained by dividing the original pixel pitch p by m (see FIG. 15).

In step S15, the pixel number increased complex amplitude object light hologram K_{OR2} is multiplied by the phase component exp[iφ_{R2}] of the inline reference light R₂ to remove the phase component exp[iφ_{R2}] of the inline reference light R₂. This allows the light wave representing the object light O itself to be obtained as a pixel number increased object light wave g on the hologram plane z=0. As its name suggests, this pixel number increased object light wave g is a light wave represented by data of a number of pixels, i.e., a number of sampling points, that is increased from the number of pixels of the image sensor.

After extracting the above-mentioned complex amplitude object light hologram J_{OR}, the process from step S12 to step S14 in which the object light wave g is calculated can be called a pixel number increasing process for generating the pixel number increased complex amplitude object light hologram K_{OR2} by increasing the number of data points in the complex amplitude object light hologram J_{OR}.

Furthermore, the process of step S15 can be called a reconstruction process for obtaining a pixel number increased object light wave g on the hologram plane from the pixel number increased complex amplitude object light hologram K_{OR2}.

Next, in step S16, a zero value space G₀(sic) with a light intensity of 0 (zero) is added around the pixel number increased object light wave g to enlarge the calculation space by n×n times. The original pixel number increased object light wave g and the zero-value space G₀(sic) are combined to obtain an enlarged object light wave g_{EX}=g+g₀. This is a process for preparing a large projection screen to reconstruct an image larger than the size of the image sensor 5 (see FIGS. 16A and 16B).

In step S17, the enlarged object light wave g_{EX} is expanded into plane waves, and then a light wave propagation calculation is performed to reconstruct an object light wave h at the object position.

The processes of steps S16 and S17, in which the enlarged object light wave g_{EX} is generated in the above-mentioned hologram plane and the object light wave h at the position of the object 4 is calculated, can be called an enlarged wave propagation reconstruction process.

According to the light wave reconstruction method of this embodiment, light waves can be reconstructed at a pitch of the light wavelength size that is finer than the pixel pitch of the image sensor, and object light waves larger than the size of the image sensor can be easily and accurately reconstructed. In other words, an object larger than the size of the image sensor can be imaged.

### (Tenth embodiment: Removal of diffracted light components and light wave reconstruction)

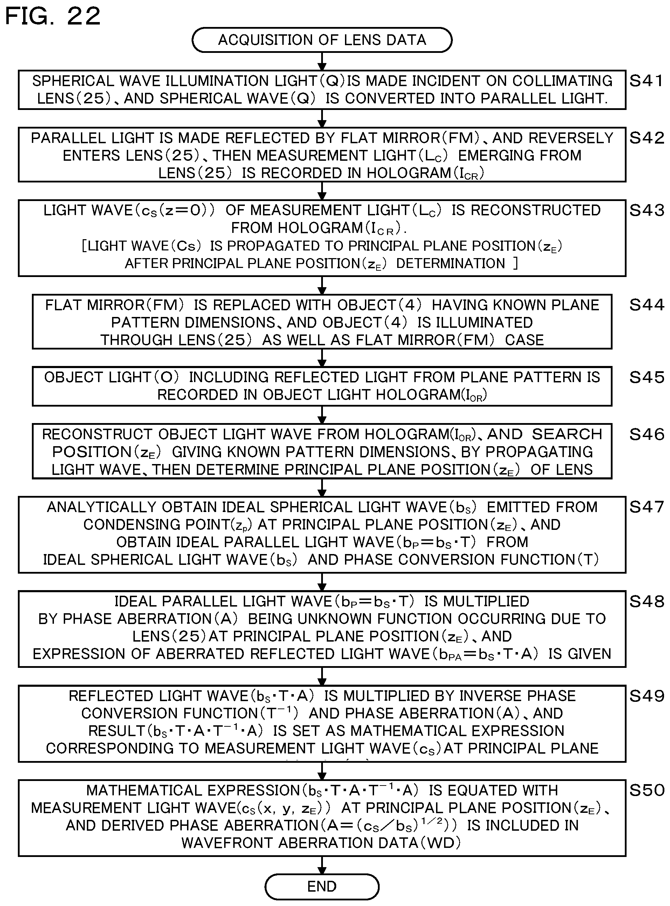

With reference to the flowchart of FIG. 17 and FIG. 22(sic), light wave reconstruction including a process of removing diffracted light components according to the tenth embodiment is described. This process removes diffracted light components when the components are contained in an object light hologram recorded by an imaging device 1 having an aperture Ap in front of an image sensor 5, in which the components were generated at the time the object light O passes through the edges of the aperture Ap.

When part of the object light is blocked by an aperture, diffracted light is generated at the edge of the aperture, and this diffracted light overlaps with the object light passing through the aperture and is recorded in the hologram. Since the diffracted light is weak when recording bright-field object light, the effect of the diffracted light on the reconstructed image is not so large. However, when performing precision optical measurement using the phase of the reconstructed object light, even weak diffracted light changes the phase of the object light, so the effect of the diffracted light must be removed.

In addition, when recording dark-field object light, the object light to be recorded itself is weak, so the effect of diffracted light on the reconstructed image cannot be ignored. In addition, when obtaining a high-quality dark-field image, it is necessary to remove diffracted light from the recorded object light. Diffracted light occurs at the edge of the aperture. By utilizing this fact, the diffracted light can be completely removed by the following method.

### (Method of removing using spatial frequency filtering)

When a hologram is recorded using a spherical wave reference light, the intensity distribution of the spatial frequency spectrum of the hologram may have an intensity distribution similar to that of the reconstructed object light at the position of the reference light condensing point P_{R} (for example, in the case of an imaging optical system in which paraxial approximation holds in imaging). In such a case, if the reference light condensing point P_{R} and the aperture Ap are close to each other, a spectral intensity distribution similar to the shape of the aperture Ap will appear in the intensity distribution of the spatial frequency spectrum. In other words, if the aperture Ap is circular, a circular spectral intensity distribution corresponding to the aperture will appear, and if the aperture Ap is rectangular, a rectangular spectral intensity distribution corresponding to the aperture will appear. Since diffracted light occurs at the edge of the aperture Ap, the spectral intensity distribution of the diffracted light components appears at the position of the spectral intensity distribution corresponding to the aperture Ap.

FIG. 22(sic) shows the intensity distribution of the spatial frequency spectrum of a hologram recorded using an imaging device when the aperture Ap is circular, and is an example of an intensity distribution similar to that of the reconstructed object light. The aperture Ap, and therefore the spectrum corresponding to the diffracted light components, are shown in the figure as the aperture edge 81. The object light components OR* exist inside this aperture edge 81.

Therefore, by extracting the data inside the filtering circle 82 shown inside the aperture edge 81, the object light components OR* that do not contain the diffracted light components can be extracted and turned into complex amplitude object light J_{OR}.

### (Method of removing diffracted light components from reconstructed object light at the aperture position)

A processing is described for the case where the diffracted light components and the object light components OR* cannot be separated in the spectral space. When the numerical aperture NA of the reference light R is large, or when the reference light condensing point P_{R} of the reference light R is not close to the plane formed by the aperture Ap, if a hologram is recorded with such an imaging optical system, it becomes difficult to separate the diffracted light components and the object light components using the spectral intensity distribution in the spatial frequency space. This is because, for example, the spectral intensity distribution of the diffracted light components does not resemble the spectral intensity distribution at the aperture edge.

In this case, first, spatial frequency filtering is performed to include both the object light components and the diffracted light components, and then light wave reconstruction is performed on both extracted components, and the reconstructed light waves are propagated to the position of the aperture Ap. The diffracted light components become images that are in focus at the aperture edge, and the object light components are not in focus, so that the diffracted light components can be completely removed by removing the images that are in focus at the aperture edge.

The flowchart in FIG. 17 is described. The object light hologram I_{OR} to be processed is assumed to have been captured using the imaging device 1 of the first embodiment using the off-axis method. However, the method of removing the diffracted light components is not limited to the off-axis method, and the method of this embodiment can be modified appropriately and applied to object light holograms recorded by other methods.

First, the object light hologram I_{OR} is Fourier transformed F<I_{OR}> to move it to spatial frequency space (spectral space) (S21). A comprehensive judgment is made based on the image of the spectral intensity distribution in the spatial frequency space and the imaging optical system, etc., to determine whether the object light O component and the diffracted light component are separable (S22).

If they are separable in the spatial frequency space (Yes in S22), the diffracted light component, direct light component, and conjugate term component are removed by spatial frequency filtering, and the obtained data is subjected to an inverse Fourier transform to generate a complex amplitude object light hologram J_{OR} that does not include the diffracted light component (S23).

Next, the object light wave g is reconstructed from the complex amplitude object light hologram J_{OR} using the reference light data RD (S24). This object light wave g is a light wave that does not include the diffracted light component. The object light wave g is expanded into plane waves and propagated to obtain the object light wave h at the object position (S25).

Also, if it is not separable in the spatial frequency space (No in S22), the direct light component and the conjugate term component are removed by spatial frequency filtering to extract the object light component in a state in which the diffracted light component is included. The extracted data is subjected to an inverse Fourier transform to generate the complex amplitude object light hologram J_{OR} in a state in which the diffracted light component is included (S26).

Next, the object light wave g is reconstructed from the complex amplitude object light hologram I_{OR} using the reference light data RD (S27). This object light wave g is a light wave that includes the diffracted light component. The object light wave g is expanded into plane waves and propagated to the position z=zₐ of the aperture Ap to obtain a light wave at the position of the aperture Ap. Since the light wave obtained at the position of the aperture Ap is focused on the edge of the aperture, an image of the diffracted light component is obtained in the image obtained by reconstructing the image from the light wave (S28).

The image component focused at the edge of the aperture is removed to obtain the object light wave gₐ at the position of the aperture Ap, i.e., the position z=zₐ of the edge of the aperture (S29). This object light wave gₐ is a light wave that does not contain the diffracted light component.

The object light wave gₐ is expanded into plane waves and propagated to the object position to obtain the object light wave h that does not contain the diffracted light component (S30).

The method of removing the diffracted light component of this embodiment makes it possible to completely remove the diffracted light component generated at the edge of the aperture, and accurately reconstruct the object light O passing through the aperture Ap.

### (Eleventh embodiment: imaging device)

With reference to FIG. 18, an imaging device according to the eleventh embodiment is described. The imaging device 1 includes a lens 24 as an optical element for imaging object light O transmitted through an object 4, which is a large sample to be imaged. If the lens 24 is considered as an illumination light source S_{Q} with a surface distribution, the illumination light source S_{Q} is configured to emit illumination light Q so as to have an illumination light condensing point P_{Q} (not shown) between the object 4 and the image sensor 5.

In the case of imaging a transparent object in which the object light O is the transmitted light from the object 4 irradiated with the illumination light Q as mentioned above, a bright field object light can be recorded by illuminating with the illumination light Q condensing at the aperture Ap. This illumination light source S_{Q} (not shown) is configured so that the illumination light Q is incident on the image sensor 5.

Furthermore, the illumination light source S_{Q} can also be configured so that the illumination light Q is not incident on the image sensor 5. In this case, the dark-field object light can be easily recorded by moving the condensing point of the illumination light Q at the position of the aperture Ap away from the aperture Ap.

### (Other Modifications)

In the optical system of FIG. 18 and FIG. 1A described above, the condensing point P_{R} of the spherical wave reference light R is located near the aperture Ap. If it is difficult to assemble an optical system for forming the reference light R in the space near the aperture Ap, this problem can be solved by using a cube-type beam splitter 3 as an optical coupler, as shown in FIG. 9.

As the structure of the illumination light Q, as described above, various structures and arrangements of illumination light Q can be used to obtain bright-field images and dark-field images. For example, a light passing through an object may be used as the illumination light Q.

### (Twelfth embodiment: imaging device for large area)

With reference to FIG. 19, an imaging device according to the twelfth embodiment is described. The imaging device 1 of this embodiment is a device that can record a large-diameter object light O in a small-diameter hologram and can reconstruct the object light wave by reducing the wavefront aberration caused by the collimating lens 25. In addition, by using the collimating lens 25, this imaging device 1 can be an optical system for creating a large-diameter parallel illumination light and collecting and recording a large-diameter reflected light. This imaging device 1 is a partially modified version of the configuration of the first embodiment (see FIG. 1), but the other configuration is the same as that of the first embodiment.

The changed configuration is a configuration for enabling imaging of a large-area flat plate, etc. without being limited by the size of the light receiving surface 50 of the image sensor 5. The changes include adding a collimating lens 25, wavefront aberration data WD, and wavefront correction unit 12b, and further changing the illumination light source S_{Q} so that the illumination light Q is emitted as spherical wave light.

The imaging device 1 is configured so that the illumination light Q that is made parallel through the collimating lens 25 illuminates the object 4 to be imaged, and the object light O emitted from the object 4 travels backward through the collimating lens 25, becomes object light O with a reduced outer diameter, enters the image sensor 5, and is acquired as an object light hologram I_{OR}. A detailed explanation is given below.

The collimating lens 25 is a lens that converts diverging spherical wave light into parallel light and converts backward parallel light into condensed spherical wave light, and has a focal point F_{P}. The focal point F_{P} is disposed between the collimating lens 25 and the image sensor 5. The collimating lens 25 itself is placed on the optical path from the object 4 to the image sensor 5 with the purpose of causing a predetermined deformation in the wavefront of the object light O.

If the collimating lens 25 were an ideal lens without aberration, the spherical wave light Q would be converted into parallel illumination light Q by the collimating lens 25, which is located a focal length away from the illumination light source S_{Q}, and reflected by a flat mirror FM(sic) placed near the collimating lens 25. The reflected parallel light O is converted into a spherical wave after passing through the lens 25 again, and is condensed on a point on the x-y plane including the illumination light source S_{Q}, and enters the image sensor 5 after passing through the aperture Ap. The illumination light source S_{Q} constitutes a point light source.

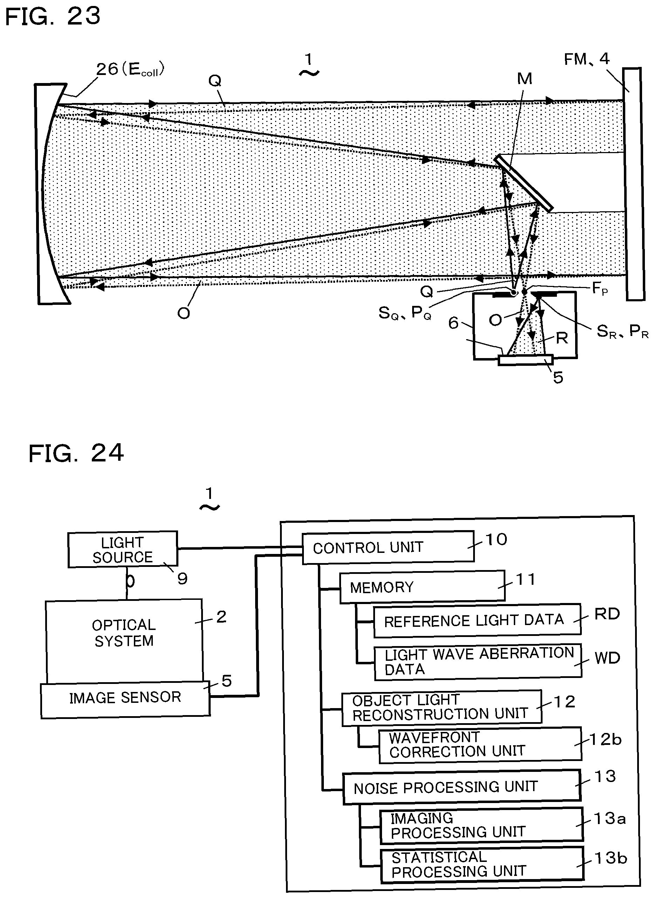

The collimating lens 25 is a collimating element E_{coll} in a broader sense, and a wavefront converting element E_{X} in an even broader sense. The collimating element E_{coll} can be, for example, a lens type or a parabolic mirror type (see FIG. 23). The collimating lens 25 of this embodiment is a single plano-convex lens type collimating element E_{coll}.

The wavefront converting element E_{X} is an optical element that acts on the wavefront of incident light to convert the wavefront and emits output light having the converted wavefront. The wavefront converting element E_{X} is designed and manufactured to convert light having a specified wavefront (for example, spreading spherical wave light) into light having another specified wavefront (for example, plane wave light), but it is not expected to be manufactured exactly as designed. Therefore, the converted wavefront contains wavefront aberration (phase distortion, phase aberration) that occurs as a deviation from a predetermined deformation (design deformation, desired deformation) due to imperfections in the wavefront converting element E_{X}. The light waves of the object light O recorded in the object light hologram I_{OR} pass through the collimating lens 25 (wavefront converting element E_{X}), and are therefore distorted due to the influence of this wavefront aberration, rather than the light waves of the true object light.

In this way, actual collimating lenses have aberration, and due to this aberration, the reflected light O does not converge to a single point, but becomes light that spreads at the position of the convergence point. By recording and reconstructing the reflected light O that is affected by the aberration, the aberration can be obtained as wavefront aberration data distributed on the x-y plane using the reconstructed reflected light O and the spherical wave illumination light Q.

The wavefront aberration data WD is data used to remove or reduce the wavefront aberration received when passing through the collimating lens 25 (wavefront converting element E_{X}) by performing data processing using calculations, and is data obtained by measuring the characteristics of the collimating lens 25.

The illumination light source S_{Q} is a point light source that emits illumination light Q as spherical wave light, and is arranged off-axis near the focal point F_{P} of the collimating lens 25. With this configuration, the object 4 is illuminated by the illumination light Q, which has been made into distorted parallel light. The reflected object light O is focused with a spread around the focal point F_{P}, and then diverges.

The optical axis of the image sensor 5 (z-axis with its origin at the center of the light receiving surface 50) coincides with the optical axis of the collimating lens 25 and is arranged to pass through the center of the aperture Ap. The focal point F_{P} of the collimating lens 25 is arranged at the center of the aperture Ap.

When reconstructing the light waves of the object light O from the object light hologram I_{OR}, the wavefront correction unit 12b uses the wavefront aberration data WD to perform data processing to reduce the effects of wavefront aberration caused by imperfections in the collimating lens 25.
The wavefront aberration data WD includes data related to the optical system necessary for the data processing performed by the wavefront correction unit 12b, such as the position coordinate value of the focal point F_{P}, the position coordinate value of the principal plane of the collimating lens 25, and the position coordinate value of the illumination light source S_{Q}.

According to the imaging device 1 of this embodiment, the collimating lens 25 is used as the wavefront converting element E_{X} to record a large-diameter object light O in a small-diameter hologram, and the wavefront aberration data WD is used to remove the effect of the wavefront aberration caused by the collimating lens 25, thereby reconstructing an accurate object light wave. Therefore, a large-area flat plate can be imaged without being restricted by the pixel pitch of the image sensor 5, the size of the light receiving surface 50, the size of the recording optical system, etc., and an object light wave with little distortion can be reconstructed. Note that, although the effect of the wavefront aberration caused by the imperfection of the collimating lens is removed in this embodiment, the optical element to be targeted is not necessarily limited to a collimating lens. For example, the present invention can be widely applied to optical elements from which aberration is to be removed from the optical system.

### (Thirteenth embodiment: Large-area surface shape measurement)

A surface shape measurement method according to the thirteenth embodiment is described with reference to FIG. 20. This surface shape measurement method can be performed using the imaging device 1 shown in FIG. 19, and FIG. 19 is also still being referenced.

### (Preconditions)

The imaging device 1 has an orthogonal xyz coordinate system of which origin and z-axis are set, respectively, at the center and the optical axis of the light receiving surface 50. The wavefront aberration data WD includes information on a phase aberration distribution function A(x, y, z_{M}), which is of measurement values of the wavefront aberration occurring in the phase distribution of the light wave passing through the collimating lens 25. This phase aberration distribution function A is called, for example, the phase aberration function, the aberration distribution, or other appropriate expression. The wavefront aberration data WD also includes information on the collimating lens 25, including the focal position z=z_{P}, which is the position of the focal point F_{P}, the principal plane position z=z_{E}, which is defined as the boundary plane where the spherical wave and the plane wave are switched, and the data application position z=z_{M}, which is the data acquisition position of the wavefront aberration and also the calculation position for post-processing. The data acquisition position and the data application position z=z_{M} are the positions of the reflecting surface of the flat mirror FM in FIG. 21 described later. Usually, the shape measurement surface of the object 4 to be measured is arranged so as to be close to this reflecting surface z = z_{M}. Since the reflecting surface of the flat mirror FM is the incident surface of the perpendicularly incident light, strict accuracy is not required for the value of this z_{M}, and an accuracy of, for example, several mm is acceptable. In addition, the spatial change of the phase aberration distribution function A is sufficiently small compared to the spatial change of a wavefront conversion function T of the collimating lens 25, and can be considered as a perturbation element for the function T. In the optical system shown in FIG. 19, and FIG. 21 described later, the phase aberration of the light transmitted in the forward direction through the collimating lens 25 from z=z_{E} to z=z_{M} can be considered to be equal to the phase aberration of the light transmitted in the reverse direction through the collimating lens 25 from z=z_{M} to z=z_{E}. From this, the phase aberration distribution function A in each case where parallel light is emitted and incident from the forward direction and the reverse direction to the collimating lens 25 can be considered to be equal to each other.

### (Procedure for measuring shape)

In step S31, the illumination light Q passes through the collimating lens 25 and illuminates the object 4 as parallel light. The object light O, which is the reflected light of the illumination light Q from the surface of the object 4, is made to travel backwards through the collimating lens 25 and is recorded by the image sensor 5 in the object light hologram I_{OR}.

Then, the object light wave g, which is the light wave of the object light O, is calculated at the hologram plane z=0, which is the light receiving surface 50, and the object light wave g(0) is propagated through the lens position (principal plane position z=z_{E}) to the position z_{O}, which is the surface shape measurement position on the object 4. The principal plane position z=z_{E} is defined as the boundary plane where the spherical wave and the plane wave are switched.

### (Calculation of the object light wave)

In step S32, several processes are performed. First, the object light wave g calculated at the hologram plane z=0 is propagated to the principal plane position z=z_{E} by light wave propagation calculation to obtain the object light wave g(z_{E}). If we look at the propagation from z=0 to z=z_{E} along the optical path, the light wave starting from the hologram plane is condensed toward the focal point F_{P}, and then spreads out like a spherical wave before reaching the principal plane position z=z_{E}. The propagation calculation is performed using the plane wave expansion method, and the wavefront at the principal plane position z=z_{E} is calculated without performing calculations on the optical path along the way.

Next, the spherical phase component is removed from the object light wave g(z_{E}) to generate an object light wave in a plane wave state. This represents the original action of the collimating lens 25 on the light wave g. Mathematically, this is performed by multiplying the object light wave g (z_{E}) by a phase conversion function T(z_{E}), which is a predetermined operator. This gives an object light wave g(z_{E})·T(z_{E}) converted into parallel light. The phase conversion function T(z_{E}) is a function for removing the phase component (distributed in xy) from an analytically calculated spherical wave at the principal plane position z=z_{E}. The function T is found from the position z=z_{P} of the focal point F_{P} and the principal plane position z=z_{E}. Note that the fact that the illumination light source S_{Q} is off-axis can be ignored in the approximation calculation.

In step S33, the object light wave g·T, made parallel at the principal plane position z_{E}, is divided by the phase aberration distribution function A(x, y, z_{M}). This gives the object light wave g·T/A(z_{M}) at the data application position z_{M}.

In step S34, the object light wave g·T/A(z_{M}) is propagated to the object position z_{O}, the object light wave h(x, y, z_{O}) of the object light O at the object position z_{O} is calculated, and the phase distribution φ_{O}(x, y, z_{O}) is obtained. This object light wave h is a light wave that is affected by the wavefront aberration function A(z_{M}) when the object light O travels backward through the collimating lens 25 toward the image sensor.

The processing above completes, which is related to the object light O. Next, a process is performed to calculate the light wave of the illumination light Q at the object position z_{O}.

### (Calculation of the illumination light wave)

In step S35, in order to calculate the light wave of the illumination light Q at the object position z_{O}, first, the ideal spherical light wave b_{S}(x, y, z_{E}) of the illumination light Q at the principal plane position z_{E} is analytically set. Next, the ideal spherical light wave b_{S}(x,y,z_{E}) is multiplied by the phase conversion function T(z_{E}) and the wavefront aberration function A(z_{M}) to generate an illumination light wave b_{PA}(z_{M})=b_{S}·T(z_{E})·A(z_{M}) at the data application position z_{M}, which is originally ideal and parallel, but distorted due to the influence of aberration.

In step S36, a light wave propagation calculation is performed for the illumination light wave b_{PA}(z_{M})b_{S}·T·A at the data application position z_{M} to generate the parallel light wave b_{PA}(x,y,z_{O}) and phase distribution φ_{Q}(x,y,z_{O}) of the illumination light Q at the object position zo.

### (Calculation of phase difference distribution)

In step S37, the phase difference distribution is calculated from the phase distribution φ_{O}(x,y,z_{O}) of the object light wave h(x,y,zo) of the object light O and the phase distribution φ_{Q}(x,y,z_{O}) of the illumination light wave b_{PA}(x,y,z_{O}) of the illumination light Q distorted from an ideal parallel light wave.

When calculating the phase difference distribution, φ_{O}(0,0)=φ_{Q}(0,0) is set at the origin on the x-y plane for the phase distribution φ_{O}(x,y) of the object light O at the object position zo and the phase distribution φ_{Q}(x,y) of the parallel illumination light Q. As a result, the height distribution t(x,y,zo) of the measured surface based on the origin is obtained by following equation (9). For a height t exceeding the light wavelength λ, an unwrapping process may be performed on the phase difference distribution φ_{O}(x, y, z_{O})-φ_{Q}(x, y, z_{O}).$t \left(x,y{, z}_{o}\right) = - λ \frac{\left({φ}_{O},\left(x,y{, z}_{O}\right)-{φ}_{Q}\left(x,y{, z}_{O}\right)\right)}{4 π}$ (9)

According to the surface shape measurement method of this embodiment, the flatness of the object surface and the height distribution of the surface shape can be measured by determining the phase difference distribution between the light wave h of the reconstructed object light O and the light wave b_{PA} of the reconstructed parallel illumination light Q calculated using the wavefront aberration function A(z_{M}) obtained with the flat mirror FM as a reference. This surface shape measurement method uses the collimating lens 25 and can process data while taking into account the influence of the wavefront aberration caused by the imperfection of the collimating lens 25, so that the flatness and surface shape of a large-area substrate can be measured with high accuracy.

### (Fourteenth embodiment: Method for acquiring optical system parameters and wavefront aberration data WD)

A wavefront aberration data acquisition method according to the fourteenth embodiment is described with reference to FIGS. 21 and 22. This wavefront aberration data acquisition method can be performed using the imaging device 1 of FIG. 19, and FIG. 19 is also still being referenced. The explanations of the twelfth and thirteenth embodiments are also applicable to this embodiment.

In FIG. 21, the flat mirror FM is arranged by considering that the focal point F_{P} of the collimating lens 25 is located at the center of the aperture Ap. The center of the aperture Ap and the focal point F_{P} are on the z-axis (optical axis). The z-coordinate values of the focal point F_{P}, the aperture Ap, and the illumination light source S_{Q} are the same (z_{P}=z_{A}=z_{Q}). The illumination light source S_{Q}, which is a source of spherical wave light, is shown at the position of the illumination light condensing point P_{Q}. The flat mirror FM and the object 4 are interchangeable.

In the wavefront aberration data acquisition method, data such as setting conditions (z_{P}, z_{A}, z_{Q}, z_{E}, z_{M}) related to the arrangement in which the collimating lens 25 is used in the imaging device 1 are set or measured. These data are integrated as wavefront aberration data WD together with information on the phase aberration distribution function A(x, y, z_{M}), which is of measurement values of the wavefront aberration generated by the collimating lens 25. First, the settings performed when measuring the phase aberration distribution function A is described.

### (Determination of distance zₐ)

Prior to measuring the phase aberration distribution function A(x, y, z_{M}), a distance zₐ from the image sensor 5 to the aperture Ap is measured. First, in order to identify the aperture Ap, the peripheral portion (aperture edge) of the aperture Ap is illuminated by the illumination light Q being a light after reflection from the flat mirror FM, and then the diffracted light generated at the aperture edge is recorded in a hologram and reconstructed, and light wave propagation calculation is performed to search for and determine the aperture edge position. Note that the position z_{Q} of the illumination light source S_{Q} is set separately to the position z_{A} of the aperture Ap.

Specifically, in the optical system of FIG. 21,
(1) the flat mirror FM is tilted by a small angle so that a part of the reflected light is blocked by the aperture edge, and the diffracted light generated at the aperture edge is recorded in the hologram as object light O. Next,
(2) the light waves of the recorded object light O are propagated by propagation calculation, and the z coordinate value is determined at a position where the aperture edge is in focus, namely, the recorded object light O is generated, and the z coordinate value is taken as the measured value of the distance zₐ from the light receiving surface 50 of the image sensor 5 to the aperture Ap.

### (Adjusting the position of the collimating lens 25, setting that of the focal point F_{P})

The position of the collimating lens 25 is adjusted using the reflected light from the flat mirror FM (reflected light of the illumination light Q) according to the following procedure. In the optical system shown in FIG. 21:
(1) After fine-tuning of the inclination of the flat mirror FM, the reflected light O is made to pass through the center of the aperture Ap, and the reflected light O is recorded in a hologram.
(2) From the recorded reflected light O, the component close to the optical axis is obtained by cutting it out, and propagation calculations are performed on this near axis component to find the light condensing point.
(3) While moving the collimating lens 25 along the optical axis direction, the above steps (1) and (2) are repeated to bring the position (x, y, z_{P}) of the condensing point of the near axis component (paraxial light component) into agreement with the center (0, 0, z_{A}) of the aperture Ap. The condensing point at this agreement (z_{P}=z_{A}) is defined as the focal point F_{P}. As a result, the distance from the illumination light source S_{Q} to the collimating lens 25 and the distance from the focal point F_{P} to the collimating lens 25 become equal, and at least the near axis component of the spherical wave light emitted from the illumination light source S_{Q} is converted into parallel light after passing through the collimating lens 25.

### (Explanation of the procedure according to the flowchart)

After the above settings, the phase aberration distribution function A is measured according to the procedure shown in the flowchart of FIG. 22. Steps S41 to S43 are measurements using the flat mirror FM, steps S44 to S46 are measurements using the object 4, and steps S47 to S50 are post-processing by computer.

### (Processing using the flat mirror FM)

In step S41, spherical wave illumination light Q from the illumination light source S_{Q} is incident on the collimating lens 25, and the spherical wave Q is converted into parallel light. The illumination light source S_{Q} (illumination point light source) is arranged off-axis near the focal point F_{P} of the collimating lens 25 (collimating element E_{coll}). If the illumination point light source is arranged at the focal point F_{P} instead of off-axis, a cube-type beam splitter or the like can be used, but additional calculation processing is required.

In step S42, the parallel light is reflected by the flat mirror FM and made to enter the lens 25 in a backward direction, and the measurement light Lc emerging from the lens 25 is recorded in the hologram I_{CR}.
The flat mirror FM is placed at the data acquisition position z=z_{M}, which is a position close to the collimating lens 25, and is adjusted perpendicular to the optical axis.
The measurement light Lc is converted by the collimating lens 25 into measurement light Lc with an outer diameter smaller than that of the parallel light, and enters the image sensor 5. Data on the interference fringes between the measurement light Lc and the reference light R is recorded as the measurement light hologram I_{CR}.

In step S43, the light wave c_{S} of the measurement light Lc is reconstructed from the hologram I_{CR}. The reference light data RD is used for this reconstruction. The light wave c_{S}(z=0) reconstructed on the hologram plane (z=0) is propagated to the principal plane position z_{E} by light wave propagation calculation after the principal plane position z_{E} described below is determined, and becomes the light wave c_{S}(z_{E}).

### (Determination of principal plane position z_{E}: Irradiation of known-dimension plane pattern)

In step S44, the flat mirror FM is replaced with an object 4 having a plane pattern of known dimensions. This object 4 is illuminated by illumination light Q that has been converted into parallel light through the collimating lens 25, as in the case of the flat mirror FM.

In step S45, the object light O including the reflected light from the plane pattern is recorded in the object light hologram I_{OR}.

In step S46, the object light wave g(z=0), which is the light wave of the object light O, is reconstructed from the object light hologram I_{OR} using the reference light data RD. A light propagation calculation is performed on the object light wave g, and the position z_{E} where the read value of the plane pattern dimension obtained at multiple propagation positions becomes a known dimension is determined as the principal plane position z=z_{E} of the collimating lens 25. This is explained, next.

The pattern image of the object 4 is reconstructed using the image reconstruction position z as a parameter. In the area (z_{P}<z<z_{E}) before passing through the principal plane z_{E} of the collimating lens 25, the illumination light Q is a spherical wave light, and the reconstructed image becomes larger in proportion to the distance (z-z_{P}). In contrast, in the area (z>z_{E}) after passing through the lens, the illumination light Q becomes a parallel light, and the reconstructed pattern image has a constant value whose size is independent of changes in distance (z-z_{E}). The principal plane z_{E} position can be determined as the value of the parameter z when the size of the reconstructed pattern image first becomes equal to the size of a known dimension (it can be obtained as the z coordinate of the intersection of two straight lines on a graph of the change in dimension).

### (Derivation of phase aberration distribution A: Post-processing by computer)

In step S47, the mathematical functional expression of the ideal spherical light wave b_{S}, emitted from the focal position z_{P} and spreading, is obtained at the principal plane position z_{E}. The ideal parallel light wave b_{P}=b_{S}·T at the principal plane position z_{E} is obtained by a phase conversion function T(z_{E}) that converts the ideal spherical light wave b_{S} into an ideal plane wave light. Specific examples of the functions b_{S} and T are shown below.

The light wave b_{S}(x, y, z) of the spherical wave illumination light Q emitted from the illumination light source S_{Q} (which is a point light source and is also called point light source S_{Q}) located at coordinates (x_{Q}, y_{Q}, z_{Q}) is expressed by following equation (10).${b}_{S} \left(x, y, z\right) = \frac{{b}_{0}}{{r}_{Q} \left(x, y, z\right)} exp \left[i2{πr}_{Q}\left(x, y, z\right)/λ\right]$ (10) Here, r_{Q}(x, y, z) = [(x - x_{Q})² + (y - y_{Q})² + (z - z_{Q})²]^{1/2}

Since the point light source S_{Q} is located near the z axis, x_{Q} and y_{Q} are sufficiently small compared to z_{E}, and for simplicity, the following explanation is given as x_{Q}=y_{Q}=0. An ideal lens that converts this spherical wave light into parallel light propagating in the positive direction of the z axis can be expressed using the phase conversion function T(x, y, z_{E}) of following equation (11). Similarly, when converting parallel light waves propagating in the negative direction of the z axis into spherical wave light, the phase inverse conversion function T⁻¹(x, y, z_{E}) of following equation (12) is used.$T \left(x,y{, z}_{E}\right) = exp \left[-i2{πr}_{P}\left(x,y{, z}_{E}\right)/λ\right]$ (11) ${T}^{- 1} \left(x,y{, z}_{E}\right) = exp \left[-i2{πr}_{P}\left(x,y{, z}_{E}\right)/λ\right]$ (12) Here, r_{P}(x, y, Z_{E}) = [x² + y² + (z_{E} - z_{P}]²]^{1/2}

### (Introducing the phase aberration distribution function A(x, y, z_{M}) as an unknown function)

In step S48, it is assumed that the wavefront aberration caused by the imperfection of the collimating lens 25 is acquired at the data acquisition position z = z_{M}, which is the position of the reflecting surface of the flat mirror FM. The phase aberration distribution function A(x, y, z_{M}) is set as the functional form of the wavefront aberration to be obtained, and is made the unknown function.

Using the phase aberration distribution A(x, y, z_{M}) obtained at position z_{M} after passing through the collimating lens 25, the aberrated parallel light wave b_{PA}(x, y, z_{M}) after passing through the lens is expressed by following equation (13). From the above equations (10) and (11), the ideal parallel light b_{P}(z_{E}) at the principal plane position is expressed by following equation (14). Therefore, the parallel light wave b_{PA}(x, y, z_{M}) affected by aberration at position z_{M} is expressed by following equation (15).${b}_{PA} \left(x,y{, z}_{M}\right) = {b}_{S} \left(x,y{, z}_{E}\right) T \left(x,y{, z}_{E}\right) A \left(x,y{, z}_{M}\right)$ (13) ${b}_{P} \left(x,y{, z}_{E}\right) = {b}_{S} \left(x,y{, z}_{E}\right) T \left(x,y{, z}_{E}\right) = \frac{{b}_{0}}{{r}_{Q} \left(x,y{, z}_{E}\right)}$ (14) ${b}_{PA} \left(x,y{, z}_{M}\right) = \frac{{b}_{0}}{{r}_{Q} \left(x,y{, z}_{E}\right)} A \left(x,y{, z}_{M}\right)$ (15)

### (Setting the equation)

In step S49, the reflected light wave b_{PA}=b_{S}·T·A, (at z_{M}) is multiplied by the inverse phase conversion function T⁻¹ and the wavefront aberration A, and the resulting mathematical expression b_{S}·T·A·T⁻¹·A, (at z_{E}) is set to be regarded as the mathematical expression corresponding to the light wave when the measurement light wave c_{S} (z = 0) is present at the principal plane position z_{E}. The light wave of this mathematical expression b_{S}·T·A·T⁻¹·A, (at z_{E}) is the light wave (reflected light wave) that is assumed to pass through the focal point F_{P} from the principal plane position z_{E} to the image sensor 5 and become the recorded hologram I_{CR} of the measurement light Lc.

### (Derivation of phase aberration distribution A)

In step S50, the mathematical expression b_{S}·T·A·T⁻¹·A is equated with the measurement light wave c_{S}(x,y,z_{E}) obtained by propagating the measurement light wave c_{S}(x,y,0) to the principal plane position z=z_{E} by light propagation calculation, to derive the phase aberration distribution A=(c_{S}/b_{S})^{1/2} as an unknown function. This is included in the wavefront aberration data WD along with other data related to the collimating lens 25.

By recording the reflected light O (measurement light Lc) from the flat mirror FM using the optical system in FIG. 21 and performing light wave propagation calculations on the light wave of the reflected light O, the light wave c_{S}(x,y,z_{E}) of the spherical wave light at the principal plane position z_{E} can be reconstructed.

On the other hand, the measurement light wave c_{S}(x, y, z_{E}) is a spherical wave like light that is generated after the distorted parallel light wave b_{PA}(x, y, z_{M}) is reflected by the flat mirror FM and then passes backward through the collimating lens 25.

Assuming that the flat mirror FM is an ideal flat mirror with no bending, this spherical wave light wave can be expressed as following equation (16) using the inverse transformation function T⁻¹(x, y, z_{E}) at the collimating lens 25 and the phase aberration distribution A(x, y, z_{M}). The phase aberration distribution A(x, y, z_{M}) of following equation (17) can be obtained from equations (14), (15), and (16). In this way, the phase aberration distribution A(x,y,z_{E}) can be expressed using the light wave b_{S}(x,y,z_{E}) of the spherical wave illumination light Q at the position z_{E} and the light wave c_{S}(x,y,z_{E}) of the reflected light O (measurement light Lc).${c}_{S} \left(x,y{, z}_{E}\right) = {b}_{PA} \left(x,y{, z}_{M}+\left({z}_{M}-{z}_{E}\right)\right) {T}^{- 1} \left(x,y{, z}_{E}\right) A \left(x,y{, z}_{M}\right)$ (16) $A \left(x,y{, z}_{M}\right) = {\left[\frac{{c}_{S} \left(x,y{, z}_{E}\right)}{{b}_{S} \left(x,y{, z}_{E}\right)}\right]}^{1 / 2}$ (17)

According to the wavefront aberration data acquisition method of this embodiment, the wavefront aberration data (WD), which is information on the collimating lens 25, can be acquired with high accuracy based on the fact that the incident and exiting light of the collimating lens 25 (collimating element E_{coll}) can be spherical wave light and plane wave light, and the object light is propagated by light wave propagation calculation.

### (Fifteenth embodiment: parabolic mirror type collimating element, wavefront converting element)

An imaging device according to the fifteenth embodiment is described with reference to FIG. 23. The imaging device 1 of this embodiment is an imaging device that uses a parabolic concave mirror 26 as a collimating element E_{coll} instead of the plano-convex lens type collimating lens 25 in the imaging device 1 of FIG. 19. The collimating lens 25 is a transmission type optical element, and the parabolic concave mirror 26 is a reflection type optical element. By using the parabolic concave mirror 26, an optical system can be configured to create large-diameter parallel illumination light and collect and record large-diameter reflected light.

The imaging device 1 of this embodiment is provided with a reflecting mirror M on the optical path connecting the parabolic concave mirror 26 and the focal point F_{P}. From an optical point of view, the optical paths of the illumination light Q, object light O, and reference light R in this imaging device 1 are equivalent to those in the imaging device 1 using the collimating lens 25. In addition, both imaging devices 1 have the same optical system, except for the reflecting mirror M on the optical path connecting the parabolic concave mirror 26 and the focal point F_{P}. Therefore, the method of acquiring wavefront aberration data in the imaging device 1 of this embodiment can be performed in the same manner as in the imaging device 1 of FIG. 19, and wavefront aberration data WD can be acquired.

However, when imaging the object 4, i.e., acquiring a hologram, or measuring the surface shape, it must be considered that the presence of the reflecting mirror M causes shadow parts that are not imaged. To image the shadow parts, the object 4 is simply shifted within the same plane and can be imaged.

According to the imaging device 1 of this embodiment, the parabolic concave mirror 26 is used as the wavefront converting element E_{X} to record a large-diameter object light O in a small-diameter hologram, and the wavefront aberration data WD is used to remove the effect of the wavefront aberration caused by the parabolic concave mirror 26, thereby reconstructing an accurate object light wave. Therefore, a large-area flat plate or the like can be imaged without being limited to the size of the light receiving surface 50 of the image sensor 5, and an object light wave with little aberration can be reconstructed. In addition, the parabolic concave mirror 26, which condenses light by reflection, is different from the lens condensing light by transmitting the light through a medium having a refractive index different from that of the outside separated by two boundary surfaces, and therefore, the parabolic concave mirror 26 is easy to make large but not heavy, and possible to image larger objects and measure their surface shapes.

### (Sixteenth embodiment: imaging device comprising noise processing unit)

An imaging device according to the 16th embodiment is described with reference to FIG. 24. The imaging device 1 of this embodiment is the same as the imaging device 1 of FIG. 19 except that the control unit 10 is provided with a noise processing unit 13. The noise processing unit 13 includes an imaging processing unit 13a and a statistical processing unit 13b.

The imaging processing unit 13a is provided with a configuration of facilitating imaging and storage of multiple object light holograms I_{OR} using the image sensor 5 while maintaining constant imaging conditions. For example, imaging can be achieved using the continuous shooting mode of a normal camera.

The statistical processing unit 13b is provided with a configuration of generating a single object light hologram with reduced image noise or a reconstructed object light wave by performing calculation processing using a statistical method on the data of the captured multiple object light holograms I_{OR}.

The imaging device 1 of this embodiment can efficiently reduce noise that can be reduced using a statistical method, such as shot noise. In addition, it can measure changes and deformations of an object over time.

### (Seventeenth embodiment: object light synthesis and noise reduction method)

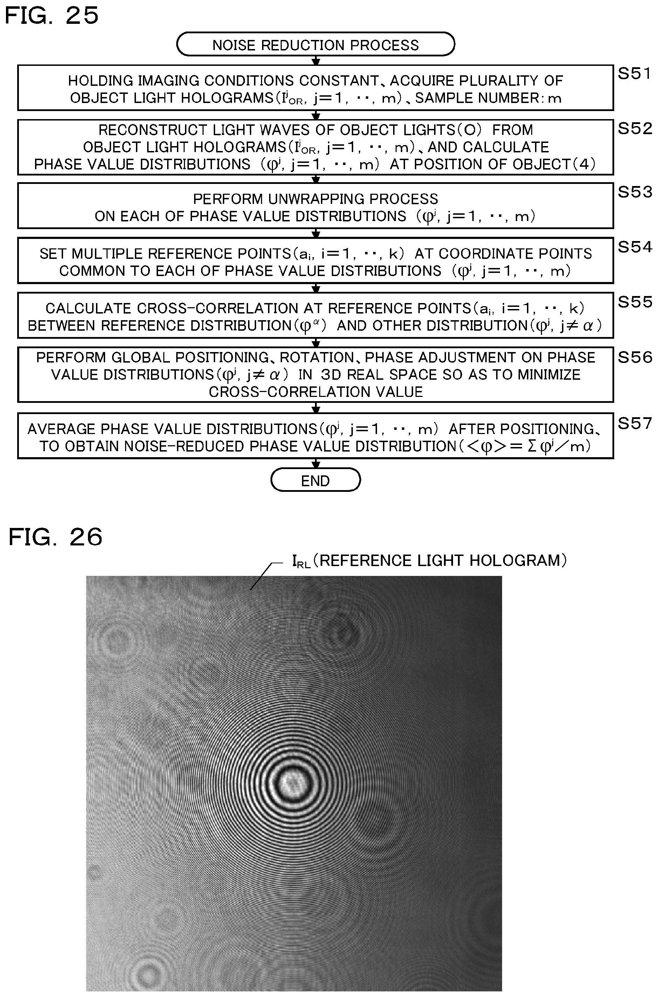

A noise reduction method according to the 17th embodiment is described with reference to FIG. 25. This noise reduction method can be applied to the imaging device 1 of FIG. 24, and reference is made to FIG. 24 as well. The main type of noise that occurs in the image sensor 5 is shot noise, which is the main cause of reduced measurement accuracy in surface shape measurement. This shot noise is random noise, and the spatial frequency components of the noise are uniformly distributed over a wide band. Effective methods for reducing shot noise are a statistical method of synthesizing multiple object light waves, since the noise is random, and a method of narrowing the spatial frequency bandwidth of the distributed light waves, since the noise is uniformly distributed over a wide band.

Here, noise reduction using a statistical method ls explained according to the flowchart in FIG. 25. Random noise can be reduced by averaging a large number of samples, i.e., by a statistical method.

In step S51, the imaging conditions are kept constant and the acquisition of the object light hologram I_{OR} by the image sensor 5 is repeated to obtain a sample number m of object light holograms I^{j}_{OR}, j=1, ..., m.

In step S52, the reference light data RD is used to remove the component of the reference light R from the object light hologram I^{j}_{OR}, j=1, ..., m to reconstruct the light wave of the object light O, and calculate the phase value distributions φ^{j}, j=1, ..., m at the position of the object 4.

In step S53, an unwrapping process is performed on the phase value for each of the phase value distributions φ^{j}, j=1, ..., m.

In step S54, multiple reference points aⁱ, i=1, ..., k are set at coordinate points common to the distributions in each of the phase value distributions φ^{j}, j=1, ..., m. When m object lights, which are recorded and reconstructed m times on the same measurement target surface, are synthesized at the object position z=z_{O}, it is necessary to match the global inclination of each measurement surface with each other, and match the optical phase at the reference point common to each object light with each other. If at least three reference points (n=3) are set, a plane can be set. If the number of reference points is more than three, a virtual surface including each reference point aᵢ is set. The virtual surfaces set for each phase value distribution φ^{j} are superimposed on each other to perform an averaging process of the phase values.

The phase value at each of the multiple reference points aᵢ, i=1, ..., k is preferably the average value of the phase values of multiple points (N points) in the vicinity of or around each reference point aᵢ, and the multiple points (N points) are preferably greater than the number of sample sheets m, i.e., N>m. In other words, the average value of the optical phase at N sampling points in the vicinity of each reference point is calculated, and this value is used as the optical phase value at each reference point. When the number of points N and the number of sheets m satisfy N>m, this averaging process can reduce the effect of noise at each reference point, eliminate the effect of random noise, and enable more rational and stable processing.

In step S55, the cross-correlation is calculated for phase values at multiple reference points aᵢ, i=1, ..., k between a reference phase value distribution φ^{α} selected from the phase value distributions φ^{j}, j=1, ..., m and other phase value distributions φ^{j}, j≠α.

In step S56, rotations and phase adjustments (phase shifts) are performed on the phase value distributions φ^{j}, j≠α in the three-dimensional phase coordinate space so that the calculated cross-correlation value is minimized, and the global tilt between each phase value distribution is aligned. The rotations are performed by a rotational transformation of the light wave distribution around the x-axis and y-axis, respectively. This rotation causes the tilt of the virtual plane to match with respect to each reconstructed surface.

In step S57, the data of the rotationally positioned phase value distribution φ^{j}, j=1, ..., m is averaged to obtain a noise-reduced phase value distribution <φ>=Σφ^{j}/m.

### (Other noise reduction methods)

As another method for reducing shot noise, which is the main noise generated in image sensors, a method for reducing noise by narrowing the spatial frequency bandwidth of light waves in spatial frequency space when deriving a light wave distribution is described.

When calculating object light waves g^{j}, j=1, ..., m from object light hologram I^{j}_{OR}, j=1, ..., m, bandpass filtering is performed in the spatial frequency space to narrow the band of spatial frequencies used to reconstruct the object light waves. This makes it possible to reduce the noise contained in the reconstructed light waves.

This method can be more effective when combined with the noise reduction method using a statistical method in which multiple object light waves are synthesized and averaged as described above. Here, the number of holograms used for synthesis is m. The degree to which the band is narrowed is expressed by the index n, using the expression that the bandwidth of the spatial frequency filter is reduced to 1/n (reduction ratio 1/n).

For such (m, n), the amplitude of random noise is (m×n²)^{-1/2} times, and the noise amplitude is reduced. Therefore, for example, if (m=1, n=2) or (m=4, n=1), the noise amplitude is reduced to 1/2 (see the example described later).

According to the noise reduction method of this embodiment, global alignment is performed by rotating and phase adjusting of multiple phase value distributions obtained from multiple samples, and statistical processing is performed based on averaging between the distributions, so random noise can be effectively reduced. In addition, by combining those with a noise reduction method that narrows the spatial frequency bandwidth, noise can be reduced more efficiently.

### (Eighteenth embodiment: imaging device with aperture)

The imaging device 1 according to the 18th embodiment of the present invention is a holographic imaging device that images an object 4 in a manner that allows light waves to be reconstructed, comprising: an illumination light source S_{Q} that emits an illumination light Q, a reference light source S_{R} that emits a reference light R that generates interference fringes with an object light O emitted from the object illuminated by the illumination light Q, an image sensor 5 that acquires data on the interference fringes as an object light hologram I_{OR}, and an aperture Ap that limits the azimuth distribution of the object light O entering the image sensor 5.

The imaging device 1 is a device that reconstructs images of the object 4 from the object light hologram I_{OR} by any of the phase shift method, off-axis method, inline method, or a combination of these methods in holography.

### (Nineteenth embodiment: Device manufactured using the imaging device and the method according to the present application)

The device according to the 19th embodiment of the present invention is a device manufactured using at least one of the imaging device 1, reference light data acquisition method, and light wave reconstruction method described above.

The present invention includes programs used by the imaging device, reference light data acquisition method, and light wave reconstruction method according to the present invention described above, electronic media recording the programs, and devices executing the programs. The present invention also includes a system configuration in which the imaging device, reference light data acquisition method, and light wave reconstruction method according to the present invention described above are connected by wire, wirelessly, in a nearby integrated configuration, or remotely.

### (Example 1: Reference light data acquisition method, reference light hologram)

An example of a reference light data acquisition method is described with reference to FIG. 26 and FIGS. 3A and 3B. FIG. 26 shows a partially enlarged image of a hologram I_{RL} of interference fringes of the reference light R and the auxiliary light L, recorded using the optical system of FIG. 3B.

The angles of the cube-type beam splitter 3 and the image sensor 5 were adjusted using the optical system of FIG. 3A, and the interference fringes I_{RL} created by the auxiliary light L and the reference light R were recorded, i.e., imaged, using the optical system of FIG. 3B. This imaging was made to acquire data of the reference light R by recording the reference light R using the auxiliary light L.

The auxiliary light L is a perpendicularly incident parallel light, and the reference light R is a spherical wave light. A red semiconductor laser (light wavelength 638 nm, output 40 mW) was used as the laser light source for these lights. The auxiliary light L was a parallel light of expanded beam size obtained by shaping a spherical wave light emitted from an end of an optical fiber using an appropriate optical element. The reference light R was an spherical wave light emitted from an end of an optical fiber, which was used as an off-axis reference light. The image sensor 5 for hologram recording was a monochrome CMOS camera with 4096 x 4096 pixels and a pixel pitch of 6.4 µm.

In the optical system of FIG. 3B, the end of the fiber was placed about 90 mm in front of the image sensor 5 to serve as the reference light source S_{R}. The interference fringes created by the auxiliary light L and the reference light R were recorded as the reference light hologram I_{RL}. FIG. 26 is a partial enlarged view of the recorded interference fringe hologram. Newton's rings consisting of concentric circles can be confirmed, and two coordinates (x_{R}, y_{R}) of the three coordinates (x_{R}, y_{R}, z_{R}) of the reference light condensing point P_{R} are the x and y coordinates of the center point of the Newton's rings.

In the optical system of this embodiment, the numerical aperture NA of the hologram with 4096 x 4096 pixels is 0.131, the theoretical resolution δ determined by the light wavelength and numerical aperture NA is 2.43 µm, and the focal depth is 18.5 µm. Under such an optical system, the phase information of the reference light R, which is spherical wave light, is recorded in the reference light hologram I_{RL} as accurate and huge hologram data.

The recorded reference light hologram I_{RL} was subjected to a predetermined process to obtain the reference light data RD. That is, the hologram I_{RL} was divided by a phase component of a proximate spherical wave R₁ to move the recorded component of the spherical wave like light R to low frequency range, and then spatial frequency filtering was performed to extract the component of the reference light R, and then the extracted component was multiplied by the phase component of the proximate spherical wave R₁ to obtain the reference light data RD. Specifically, the reference light data RD is the light wave information of the reference light R, and is data on the phase distribution of the reference light R at the hologram plane z=0.

The position coordinates of the reference light condensing point P_{R}, which is the condensing point of the reference light R, were calculated by using the obtained reference light data RD and performing a light wave propagation calculation of the reference light R. By using light wave propagation calculation, the coordinates (x_{R}, y_{R}) of the reference light condensing point P_{R} were calculated with an accuracy of 1/10 of the resolution δ or less, and the z coordinate (z_{R}) was calculated with an accuracy of 1/10 of the focal depth or less.

### (Example 2: imaging device, imaging and reconstruction of USAF target)

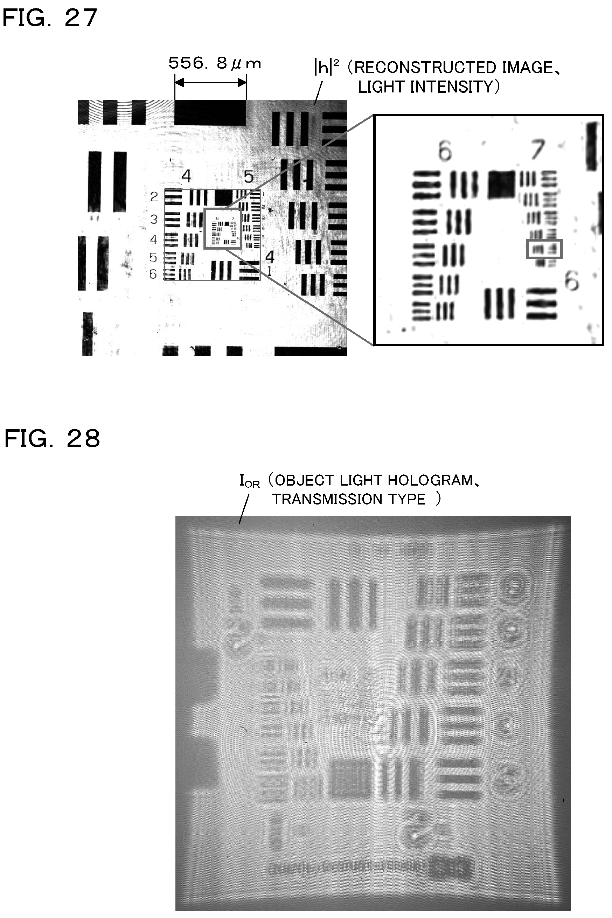

An example of an imaging device is described with reference to FIG. 27. FIG. 27 shows an image, of the light intensity of an object light at the position of an USAF target, reconstructed from a hologram I_{OR} recorded by imaging a transmitted light of the USAF target as the object light using the imaging device 1 of FIG. 7.

The imaging device 1 has an optical system like the optical system shown in FIG. 3B but from which the cube-type beam splitter 3 is removed. The reference light data RD in the optical system of this imaging device has already been acquired by the optical systems of FIGS. 3A and 3B. The USAF test target was placed as the object 4 to be imaged at a position about 90 mm forward from the image sensor 5 of CMOS camera, and the interference fringes, created by the reference light R and the object light O being the light transmitted through the object 4, were recorded as an off-axis object light hologram I_{OR}.

The recorded object light hologram I_{OR} was subjected to a predetermined processing to reconstruct the object light on the target surface. That is, a complex amplitude object light hologram J_{OR} was extracted from the hologram I_{OR} through spatial frequency filtering, and a light wave g of the object light O was obtained by subtracting the phase component of the reference light R from the phase distribution of the complex amplitude object light hologram J_{OR} using the reference light data RD. A light wave propagation calculation was performed on the obtained light wave g, and the light wave g was propagated to the target surface position to reconstruct the object light, and the light intensity image in FIG. 27 was obtained.

In reconstructing the object light, a pixel number increased object light wave g was obtained by increasing the number of pixels of the object light hologram J_{OR} by the processing of steps S11 to S15 in FIG. 12. In order to perform accurate light wave propagation calculations, the sampling interval must be set to the theoretical resolution δ=2.43 µm or less, so the sampling interval in the light wave propagation calculation was set to 1/4 of the pixel pitch p=6.4 µm. This corresponds to the case where m in FIG. 15 is m=4. After that, the pixel number increased object light wave g was propagated to the object position using a plane wave expansion, and the object light wave h at the object position was obtained. In this case, the light wave propagation calculations were performed with n in FIG. 16 set to n=1.

A light intensity image was obtained from the reconstructed object light wave h, and the followings were confirmed.
(1) The entire target surface was in focus.
(2) The rectangle overwritten in the center of the left-hand image and the outline of the image pattern within the rectangle matches, resulting in a reconstructed image without distortion.
(3) The actual dimension of the upper edge pattern of the left-hand image, 556.8 µm, matches the known target pattern dimension.
(4) In the right-hand image, which is cut out from the center of the left-hand image and enlarged, the pattern surrounded by a horizontally long rectangle shows a pattern close to the resolvable limit. The known line width of these patterns, 2.46 µm, is almost equal to the theoretical resolution of 2.43 µm.

The above confirmed facts show that the recording and reconstruction of the object light were performed accurately by both the imaging device 1 of the configuration shown in FIG. 7 used for imaging and the reference light data RD used for reconstruction. In particular, the excellent result of object light reconstruction confirms that the reference light data measurement method in this technology can obtain, with high accuracy, the reference light data RD including reference light wave information RI and reference light condensing point information PI.

### (Example 3: Recording and Reconstruction of a Large USAF Test Target)

An example of an imaging device is described with reference to FIGS. 28, 29, 30, and 18. FIG. 28 is an image of a hologram I_{OR} recorded using the imaging device of FIG. 18 with the transmitted light of a large USAF target as the object light. FIG. 29 is an image of the spatial frequency spectrum of the hologram I_{OR} of FIG. 28. FIG. 30 is a light intensity image of the object light at the position of the large USAF target, reconstructed from the hologram I_{OR} of FIG. 29.

The optical system of the imaging device shown in FIG. 18 was used to record the interference fringes I_{OR} created by the off-axis spherical wave reference light R and object light O. A red semiconductor laser (light wavelength λ=643 nm, output 40 mW) was used as the laser light source. The illumination light Q and reference light R were each a spherical wave light emitted from a light source formed by an end of an optical fiber connected to the laser light source.

For the image sensor 5 for hologram recording, a monochrome CMOS camera with 4096 x 4096 pixels of a pixel pitch 6.4 µm is used, and interference fringes with 2048 x 2048 pixels were recorded. A circular aperture Ap with a diameter of 5 mm and an end of an optical fiber serving as the light source of the off-axis reference light R were both placed about 100 mm in front of the image sensor 5. A large USAF test target was placed about 600 mm from the circular aperture Ap as the object 4, and the object 4 was illuminated with an illumination light Q focused by a lens 24 so that it passes through the object 4.

The numerical aperture NA of the recorded hologram I_{OR} as viewed from the position of the aperture Ap is calculated to be NA=0.0655. The theoretical resolution δ is δ=4.91 µm, calculated from the light wavelength λ and the numerical aperture NA. The numerical aperture NAa of the circular aperture Ap as viewed from the test target position is calculated to be NAa=0.0042. The theoretical resolution δa in this case is δa=94.1 µm, calculated from the light wavelength λ and the numerical aperture NAa.

FIGS. 28 and 29 are images of the recorded interference fringes I_{OR} and its spatial frequency spectrum G, with 2048 x 2048 pixels, respectively. The outer circular dashed line 81 in FIG. 29 indicates the position of the diffracted light component generated at the edge of the circular aperture Ap. The inner circular dashed line 82 indicates the area containing the object light component. Circular spatial frequency filtering was performed to extract only the data inside this circular dashed line 82. This makes it possible to remove low frequency components and conjugate components, as well as diffracted light components generated at the aperture edges, from the recorded hologram, and a complex amplitude object light hologram J_{OR} containing only the object light that passed through the aperture Ap were extracted.

Next, the phase component of the reference light R was subtracted from the phase components of the extracted complex amplitude object light hologram J_{OR}, and the object light for light wave reconstruction was obtained. The phase component of the reference light R is provided from the reference light data RD acquired in advance.

FIG. 30 shows an image of a large USAF test target reconstructed at the position of object 4 by propagating the object light wave to the position of object 4 using light wave propagation calculations. In order to perform accurate light wave propagation calculations, the sampling interval needs to be less than the theoretical resolution δ=4.91 µm, so the sampling interval in the light wave propagation calculations was set to 1/2 of the pixel pitch p=6.4 µm. This corresponds to the case where m in FIG. 15 is m=2.

Also, since the size of the hologram is 13.1 mm and the size of the test target is 76.2 mm, it is necessary to reconstruct an image that is about 6 times larger. Therefore, the light propagation calculations were performed using a calculation area with 32768 x 32768 pixels, which is 16 x 16 times larger in vertical x horizontal size than the number of hologram pixels. This corresponds to the case where n in FIG. 16 is n=8. Therefore, m x n=2x8=16 times.

The following was confirmed from the reconstructed light intensity image shown in FIG. 30.
(1) The entire target surface is in focus.
(2) The large rectangle overwritten with a dashed line in the center of the left-hand image and the outlines of each pattern adjacent to the rectangle inside it are in contact with each other, resulting in a reconstructed image without distortion.
(3) The dimension of the reconstructed image, 10.0 mm, indicated by double arrows between the outer walls of the three patterns in the image, matches the known dimensions of the USAF test target being imaged.
(4) The image within the horizontal rectangle drawn with solid lines in the enlarged image shown on the right-hand shows a pattern close to the resolvable limit. The line width of this pattern, 99.2 µm, is approximately equal to the theoretical resolution δa=94.1 µm.

These facts demonstrate that hologram recording and image reconstruction can be performed accurately by a series of techniques according to the present invention, in which using a light from an end of an optical fiber as a spherical wave reference light R, using an imaging device having an aperture Ap, imaging a USAF test target that is an object larger than the image sensor 5, and reconstructing a light wave using the reference light data RD obtained separately.

### (Example 4: Measurement of optical phase aberration caused by a collimating lens)

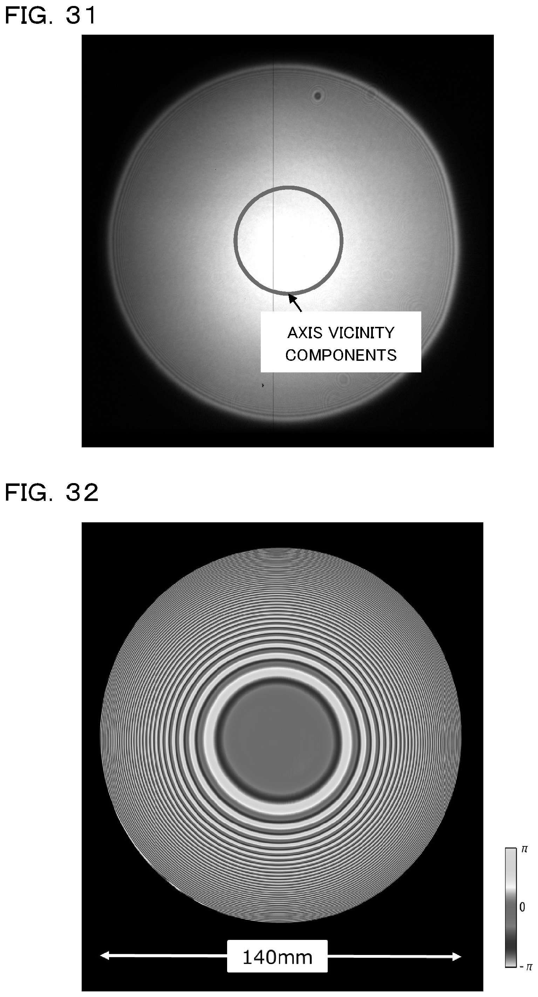

An example of an imaging device is described with reference to FIGS. 31 and 32. FIG. 31 shows a light intensity distribution reconstructed from an image of an illumination light Q reflected from a flat mirror FM, in which the image was captured using the imaging device 1 of FIG. 21, in which a flat mirror 25 (sic) was placed as the object 4 in the optical system of the imaging device 1 of FIG. 19. The focal position z_{P} of the collimating lens 25 in the 14th embodiment was determined using a light wave formed with the axis vicinity components in the center.

FIG. 32 shows the measurement results of the light wave phase distribution generated by the collimating lens 25 with a diameter of 150 mm using the optical system of FIG. 21. A solid laser with a light wavelength of 532 nm was used as the laser light source for measurement. The phase difference distribution was obtained based on the center of the lens. As shown in the figure, the phase difference distribution is axially symmetric. In the optical system as shown in FIG. 21, it is not very difficult with current technology to make a spherical wave Q from the illumination light source S_{Q} into an ideal spherical wave. However, it is difficult to create an ideal collimating lens 25 with a large diameter.

If the collimating lens 25 were a completely ideal lens, the phase difference distribution in FIG. 32 would be a distribution of the same phase difference in all of the field of view, so it would be a uniform figure having no annular patterns. The measurement results reflect the imperfection of the collimating lens 25, and show that the change in phase difference is small at the center, and the change in phase difference becomes larger and denser as it approaches the periphery.

### (Example 5: Measuring wafer flatness)

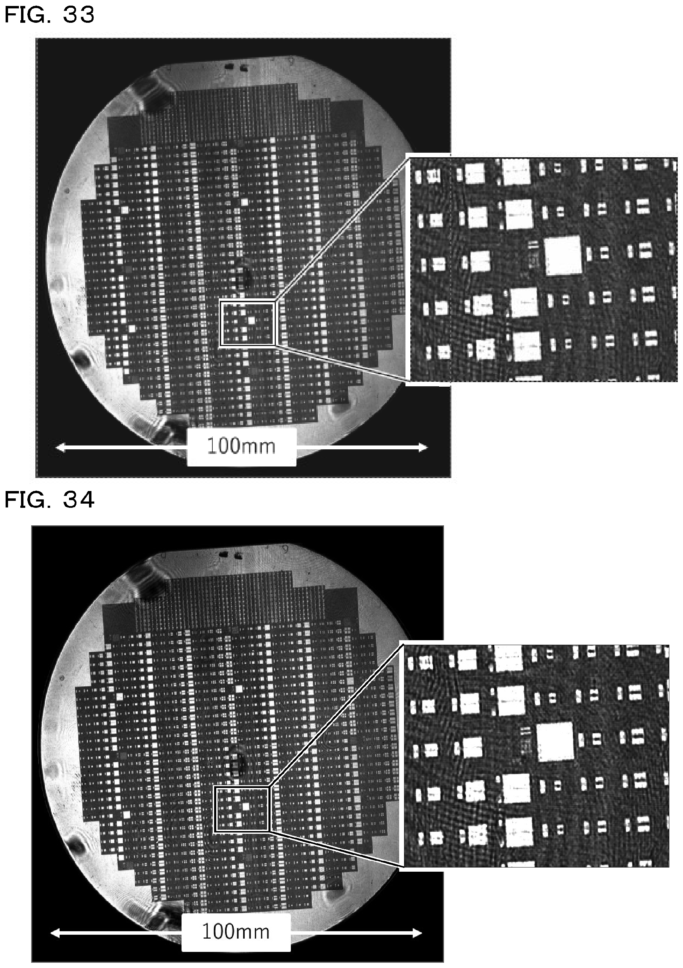

An example of an imaging device is described with reference to FIG. 33. FIG. 33 shows the results of measuring the flatness of a 4-inch Si wafer using the optical system of the imaging device in FIG. 19. The height distribution of the measured surface is shown by the phase difference distribution of the light waves. A semiconductor laser with a light wavelength of 643 nm was used as the measurement laser light source. This measurement result is a phase difference image between the reconstructed illumination light and the reconstructed reflected light. It corresponds to equation (9), t(x, y, z_{O}), which represents the height distribution in the 13th embodiment.

The phase difference image in FIG. 33 shows that the surface is curved, and the PV (peak to valley) value for height is about 10λ. In addition, a height change of about λ/2 can be confirmed in the peripheral part of the Si wafer.

### (Example 6: Measurement of the surface shape of a printed wafer)

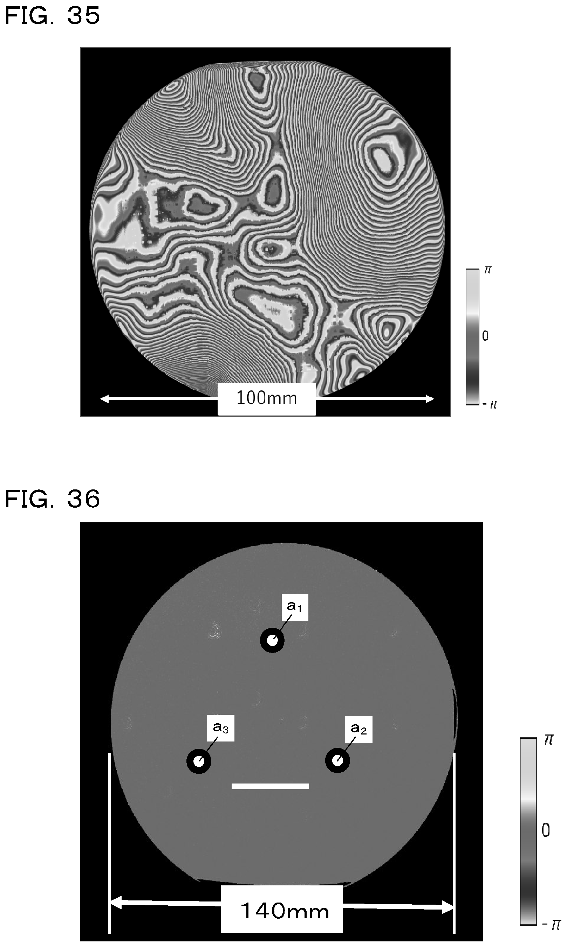

An example of surface shape measurement is described with reference to FIGS. 34 and 35. FIG. 34 shows a light intensity image of the wafer surface, which is imaged as a hologram using the imaging device 1 in FIG. 19 with a semiconductor laser light of a wavelength of 643 nm. The wafer surface is a surface of a 4-inch Si wafer on which a pattern has been printed by resist exposure. The light intensity image was made by reconstructing the light wave from the hologram and calculating the effect of the wavefront aberration caused by the collimating lens 25 on the light wave.

FIG. 35 shows the measurement result of the phase difference distribution calculated from the phase distribution of each light wave of the reconstructed illumination light and the reconstructed reflected light on the wafer surface obtained from the light wave that obtained the light intensity image in FIG. 34.

The light intensity image and its partially enlarged image show that the printed pattern on the wafer is reconstructed with high resolution. The phase difference image also shows that the wafer surface is curved by about 10λ. In addition to the results shown in FIGS. 34 and 35, a surface shape measurement was performed using two laser lights with different wavelengths, and it was found that the thickness of the printed pattern is about 7 µm.

### (Example 7: Object light Synthesis and Noise Reduction)

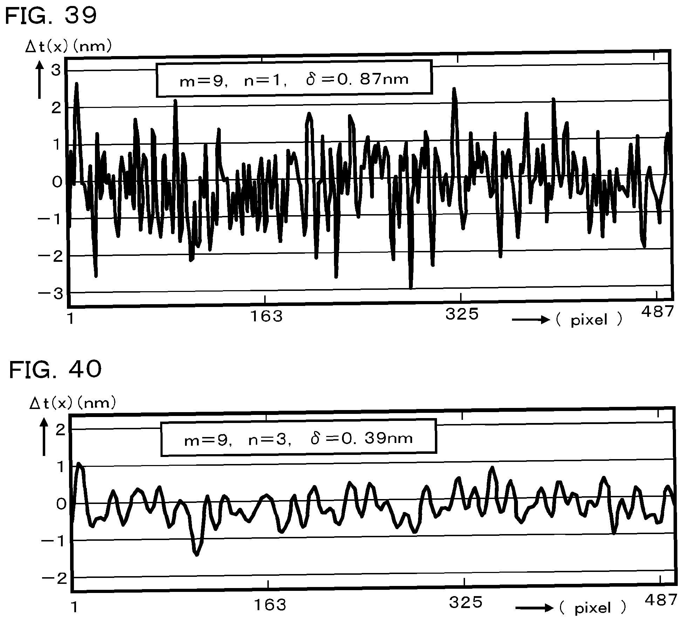

With reference to FIGS. 36 to 40, an example of a noise reduction method using statistical processing (m=maximum 9) and band narrowing processing (n=maximum 3) is described.

FIG. 36 shows an example of multiple (m=9) optical phase difference distributions obtained by processing multiple object light holograms of the surface of an optical flat (object 4) imaged using the imaging device of FIG. 19 while maintaining constant imaging conditions, by taking into account the wavefront aberration caused by the collimating lens 25. In the figure, a plurality (k=3) of reference points a1, a2, a3 set for statistical processing, and a noise evaluation axis (white line) are shown.

An optical flat was used as the object 4, which has a flatness accuracy of λ/20 or less for light with a wavelength of 633 nm. A semiconductor laser with a wavelength of 785 nm was used as the measurement laser light source. The object light (reflected light) from the optical flat was sequentially recorded in holograms (number of samples m = 9 times). In addition, the frequency bandwidth of the object light was narrowed by spatial frequency filtering (reduction ratio 1/n, n = 1, 3). The resolution value of the reconstructed image changes inversely proportional to the spatial frequency bandwidth.

In noise reduction by statistical processing, when the reference points aᵢ are three points, a plane (with zero curvature) is determined as a virtual surface. Therefore, the unwrapped optical phase distribution on the line connecting each fixed point was integrated, and the light wave was rotated around the x-axis and y-axis so that the integral value of the optical phase became zero. This rotation made the inclination of the virtual plane with respect to each reconstructed surface consistent, and then an averaging process was performed to reduce noise.

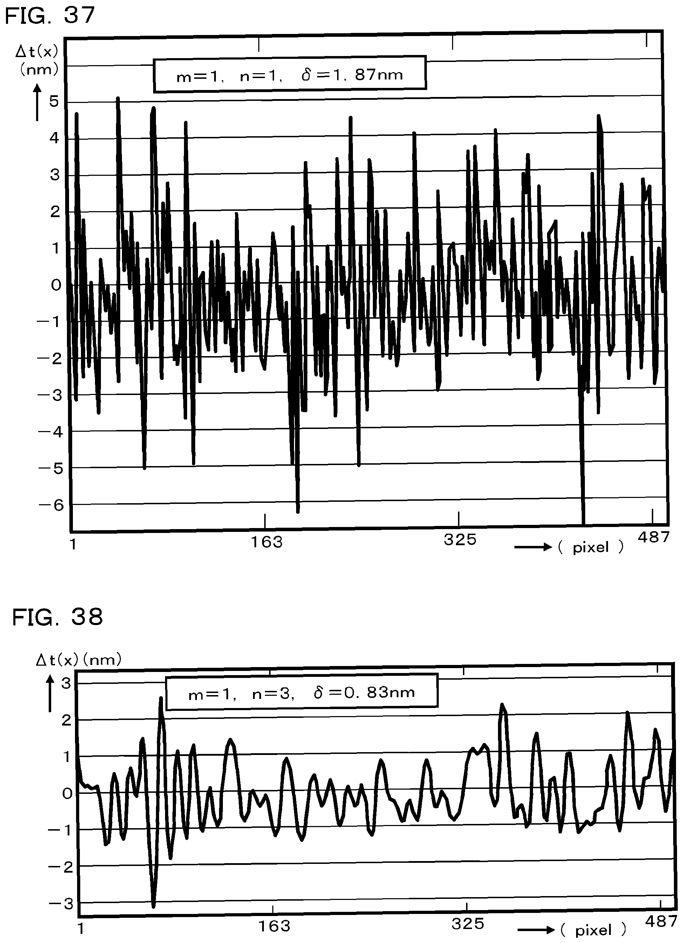

In this embodiment, the distribution of errors due to noise was evaluated by the distribution of optical phase difference. Here, the distribution of optical phase difference is the distribution of phase difference between two reconstructed object lights, or the distribution of phase difference between two composite object lights. FIGS. 37 to 40 show the height error Δt (nm) caused by noise on the noise evaluation axis (white line) shown in FIG. 36. The error deviation δ becomes smaller with an increase in parameters m and n, indicating that both object light wave synthesis (statistical noise processing) and spatial frequency filtering (noise processing by frequency band reduction) are effective in reducing noise.

### INDUSTRIAL APPLICABILITY

The following points can be cited as novelties and advantages of the imaging device, reference light data acquisition method, and optical wave reconstruction method of the present invention over conventional digital holography.
(1) The imaging device having reference light data acquired in advance, which is necessary for light wave reconstruction from the imaged or recorded object light hologram, can realize a simple and compact imaging device that integrates the reference light source, the image sensor, and the reference light data.
(2) The imaging device of (1) above is portable and easy to operate, and can be used like a camera, by incorporating the reference light source and the image sensor and including the dark box having an opening that limits the azimuth angle distribution of the object light.
(3) The reference light data acquisition method using analytically expressible auxiliary light can acquire definite reference light data without ambiguity, and the configuration of the reference light source and the image sensor that implements this acquisition method can be used in the imaging device.
(4) The reference light data acquisition method of (3) above can be applied when assembling the imaging device or after starting to use the imaging device to acquire reference light data.
(5) The light wave reconstruction method that reconstructs the object light wave from the hologram acquired by the optical system that does not include the optical element that causes aberration such as a lens, without using approximation calculations or iteration calculations, can accurately reconstruct the light wave without distortion or ambiguity.
(6) The imaging device, having the aperture that limits the azimuthal distribution of the object light and images the object in a manner that allows light waves to be reconstructed, can image the object using the reference light source and the aperture that are fixed in position relative to the image sensor, regardless of the distance from the imaging device.

The present invention can therefore be applied to a wide range of applications that take advantage of these advantages in the fields of optics, digital holography, optical measurement, interference measurement, and micro-shape measurement. From the viewpoint of technical applications, the present invention can be widely applied to applications in fields such as precision measurement, nanotechnology, substrate shape measurement, semiconductor substrate inspection, optical component inspection, environmental monitoring, defense, and crime prevention, indoors, outdoors, and in space. Devices and methods using wavefront converting elements such as collimating lenses can be widely applied to applications such as flatness and surface shape measurement, and detection of scratches, impurities, dust, etc., of various large-area semiconductor substrates, liquid crystal substrates, photomasks, high-precision machined parts, and optical components, and can be applied to the incorporation of measurement and detection devices into manufacturing lines.

In addition, the present invention can be applied to applications such as chronological inspection of the situation when bonding substrate layers together.

In addition, the present invention can be applied to applications such as inspection of the polishing situation on the surface of polished metal, etc.

In addition, the present invention can be applied to objects through which at least a portion of light does not pass.

### EXPLANATIONS OF LETTERS OR NUMERALS

- 1: Imaging device
- 2: Optical system
- 21, 22: Optical fiber
- 25: Collimating lens, Convex lens
- 26: Parabolic concave mirror
- 3: Beam splitter (BS)
- 4: Object (image subject)
- 5: Image sensor
- 50: Light receiving surface (Hologram plane)
- 6: Dark box (Housing)
- 7: Computer
- 71: Arithmetic processing unit
- 71a: High frequency component processing unit
- 9: Coherent light source
- 9a: Mask
- 9b: Hole
- 10: Control unit
- 11: Memory unit
- 12: Object light reconstruction unit
- 12a: Diffracted light component eliminating unit
- 13: Noise processing unit
- 13a: Imaging processing unit
- 13b: Statistical processing unit
- A, A(z, y, z_{M})(sic): Phase aberration distribution function
- Ap: Aperture
- E_{coll}: Collimating element
- E_{X}: Wavefront converting element
- FM: Flat mirror
- F_{P}: Focal point
- G: Spectrum
- G_{EX}: Enlarged spectrum
- G₀: Zero value space
- I_{CR}: Measurement light hologram
- I_{OR}: Object light hologram
- I_{RL}, I_{LR}: Reference light hologram
- I_{LR3}: Mediating light hologram
- I_{RR3}: Reference light hologram
- J_{OR}: Complex amplitude object light hologram
- J_{RR1}: Complex amplitude reference light hologram
- J_{RR2}(sic): In-line complex amplitude reference light hologram(sic)
- K_{OR2}: Pixel number increased complex amplitude object light hologram
- L: Auxiliary light
- Lc: Measurement light
- LD: Auxiliary light data
- M: Reflecting mirror
- N: Number of samples around the reference point
- O: Object light
- P_{Q}: Illumination light condensing point
- P_{R}: Reference light condensing point
- PA: Parameter
- PI: Condensing point information
- P₁: Proximate point light source
- Q: Illumination light
- R: Reference light
- R₁: Proximate spherical wave light
- R₂: In-line reference light (spherical wave light)
- R₃: Mediating light (off-axis reference light)
- RD: Reference light data
- RI: Reference light wave information (phase distribution)
- S_{Q}: Illumination light source
- S_{R}: Reference light source
- T, T(z_{E}): Phase conversion function
- WD: Wavefront aberration data
- b_{P}: Ideal parallel light wave
- b_{PA}: Ideal parallel but distorted light wave, Reflected light wave
- b_{S}: Ideal spherical light wave
- c_{S}: Measurement light wave (spherical wave like light)
- g: Object light wave, Pixel number increased object light wave
- g_{EX}: Enlarged object light wave
- g_{R}: Reference light wave
- g₀(sic): Zero value space
- h: Object light wave
- m: Number of samples
- x_{R}, y_{R}, z_{R}: Coordinates of reference light condensing point
- zₐ: Z coordinate of aperture
- z_{E}: Principal plane position
- z_{M}: Flat mirror position, data acquisition position, data application position
- z_{O}: Object position
- z_{P}: Focal position

## Claims

1. An imaging device using holography, comprising:
an illumination light source emitting an illumination light to illuminate an object to be imaged;
a reference light source emitting a reference light that generates interference fringes with an object light emitted from the object illuminated by the illumination light;
an image sensor acquiring data of the interference fringes between the object light and the reference light as an object light hologram; and
reference light data being data of the reference light used to reconstruct a light wave of the object light from the object light hologram.

2. The imaging device according to claim 1, wherein
the reference light data is data of reference light wave information representing a light wave of the reference light on a hologram plane being a light receiving surface of the image sensor, or
the reference light is a spherical wave, the reference light source is positioned at a reference light condensing point being a condensing point of the reference light, and the reference light data is data of condensing point information representing a position of the reference light condensing point relative to the image sensor.

3. The imaging device according to claim 1 comprises:
a coherent light source emitting a coherent light, and
an optical system guiding a light emitted from the coherent light source to the illumination light source and the reference light source,
wherein the reference light is a spherical wave, and the reference light source is positioned at a reference light condensing point being a condensing point of the reference light.

4. The imaging device according to claim 3, wherein
the reference light data is either
data of reference light wave information representing a light wave of the reference light on a hologram plane being a light receiving surface of the image sensor, or
data of condensing point information representing a position of the reference light condensing point relative to the image sensor.

5. The imaging device according to claim 1, wherein the reference light source is an end of an optical fiber.

6. The imaging device according to claim 1, wherein the reference light source is a pinhole.

7. The imaging device according to claim 1, comprising a cube-type beam splitter, placed in front of the image sensor, for combining the reference light and the object light.

8. The imaging device according to claim 1, comprising an aperture limiting azimuthal distribution of the object light incident on the image sensor.

9. The imaging device according to claim 8, comprising a dark box that houses the reference light source and the image sensor and blocks external light coming from other than the aperture.

10. The imaging device according to claim 8, wherein the illumination light source is configured to emit the illumination light so as to have an illumination light condensing point between the object and the image sensor.

11. The imaging device according to claim 8, wherein the illumination light source is configured so that the illumination light is incident on the image sensor.

12. The imaging device according to claim 8, wherein the illumination light source is configured so that the illumination light is not incident on the image sensor.

13. The imaging device according to any one of claims 1 to 12, comprising an object light reconstruction unit for calculating an object light wave representing the object light from data of the object light hologram by using the reference light data.

14. The imaging device according to any one of claims 8 to 12, comprising an object light reconstruction unit for calculating an object light wave representing the object light from data of the object light hologram by using the reference light data, wherein
the object light reconstruction unit comprises a diffracted light component processing unit for removing diffracted light components generated by edges of the aperture from the data of the object light hologram.

15. The imaging device according to any one of claims 1 to 12, being configured to acquire data of the object light hologram so that the object light can be reconstructed by off-axis holography, phase shifting holography, or inline holography.

16. A reference light data acquisition method for acquiring, using an image sensor, reference light data containing information of a reference light used in holography, comprising the steps of:
including an auxiliary light and a mediating light that are coherent with the reference light,
making the auxiliary light incident perpendicularly on the image sensor as a parallel light, and acquiring data of interference fringes between the auxiliary light and the mediating light as a mediating light hologram by using the image sensor,
acquiring data of interference fringes between the reference light and the mediating light as a reference light hologram by using the image sensor, and
deriving the reference light data containing the information of the reference light based on the mediating light hologram and the reference light hologram.

17. A reference light data acquisition method for acquiring reference light data containing information of a reference light used in holography, comprising the steps of:
acquiring data of interference fringes between the reference light and an auxiliary light, which is coherent with the reference light and can be analytically represented using known parameters, as a reference light hologram using an image sensor,
calculating auxiliary light data obtained, as an analytical representation of the auxiliary light using the parameters, on a hologram plane set on the light receiving surface of the image sensor,
deriving reference light wave information containing light wave information of the reference light on the hologram plane, based on the auxiliary light data, and
obtaining the reference light data based on the reference light wave information.

18. The reference light data acquisition method according to claim 17, wherein the auxiliary light is a parallel light that is perpendicularly incident on the image sensor.

19. The reference light data acquisition method according to claim 17 or 18, wherein
the reference light is a spherical wave having a reference light condensing point, comprising the steps of:
acquiring data of condensing point information, representing a position of the reference light condensing point, as data of the reference light by performing a light wave propagation calculation for reversing a reference light wave acquired as the reference light wave information,
setting the condensing point information as the reference light data.

20. The reference light data acquisition method according to claim 19, wherein the acquiring of the reference light data comprises:
performing a frequency down-modulation to shift a spherical wave light component of the reference light hologram to a lower frequency range;
performing a spatial frequency filtering to extract the spherical wave light component shifted to the lower frequency range by the frequency down-modulation, thereby removing components other than the spherical wave light component contained in data of the reference light hologram;
performing a frequency up-modulation to shift the spherical wave light component extracted by the spatial frequency filtering back to its original frequency range;
setting the spherical wave light component obtained by the frequency up-modulation as the reference light data.

21. The reference light data acquisition method according to claim 20, wherein
the frequency down-modulation is performed by dividing the reference light hologram on the hologram plane by a phase component of a proximate spherical wave light emitted by a proximate point light source set at a position assumed to be a position of the reference light condensing point, and
the frequency up-modulation is performed by multiplying a complex amplitude reference light hologram obtained by the spatial frequency filtering by the phase component.

22. The reference light data acquisition method according to claim 21, wherein the proximate point light source of the proximate spherical wave light is set based on a calculation of a correlation function between the proximate spherical wave light and the reference light hologram.

23. A light wave reconstruction method for reconstructing a light wave of an object light from an object light hologram, wherein
the object light hologram is a hologram recorded using an off-axis method and acquired by an imaging device comprising data of a reference light used for recording the object light emitted from an object, as reference light data on a hologram plane being a light receiving surface of an image sensor, and
the light wave reconstruction method comprises the steps of:
deriving a complex amplitude object light hologram by Fourier transforming the object light hologram, and by performing a spatial frequency filtering and an inverse Fourier transform on data obtained;
calculating an object light wave representing the object light, by multiplying the complex amplitude object light hologram by a reference light phase component based on the reference light data on the hologram plane so as to remove a phase component of the reference light; and
reconstructing an object light wave at a position of the object, by performing a light wave propagation calculation using a plane wave expansion on the object light wave.

24. The light wave reconstruction method according to claim 23, wherein
the reference light is a spherical wave light emitted from a reference light condensing point,
the step, after deriving the complex amplitude object light hologram, calculating the object light wave is replaced with following two steps:
a pixel number increasing step generating a pixel number increased complex amplitude object light hologram by increasing a number of data points in the complex amplitude object light hologram; and
a reconstruction step obtaining an object light wave on the hologram plane from the pixel number increased complex amplitude object light hologram, wherein
the pixel number increasing step comprises the steps of:
deriving a phase component of the reference light and position coordinate data of the reference light condensing point from the reference light data;
calculating a phase component of an inline reference light having a point source formed by moving the reference light condensing point on a plane parallel to the hologram plane to an optical axis of the image sensor;
generating an inline complex amplitude object light hologram by performing removal of the phase component of the reference light from and addition of the phase component of the inline reference light to the complex amplitude object light hologram;
generating a spectrum by Fourier transforming the inline complex amplitude object light hologram;
adding a zero-value space of zero spectral-intensity to area surrounding the spectrum obtained in a two-dimensional spatial frequency space, so as to enlarge calculation space, and combining the spectrum and the zero-value space to form an enlarged spectrum;
generating the pixel number increased complex amplitude object light hologram by inverse Fourier transforming the enlarged spectrum;
the reconstruction step comprises the step of:
calculating the object light wave representing the object light, by multiplying the pixel number increased complex amplitude object light hologram by the phase component of the inline reference light to remove the phase component of the inline reference light.

25. The light wave reconstruction method according to claim 23, wherein
the reference light is a spherical wave light emitted from a reference light condensing point,
the reconstructing step reconstructing the object light wave at the position of the object from the object, light wave on the hologram plane, by performing propagation calculation comprises the steps of:
adding a zero-value space of zero light-intensity to area surrounding the object light wave, so as to enlarge calculation space, and combining the object light wave and the zero-value space to generate an enlarged object light wave;
performing a plane wave expansion on the enlarged object light wave and then a light wave propagation calculation to reconstruct the object light wave at a position of the object.

26. The light wave reconstruction method according to any one of claims 23 to 25, wherein
in removing a diffracted light component, generated by an aperture of the imaging device when the object light passing through the aperture, recorded in the object light hologram together with the object light,
the method comprises the steps of:
generating an image focused on an edge of the aperture, removing the diffracted light image component from the image, and then obtaining an object light wave representing the object light without the diffracted light component.

27. The imaging device according to claim 1, comprising:
a wavefront converting element, disposed on an optical path from the object to the image sensor, causing a predetermined deformation in a wavefront of the object light; and
wavefront aberration data containing information about the wavefront converting element used to remove effect of aberrations caused by the wavefront converting element and reconstruct a desired object light wave when reconstructing a light wave of the object light from the object light hologram.

28. The imaging device according to claim 27, wherein
the wavefront converting element is a collimating element, having a focal point, converting spherical wave light into parallel light and parallel light into spherical wave light, and the focal point is arranged between the collimating element and the image sensor,
the illumination light source is a light source emitting the illumination light as a spherical wave light and is arranged off-axis near the focal point of the collimating element or at a position of the focal point,
the imaging device is configured such that the illumination light passes through the collimating element and is converted into a parallel light, and illuminates the object to be imaged, and the object light emitted from the object propagates backward through the collimating element, enters the image sensor, and is acquired as the object light hologram,
the imaging device comprises a wavefront correction unit that uses the wavefront aberration data to remove effect of the aberration of the collimating element when reconstructing light waves of the object light from the object light hologram.

29. The imaging device according to claim 28, wherein the collimating element includes a convex lens or a parabolic concave mirror, and the parabolic concave mirror is provided with a reflecting mirror on an optical path connecting the parabolic concave mirror and the focal point.

30. A method for measuring surface shape of an object using an object light hologram recorded by the imaging device according to claim 28, wherein
the imaging device has a coordinate system having an origin and a z-axis defined on the light receiving surface of the image sensor and an optical axis thereof, respectively,
the wavefront aberration data is of information on the collimating element, and comprises information of:
a focal position being a position of the focal point;
a principal plane position defined as a boundary plane between a spherical wave and a plane wave;
a data application position being a data acquisition position of wavefront aberration data and being a post-processing position; and
a phase aberration distribution function being of measured values of the wavefront aberration rising in a phase distribution of light wave passing through the collimating element,
the wavefront correction unit performs the steps of:
calculating an object light wave, being a light wave of the object light on the hologram plane that is the light receiving surface, by removing a component of the reference light from the object light hologram using the reference light data;
propagating the object light wave to the principal plane position by performing a light wave propagation calculation as a first propagation before arriving at a position of the object;
multiplying the object light wave by a phase conversion function derived via an analytically calculated phase component of a spherical wave, so as to convert the object light wave into a parallel light by removing the spherical wave phase component;
dividing the object light wave, made to be a parallel light at the principal plane position, by the phase aberration distribution function, so as to obtain an object light wave at the data application position having passed through the collimating element;
calculating a light wave of the object light at the position of the object, by performing a light wave propagation calculation on the object light wave at the data application position;
to obtain a light wave of the illumination light at the position of the object,
generating a parallel light wave being an illumination light wave at the data application position by multiplying an ideal spherical light wave analytically set as a spherical wave light of the illumination light at the principal plane position by the phase conversion function and the wavefront aberration distribution function;
generating a parallel light wave of the illumination light at the position of the object by performing a light wave propagation calculation on the illumination light wave;
obtaining an elevation distribution, being a measurement result for a predetermined reference point set on a measurement surface of the object, from a phase difference distribution derived from the phase distribution of the light wave of the object light and the phase distribution of the parallel light wave of the illumination light.

31. A wavefront aberration data acquisition method for acquiring the wavefront aberration data according to claim 27, wherein
the wavefront converting element is a collimating element, having a focal point, converting spherical wave light into parallel light and parallel light into spherical wave light,
the wavefront aberration data is of information on the collimating element, and comprises information of:
a focal position being a position of the focal point;
a principal plane position defined as a boundary plane between a spherical wave and a plane wave;
a data application position being a data acquisition position of wavefront aberration data and being a post-processing position; and
a phase aberration distribution function being of measured values of the wavefront aberration rising in a phase distribution of light wave passing through the collimating element,
the wavefront aberration data acquisition method comprises the steps of:
generating a parallel light by making an illumination light incident on the collimating element, wherein the illumination light is emitted from the illumination light source positioned off-axis near the focal point of the collimating element or positioned at a position considered to be the focal point;
reflecting the parallel light backward by a flat mirror arranged at a data acquisition position close to the collimating element, making the parallel light incident on the image sensor as a measurement light having an outer diameter smaller than the outer diameter of the parallel light, and recording data of interference fringes between the measurement light and the reference light as a measurement light hologram;
reconstructing a measurement light wave being a light wave of the measurement light from the measurement light hologram using the reference light data;
replacing the flat mirror with an object having a planar pattern of known dimensions, and illuminating the object with a parallel light generated by making the illumination light incident on the collimating element;
making an object light, being a reflected light backward from the object, to pass through the collimating element and incident on the image sensor, and recording data of interference fringes between the object light and the reference light as an object light hologram;
reconstructing an object light wave being a light wave of the object light from the object light hologram by using the reference light data, performing multiple light propagation calculations on the object light wave, and among the multiple propagation positions determining one position, where readout values of the plane pattern's dimensions obtained are the known dimensions, as a principal plane position of the collimating element;
calculating an ideal spherical light wave at the principal plane position based on data on a known focal position of the collimating element, and multiplying the ideal spherical light wave by a phase conversion function analytically calculated phase component related to a spherical wave so as to generate an ideal parallel light wave;
multiplying the ideal parallel light wave by a phase aberration distribution function, occurring due to imperfections of the collimating element, acquired at the data acquisition position, as an unknown function to obtain a mathematical expression of a plane wave incident on and reflected by the flat mirror as a reflected light wave;
multiplying the reflected light wave by an inverse phase conversion function of the phase conversion function, and then further multiplying by the phase aberration distribution function to obtain a mathematical expression corresponding to a light wave at the principal plane position of the measurement light wave recorded as the measurement light hologram after reversely propagating the collimating element; and
equating the measurement light wave obtained by propagating the measurement light wave to the principal plane position using a light propagation calculation with the mathematical expression to obtain the phase aberration distribution function as the unknown function.

32. The imaging device according to claim 1, comprising a noise processing unit reducing image noise by statistically processing data on the object light holograms acquired using the image sensor under specified imaging conditions.

33. A noise reduction method for reducing image noise by statistically processing data of the object light hologram acquired using the image sensor in the imaging device cited in claim 1, comprising the steps of:
acquiring the object light hologram repeatedly, using the image sensor under predetermined imaging conditions for acquiring multiple object light holograms;
reconstructing light waves of the object light by removing component of the reference light from the object light holograms using the reference light data, and calculating a phase value distribution at the position of the object;
performing an unwrapping process on phase values for each of phase value distributions;
setting multiple reference points at coordinate points common to each of the phase value distributions;
performing global alignment between a reference phase value distribution selected from the phase value distributions and other phase value distributions by rotating the light wave and adjusting phase thereof in three-dimensional real space so that calculated value of cross-correlation for the phase values at the multiple reference points becomes minimum; and
obtaining a noise-reduced phase value distribution by averaging data of the aligned phase value distributions.

34. The noise reduction method according to claim 33, wherein a phase value at each of the plurality of reference points used in the calculation of the cross-correlation is an average of phase values of a plurality of points around each of the reference points, and the number of points is greater than the number of samples of the object light hologram.

35. A noise reduction method adopted in the imaging device according to claim 1, wherein, in reconstructing the light wave of the object light from the object light hologram, band-pass filtering is performed in a spatial frequency space to narrow a spatial frequency band of the light wave of the object light.

36. An imaging device using holography for imaging an object in a manner a light wave is reconstructable, comprising:
an illumination light source emitting an illumination light;
a reference light source emitting a reference light for generating interference fringes with an object light emitted from the object illuminated by the illumination light;
an image sensor acquiring data of the interference fringes as an object light hologram; and
an aperture limiting an azimuthal distribution of the object light incident on the image sensor.

37. The imaging device according to claim 36, wherein a light wave from the object is reconstructed from the object light hologram using a phase shifting method, an off-axis method, an inline method, or a combination thereof in the holography.

38. A device manufactured using at least one of the imaging device according to any one of claims 1 to 15, claims 27 to 29, and claim 32, the reference light data acquisition method according to any one of claims 16 to 22, the light wave reconstruction method according to any one of claims 23 to 26, the surface shape measurement method according to claim 30, the wavefront aberration data acquisition method according to claim 31, the noise reduction method according to claims 33 to 35, and the imaging device according to claim 36 or 37.

## Amended claims

### Amended claims under Art. 19.1 PCT

1. An imaging device using holography, comprising:
an illumination light source emitting an illumination light to illuminate an object to be imaged;
a reference light source emitting a reference light that generates interference fringes with an object light emitted from the object illuminated by the illumination light;
an image sensor acquiring data of the interference fringes between the object light and the reference light as an object light hologram; and
reference light data being data of the reference light used to reconstruct a light wave of the object light from the object light hologram, being capable of generating a light wave of the reference light including a phase distribution of the reference light, and being information specific to the imaging device.

2. The imaging device according to claim 1, wherein
the reference light data is data of reference light wave information representing a light wave of the reference light on a hologram plane being a light receiving surface of the image sensor, or
the reference light is a spherical wave, the reference light source is positioned at a reference light condensing point being a condensing point of the reference light, and the reference light data is data of condensing point information representing a position of the reference light condensing point relative to the image sensor.

3. The imaging device according to claim 1 comprises:
a coherent light source emitting a coherent light, and
an optical system guiding a light emitted from the coherent light source to the illumination light source and the reference light source,
wherein the reference light is a spherical wave, and the reference light source is positioned at a reference light condensing point being a condensing point of the reference light.

4. The imaging device according to claim 3, wherein
the reference light data is either
data of reference light wave information representing a light wave of the reference light on a hologram plane being a light receiving surface of the image sensor, or
data of condensing point information representing a position of the reference light condensing point relative to the image sensor.

5. The imaging device according to claim 1, wherein the reference light source is an end of an optical fiber.

6. The imaging device according to claim 1, wherein the reference light source is a pinhole.

7. The imaging device according to claim 1, comprising a cube-type beam splitter, placed in front of the image sensor, for combining the reference light and the object light.

8. The imaging device according to claim 1, comprising an aperture limiting azimuthal distribution of the object light incident on the image sensor.

9. The imaging device according to claim 8, comprising a dark box that houses the reference light source and the image sensor and blocks external light coming from other than the aperture.

10. The imaging device according to claim 8, wherein the illumination light source is configured to emit the illumination light so as to have an illumination light condensing point between the object and the image sensor.

11. The imaging device according to claim 8, wherein the illumination light source is configured so that the illumination light is incident on the image sensor.

12. The imaging device according to claim 8, wherein the illumination light source is configured so that the illumination light is not incident on the image sensor.

13. The imaging device according to any one of claims 1 to 12, comprising an object light reconstruction unit for calculating an object light wave representing the object light from data of the object light hologram by using the reference light data.

14. The imaging device according to any one of claims 8 to 12, comprising an object light reconstruction unit for calculating an object light wave representing the object light from data of the object light hologram by using the reference light data, wherein
the object light reconstruction unit comprises a diffracted light component processing unit for removing diffracted light components generated by edges of the aperture from the data of the object light hologram.

15. The imaging device according to any one of claims 1 to 12, being configured to acquire data of the object light hologram so that the object light can be reconstructed by off-axis holography, phase shifting holography, or inline holography.

16. A reference light data acquisition method for acquiring reference light data being data of a reference light used in an imging device based on holography, being capable of generating a light wave of the reference light including a phase distribution of the reference light, and being information specific to the imaging device, comprising the steps of:
acquiring data of interference fringes between the reference light and an auxiliary light, which is coherent with the reference light and can be analytically represented using known parameters, as a reference light hologram using an image sensor,
calculating auxiliary light data obtained, as an analytical representation of the auxiliary light using the parameters, on a hologram plane set on the light receiving surface of the image sensor,
deriving reference light wave information containing light wave information of the reference light on the hologram plane, based on the auxiliary light data, and
obtaining the reference light data based on the reference light wave information.

17. The reference light data acquisition method according to claim 16, wherein the auxiliary light is a parallel light that is perpendicularly incident on the image sensor.

18. The reference light data acquisition method according to claim 16, comprising the steps of:
including furthermore a mediating light coherent with the reference light,
acquiring data of interference fringes between the auxiliary light and the mediating light as a mediating light hologram by using the image sensor,
acquiring data of interference fringes between the reference light and the mediating light as a reference light hologram by using the image sensor, and
deriving the reference light data containing the information of the reference light based on the auxiliary light data, the mediating light hologram and the reference light hologram.

19. The reference light data acquisition method according to any one of claims 16 to 18, wherein
the reference light is a spherical wave having a reference light condensing point, comprising the steps of:
acquiring data of condensing point information, representing a position of the reference light condensing point, as data of the reference light by performing a light wave propagation calculation for reversing a reference light wave after obtaining the reference light wave by obtaing the reference light wave information,
setting the condensing point information as the reference light data.

20. The reference light data acquisition method according to claim 19, wherein the acquiring of the reference light data comprises:
performing a frequency down-modulation to shift a spherical wave light component of the reference light hologram to a lower frequency range;
performing a spatial frequency filtering to extract the spherical wave light component shifted to the lower frequency range by the frequency down-modulation, thereby removing components other than the spherical wave light component contained in data of the reference light hologram;
performing a frequency up-modulation to shift the spherical wave light component extracted by the spatial frequency filtering back to its original frequency range;
setting the spherical wave light component obtained by the frequency up-modulation as the reference light data.

21. The reference light data acquisition method according to claim 20, wherein
the frequency down-modulation is performed by dividing the reference light hologram on the hologram plane by a phase component of a proximate spherical wave light emitted by a proximate point light source set at a position assumed to be a position of the reference light condensing point, and
the frequency up-modulation is performed by multiplying a complex amplitude reference light hologram obtained by the spatial frequency filtering by the phase component.

22. The reference light data acquisition method according to claim 21, wherein the proximate point light source of the proximate spherical wave light is set based on a calculation of a correlation function between the proximate spherical wave light and the reference light hologram.

23. A light wave reconstruction method for reconstructing a light wave of an object light from an object light hologram, wherein
the object light hologram is a hologram recorded using an off-axis method and an image sensor, and acquired by an imaging device comprising data of a reference light used for recording the object light emitted from an object, as reference light data,
the reference light data is capable of generating a light wave of the reference light including a phase distribution of the reference light, and is information specific to the imaging device, and
the light wave reconstruction method comprises the steps of:
deriving a complex amplitude object light hologram by Fourier transforming the object light hologram, and by performing a spatial frequency filtering and an inverse Fourier transform on data obtained;
calculating an object light wave representing the object light, by multiplying the complex amplitude object light hologram by a reference light phase component based on the reference light data on the hologram plane being a light receiving surface of an image sensor so as to remove a phase component of the reference light; and
reconstructing an object light wave at a position of the object, by performing a light wave propagation calculation using a plane wave expansion on the object light wave.

24. The light wave reconstruction method according to claim 23, wherein
the reference light is a spherical wave light emitted from a reference light condensing point,
the step, after deriving the complex amplitude object light hologram, calculating the object light wave is replaced with following two steps:
a pixel number increasing step generating a pixel number increased complex amplitude object light hologram by increasing a number of data points in the complex amplitude object light hologram; and
a reconstruction step obtaining an object light wave on the hologram plane from the pixel number increased complex amplitude object light hologram, wherein
the pixel number increasing step comprises the steps of:
deriving a phase component of the reference light and position coordinate data of the reference light condensing point from the reference light data;
calculating a phase component of an inline reference light having a point source formed by moving the reference light condensing point on a plane parallel to the hologram plane to an optical axis of the image sensor;
generating an inline complex amplitude object light hologram by performing removal of the phase component of the reference light from and addition of the phase component of the inline reference light to the complex amplitude object light hologram;
generating a spectrum by Fourier transforming the inline complex amplitude object light hologram;
adding a zero-value space of zero spectral-intensity to area surrounding the spectrum obtained in a two-dimensional spatial frequency space, so as to enlarge calculation space, and combining the spectrum and the zero-value space to form an enlarged spectrum;
generating the pixel number increased complex amplitude object light hologram by inverse Fourier transforming the enlarged spectrum;
the reconstruction step comprises the step of:
calculating the object light wave representing the object light, by multiplying the pixel number increased complex amplitude object light hologram by the phase component of the inline reference light to remove the phase component of the inline reference light.

25. The light wave reconstruction method according to claim 23, wherein
the reference light is a spherical wave light emitted from a reference light condensing point,
the reconstructing step reconstructing the object light wave at the position of the object from the object, light wave on the hologram plane, by performing propagation calculation comprises the steps of:
adding a zero-value space of zero light-intensity to area surrounding the object light wave, so as to enlarge calculation space, and combining the object light wave and the zero-value space to generate an enlarged object light wave;
performing a plane wave expansion on the enlarged object light wave and then a light wave propagation calculation to reconstruct the object light wave at a position of the object.

26. The light wave reconstruction method according to any one of claims 23 to 25, wherein
in removing a diffracted light component, generated by an aperture of the imaging device when the object light passing through the aperture, recorded in the object light hologram together with the object light,
the method comprises the steps of:
generating an image focused on an edge of the aperture, removing the diffracted light image component from the image, and then obtaining an object light wave representing the object light without the diffracted light component.

27. The imaging device according to claim 1, comprising:
a wavefront converting element, disposed on an optical path from the object to the image sensor, causing a predetermined deformation in a wavefront of the object light; and
wavefront aberration data containing information about the wavefront converting element used to remove effect of aberrations caused by the wavefront converting element and reconstruct a desired object light wave when reconstructing a light wave of the object light from the object light hologram.

28. The imaging device according to claim 27, wherein
the wavefront converting element is a collimating element, having a focal point, converting spherical wave light into parallel light and parallel light into spherical wave light, and the focal point is arranged between the collimating element and the image sensor,
the illumination light source is a light source emitting the illumination light as a spherical wave light and is arranged off-axis near the focal point of the collimating element or at a position of the focal point,
the imaging device is configured such that the illumination light passes through the collimating element and is converted into a parallel light, and illuminates the object to be imaged, and the object light emitted from the object propagates backward through the collimating element, enters the image sensor, and is acquired as the object light hologram,
the imaging device comprises a wavefront correction unit that uses the wavefront aberration data to remove effect of the aberration of the collimating element when reconstructing light waves of the object light from the object light hologram.

29. The imaging device according to claim 28, wherein the collimating element includes a convex lens or a parabolic concave mirror, and the parabolic concave mirror is provided with a reflecting mirror on an optical path connecting the parabolic concave mirror and the focal point.

30. A method for measuring surface shape of an object using an object light hologram recorded by the imaging device according to claim 28, wherein
the imaging device has a coordinate system having an origin and a z-axis defined on the light receiving surface of the image sensor and an optical axis thereof, respectively,
the wavefront aberration data is of information on the collimating element, and comprises information of:
a focal position being a position of the focal point;
a principal plane position defined as a boundary plane between a spherical wave and a plane wave;
a data application position being a data acquisition position of wavefront aberration data and being a post-processing position; and
a phase aberration distribution function being of measured values of the wavefront aberration rising in a phase distribution of light wave passing through the collimating element,
the wavefront correction unit performs the steps of:
calculating an object light wave, being a light wave of the object light on the hologram plane that is the light receiving surface, by removing a component of the reference light from the object light hologram using the reference light data;
propagating the object light wave to the principal plane position by performing a light wave propagation calculation as a first propagation before arriving at a position of the object;
multiplying the object light wave by a phase conversion function derived via an analytically calculated phase component of a spherical wave, so as to convert the object light wave into a parallel light by removing the spherical wave phase component;
dividing the object light wave, made to be a parallel light at the principal plane position, by the phase aberration distribution function, so as to obtain an object light wave at the data application position having passed through the collimating element;
calculating a light wave of the object light at the position of the object, by performing a light wave propagation calculation on the object light wave at the data application position;
to obtain a light wave of the illumination light at the position of the object,
generating a parallel light wave being an illumination light wave at the data application position by multiplying an ideal spherical light wave analytically set as a spherical wave light of the illumination light at the principal plane position by the phase conversion function and the wavefront aberration distribution function;
generating a parallel light wave of the illumination light at the position of the object by performing a light wave propagation calculation on the illumination light wave;
obtaining an elevation distribution, being a measurement result for a predetermined reference point set on a measurement surface of the object, from a phase difference distribution derived from the phase distribution of the light wave of the object light and the phase distribution of the parallel light wave of the illumination light.

31. A wavefront aberration data acquisition method for acquiring the wavefront aberration data according to claim 27, wherein
the wavefront converting element is a collimating element, having a focal point, converting spherical wave light into parallel light and parallel light into spherical wave light,
the wavefront aberration data is of information on the collimating element, and comprises information of:
a focal position being a position of the focal point;
a principal plane position defined as a boundary plane between a spherical wave and a plane wave;
a data application position being a data acquisition position of wavefront aberration data and being a post-processing position; and
a phase aberration distribution function being of measured values of the wavefront aberration rising in a phase distribution of light wave passing through the collimating element,
the wavefront aberration data acquisition method comprises the steps of:
generating a parallel light by making an illumination light incident on the collimating element, wherein the illumination light is emitted from the illumination light source positioned off-axis near the focal point of the collimating element or positioned at a position considered to be the focal point;
reflecting the parallel light backward by a flat mirror arranged at a data acquisition position close to the collimating element, making the parallel light incident on the image sensor as a measurement light having an outer diameter smaller than the outer diameter of the parallel light, and recording data of interference fringes between the measurement light and the reference light as a measurement light hologram;
reconstructing a measurement light wave being a light wave of the measurement light from the measurement light hologram using the reference light data;
replacing the flat mirror with an object having a planar pattern of known dimensions, and illuminating the object with a parallel light generated by making the illumination light incident on the collimating element;
making an object light, being a reflected light backward from the object, to pass through the collimating element and incident on the image sensor, and recording data of interference fringes between the object light and the reference light as an object light hologram;
reconstructing an object light wave being a light wave of the object light from the object light hologram by using the reference light data, performing multiple light propagation calculations on the object light wave, and among the multiple propagation positions determining one position, where readout values of the plane pattern's dimensions obtained are the known dimensions, as a principal plane position of the collimating element;
calculating an ideal spherical light wave at the principal plane position based on data on a known focal position of the collimating element, and multiplying the ideal spherical light wave by a phase conversion function analytically calculated phase component related to a spherical wave so as to generate an ideal parallel light wave;
multiplying the ideal parallel light wave by a phase aberration distribution function, occurring due to imperfections of the collimating element, acquired at the data acquisition position, as an unknown function to obtain a mathematical expression of a plane wave incident on and reflected by the flat mirror as a reflected light wave;
multiplying the reflected light wave by an inverse phase conversion function of the phase conversion function, and then further multiplying by the phase aberration distribution function to obtain a mathematical expression corresponding to a light wave at the principal plane position of the measurement light wave recorded as the measurement light hologram after reversely propagating the collimating element; and
equating the measurement light wave obtained by propagating the measurement light wave to the principal plane position using a light propagation calculation with the mathematical expression to obtain the phase aberration distribution function as the unknown function.

32. The imaging device according to claim 1, comprising a noise processing unit reducing image noise by statistically processing data on the object light holograms acquired using the image sensor under specified imaging conditions.

33. A noise reduction method for reducing image noise by statistically processing data of the object light hologram acquired using the image sensor in the imaging device cited in claim 1, comprising the steps of:
acquiring the object light hologram repeatedly, using the image sensor under predetermined imaging conditions for acquiring multiple object light holograms;
reconstructing light waves of the object light by removing component of the reference light from the object light holograms using the reference light data, and calculating a phase value distribution at the position of the object;
performing an unwrapping process on phase values for each of phase value distributions;
setting multiple reference points at coordinate points common to each of the phase value distributions;
performing global alignment between a reference phase value distribution selected from the phase value distributions and other phase value distributions by rotating the light wave and adjusting phase thereof in three-dimensional real space so that calculated value of cross-correlation for the phase values at the multiple reference points becomes minimum; and
obtaining a noise-reduced phase value distribution by averaging data of the aligned phase value distributions.

34. The noise reduction method according to claim 33, wherein a phase value at each of the plurality of reference points used in the calculation of the cross-correlation is an average of phase values of a plurality of points around each of the reference points, and the number of points is greater than the number of samples of the object light hologram.

35. A noise reduction method adopted in the imaging device according to claim 1, wherein, in reconstructing the light wave of the object light from the object light hologram, band-pass filtering is performed in a spatial frequency space to narrow a spatial frequency band of the light wave of the object light.

36. An imaging device using holography for imaging an object in a manner a light wave is reconstructable, comprising:
an illumination light source emitting an illumination light;
a reference light source emitting a reference light for generating interference fringes with an object light emitted from the object illuminated by the illumination light;
an image sensor acquiring data of the interference fringes as an object light hologram; and
an aperture limiting an azimuthal distribution of the object light incident on the image sensor,
the reference light source being a light source emitting the reference light as a spherical wave-like light, and being located on the same plane as the plane formed by the aperture, or on a plane close to the front or rear of the aperture.

37. The imaging device according to claim 36, wherein a light wave from the object is reconstructed from the object light hologram using a phase shifting method, an off-axis method, an inline method, or a combination thereof in the holography.

38. A device manufactured using at least one of the imaging device according to any one of claims 1 to 15, claims 27 to 29, and claim 32, the reference light data acquisition method according to any one of claims 16 to 22, the light wave reconstruction method according to any one of claims 23 to 26, the surface shape measurement method according to claim 30, the wavefront aberration data acquisition method according to claim 31, the noise reduction method according to claims 33 to 35, and the imaging device according to claim 36 or 37.

Statement under Art. 19.1 PCT
Claim 1 is amended based on the descriptions in paragraphs [0059][0057][0176] of the specification as filed to clarify that the reference light data is of "being capable of generating a light wave of the reference light including a phase distribution of the reference light, and being information specific to the imaging device".

Claim 16 is an amendment of claim 17 as filed, and an amendment similar to the amendment to claim 1 above is included.

Claim 17 is a formal amendment of claim 18 as filed.

Claim 18 is an amendment of claim 16 as filed, being made dependent on claim 17 based on the descriptions in paragraphs [0164] [0173][0174] and Figure 11, etc. of the specification as filed.

Claim 19 is amended based on the description in paragraph [0029] of the specification as filed.

Claim 23 is amended in the same manner as claim 1 above.

Claim 36 is amended based on the descriptions in paragraphs [0063] and [0064] of the specification as filed.

The digital holography device of the invention described in Document 1 (JP2011-099781A; Kyoto Institute of Technology) in the International Search Report and the Written Opinion of the International Searching Authority comprises "an intensity distribution of the reference light obtained by imaging only the reference light", which differs from the "reference light data capable of generating a light wave of the reference light including a phase distribution of the reference light" of the present invention.

As described above, the inventions of claims 1, 16, and 23 of the present application comprise "reference light data capable of generating a light wave of the reference light including the phase distribution of the reference light".

On the other hand, the digital holography device of the invention described in Document 1 (JP2011-099781A; Kyoto Institute of Technology) in the International Search Report and the Written Opinion of the International Searching Authority comprises "an intensity distribution of the reference light obtained by imaging only the reference light".

In principle, it is impossible to generate the "phase distribution of the reference light" from data only of the "intensity distribution of the reference light"; therefore, the inventions of the present application differ from the invention of Document 1, and it is not possible to arrive at the present inventions based on the disclosure of Document 1.

Furthermore, the inventions of claims 1, 16, and 23 of the present application and the inventions of claims dependent thereon comprise "reference light data capable of generating a light wave of the reference light including a phase distribution of the reference light", which constitutes "the same or corresponding special technical feature", and thus, the inventions of claims 1, 16, and 23 and the respective dependent claims thereof constitute a single invention.
